Europäisches Patentamt

European Patent Office

Office européen des brevets

(19)

(11) **EP 1 008 629 A1**

(12) **EUROPEAN PATENT APPLICATION**
published in accordance with Art. 158(3) EPC

(43) Date of publication:
**14.06.2000 Bulletin 2000/24**

(51) Int. Cl.⁷: **C08L 67/00**, C08K 3/34, C08J 5/18, A41D 19/00, C05G 3/00, A01G 13/00, G11B 5/80, B32B 27/36, B32B 3/12

(21) Application number: **99922562.6**

(22) Date of filing: **28.05.1999**

(86) International application number:
**PCT/JP99/02847**

(87) International publication number:
**WO 99/63001 (09.12.1999 Gazette 1999/49)**

(84) Designated Contracting States:
**BE DE IT**

(30) Priority: **30.05.1998 JP 16593298**
**09.06.1998 JP 17664698**
**09.06.1998 JP 17664798**
**09.06.1998 JP 17664898**
**30.06.1998 JP 19971898**
**04.09.1998 JP 25167698**
**30.09.1998 JP 27890998**
**05.11.1998 JP 31449098**
**07.01.1999 JP 184599**
**03.02.1999 JP 2677999**
**22.02.1999 JP 4273999**
**05.03.1999 JP 5950799**

(71) Applicant:
**DAICEL CHEMICAL INDUSTRIES, Ltd.**
**Sakai-shi, Osaka 590-0905 (JP)**

(72) Inventors:
• **NAKATA, Koji**
**Hyogo 671-1234 (JP)**
• **ISHIKAWA, Masahiro**
**Chiba 270-0035 (JP)**
• **SHIMIZU, Kunio**
**Hyogo 671-1262 (JP)**
• **DAITO, Terumasa**
**Osaka 592-8344 (JP)**
• **NISHIMURA, Kenji**
**Hyogo 671-1211 (JP)**
• **MURAKAMI, Tadashi**
**Chiba 270-0035 (JP)**

(74) Representative: **Portal, Gérard**
**Cabinet Beau de Loménie**
**158, rue de l'Université**
**75340 Paris Cédex 07 (FR)**

(54) **BIODEGRADABLE POLYESTER RESIN COMPOSITION, BIODISINTEGRABLE RESIN COMPOSITION, AND MOLDED OBJECTS OF THESE**

(57)     The present invention [I] relates to a biodegradable polyester resin composition comprising an aliphatic polyester resin, a polycaprolactone, and inorganic additives, in which the ratio of the aliphatic polyester resin with respect to the polycaprolactone is 100 parts by weight/1-200 parts by weight and, the ratio of total amount of the aliphatic polyester resin and the polyaprolactone with respect to the inorganic additives is 95-50% by weight/5-50% by weight.

The present invention [II] relates to a biodegradable throw-away glove obtained by T-die molding a polyester resin composition in which 1-200 parts by weight of a polycaprolactone is mixed with 100 parts by weight of an aliphatic polyester resin to obtain a film having thickness of 40 μm, and two layers of the film are doubled up to heat-seal into a glove-shape, and circumferential portions are cut off.

The present invention [III] relates to a biodegradable stake molded from a polyester resin composition in which 1-200 parts by weight of a polycaprolactone is mixed with 100 parts by weight of an aliphatic polyester resin, and which may contain fertilizers and/or chemicals at an inside portion thereof.

The present invention [IV] relates to a protecting material for plants in which there is molded into a net-like shape a polyester resin composition obtained by formulating 1-200 parts by weight of a polycaprolactone and 5-100 parts by weight of talc with 100 parts by weight of an aliphatic polyester resin, and which is wound around a trunk of trees, and prevents an injury eaten by animals.

The present invention [V] relates to a biodegradable tape which comprises molding a lactone resin alone or a lactone-contained resin composition in which the lac-

**(Cont. next page)**

tone resin is formulated with other biodegradable resins and/or additives for resins, which is excellent in degradability, moldability, and mechanical properties, and which is employed as a tape for wrapping-packing and a pressure sensitive adhesive tape, etc.

The present invention [VI] relates to a biodegradable card characterized by employing as a base material a biodegradable resin composition layer comprising 85-5% by weight of a polylactic acid-based resin (A), 5-50% by weight of an aliphatic polyester resin (B), and 10-45% by weight of a polycaprolactone-based resin (C) (total of the (A)+(B)+(C) is 100% by weight) and, further 5-300 parts by weight of fillers (D) based on 100 parts by weight of the total of the (A)+(B)+(C).

The present invention [VII] relates to a biodegradable laminated film obtained by laminating a biodegradable resin layer with papers, etc., and the biodegradable resin layer is composed of an aliphatic polyester resin alone which is a succinic acid-1,4-butanediol polyester, a succinic acid-ethyleneglycol polyester, or a succinic acid/adipic acid-1,4-butanediol copolyester, or composed of the aliphatic polyester resin and the polycaprolactone.

The present invention [VIII] relates to a biodegradable laminated film in which there are laminated at least two different kinds of biodegradable resin layers, and relates to a biodegradable film for agriculture.

The present invention [IX] relates to a biodegradable multi-layers film or sheet comprising a layer (A) composed of a biodegradable aliphatic polyester resin composition which contains an aliphatic polyester having not relatively high biodegradability and an aliphatic polyester resin containing a urethane bond, however, which is more excellent in biodegradability than themselves, and a layer (B) composed of a lactone resin alone or a composition of the lactone resin with a biodegradable resin other than the lactone resin, in which the lactone resin is irradiated solely or together with at least one of other constructing components by ionizing radiation.

The present invention [X] is to a biodegradable thin film having a film thickness of 5-25 $\mu$m, and which comprises a composition of an aliphatic polyester resin having a specified melt flow rate and melt tension with a polycaprolactone.

The present invention [XI] relates a cushion sheet having great many of discontinuous cells, in which there is employed a biodegradable shrink film including a polycaprolactone irradiated by an ionizing radiation.

The present invention [XII] relates to particle-state products on which there is coated a polycaprolactone irradiated by an ionizing radiation and, particularly, it relates to a coated fertilizer, coated agricultural chemicals, or microcapsule for carbonless copy paper which have a biodegradable thin layer and an excellent storage stability.

The present invention [XIII] relates to particle-state fertilizers on which there is coated a biodegradable coating layer including a biodegradable polylactone.

The present invention [XIV] relates to a biodisintegrable resin composition which comprises a lactone resin having a specified composition, an aliphatic polyester resin, a fatty acid amide, and a thermoplastic resin having a high impact strength and, further, optionally, in which there are added a liquid lubricant, finely-powdered silica, and talc.

Figure I-1

Time lapse (day)
Evaluation of biodegradability by active sludge

**Description**

TECHNICAL FIELD

The present invention [I] relates to a biodegradable polyester resin composition which contains an aliphatic polyester having not relatively high biodegradability and an aliphatic polyester resin containing a urethane bond, and inorganic additives, however, which is more excellent in biodegradability than themselves, and which is not apt to cause a draw-down phenomenon during vacuum molding, blow molding, and inflation molding.

The present invention [II] relates to a film from a polyester resin composition which contains an aliphatic polyester having not relatively high biodegradability and an aliphatic polyester resin containing a urethane band, however, which is more excellent in biodegradability than themselves, and relates to a biodegradable and throw-away glove obtained from the film.

The present invention [III] relates to a biodegradable stake, and a biodegradable stake in which fertilizers and/or chemicals are contained, and which contain an aliphatic polyester having not relatively high biodegradability and an aliphatic polyester resin containing a urethane bond, however, which is more excellent in biodegradability than themselves.

The present invention [IV] relates to a protecting material for plants composed of net or a sheet which is molded from an aliphatic polyester having not relatively high biodegradability and an aliphatic polyester resin containing a urethane bond, however, which is more excellent in biodegradability than themselves.

The present invention [V] relates to a biodegradable tape which is employed as a wrapping-packing tape and an adhesive tape, and which comprises molding of a lactone resin alone or a lactone-contained resin composition composed of the lactone resin, other biodegradable resins, and/or an additive for resins, and which is excellent in degradability, moldability, and mechanical properties.

The present invention [VI] relates to a card which is employed as a nonreturnable card such as a prepaid card or an entrance ticket. In more detail, it relates to a card in which there are employed a polylactic acid-based resin, an aliphatic polyester resin and a polycaprolactone-based resin, and further, additives are added as a base material for the card, and which is excellent in biodegradability, and gate properties such as flexural resistance and stiffness during reading by a machine.

The present invention [VII] relates to a biodegradable laminate which comprises a sheet-like material such as paper and a biodegradable resin layer composed of an aliphatic polyester resin alone or a lactone resin and the aliphatic polyester resin.

The present invention [VIII] relates to a biodegradable lamination film in which two different kinds of biodegradable resin layers are laminated, and a biodegradable film far agriculture using thereof.

The present invention [IX] relates to a biodegradable multi-layers film or sheet comprising a layer (A) composed of a biodegradable aliphatic polyester resin composition which contains an aliphatic polyester having not relatively high biodegradability and an aliphatic polyester resin containing a urethane bond, however, which is more excellent in biodegradability than themselves, and a layer (B) composed of a lactone resin alone or a composition of the lactone resin with a biodegradable resin other than the lactone resin, in which the lactone resin is irradiated solely or together with at least one of other constructing components by ionizing radiation.

The present invention [X] is to a biodegradable film having a film thickness of 5-25 $\mu$m, and which comprises a composition of an aliphatic polyester resin having a specified melt flow rate and melt tension with a polycaprolactone.

The present invention [XI] relates a shock absorbing sheet having discontinuous cells and, in more detail, it relates to a shock absorbing sheet in which there is employed a biodegradable shrink film including a polycaprolactone irradiated by an ionizing radiation, and which has a great many of discontinuous cells.

The present invention [XII] relates to particle-state products on which there is coated a polycaprolactone irradiated by an ionizing radiation, and it relates to a coated fertilizer, coated agricultural chemicals, or microcapsules for carbonless paper which have a biodegradable thin layer and an excellent storage stability.

The present invention [XIII] relates to particle-state fertilizers on which there is coated a biodegradable coating layer including a biodegradable polylactone.

The present invention [XIV] relates to a biodisintegrable resin composition which comprises a lactone resin having a specified composition, an aliphatic polyester resin, a fatty acid amide, and a thermoplastic resin having a high impact strength and, further, optionally, in which there are added a liquid lubricant, finely-powdered silica, and talc.

BACKGROUND ART

Hitherto, plastics such as a polyolefin have been characterized by stability and durability, and employed in fields such as throw-away gloves, stakes, protecting materials for plants, wrapping materials, wrapping-packing tapes, bands (in the present invention, band is also named as a tape), base materials for a sticking tape, labels, a variety of other industrial tapes, materials for construction, cars, and a variety of fields, and consumed in a large volume. As a method for treating as wastes thereof after uses, although burning and burying are enumerated, an incinerator is often damaged by high calories in burning of resins such as polyolefins and polyvinyl chlorides in which it is difficult to be decomposed, and further, production of harmful waste gases becomes problematic and, on the other hand, in the case of disposal by burying, those are remained as long as their likes in circumstances, resulting in a problem of environmental pollution.

For that reason, there have been recently investigated plastics composed of natural-based biocelluloses and starch-based plastics, cellulose-based esters having a low substitution degree, natural aliphatic polyester resins produced by microorganisms, aliphatic polyester resins produced by chemical synthesis, etc., as a biodegradable resin together with preparation methods and uses thereof. Of those, as resins which are readily employed in a variety of uses, there are looked upon aliphatic polyesters which are produced by chemical synthesis or microorganisms, and which are relatively well-balanced in moldability, costs, mechanical properties, and water resistance, etc.

Herein, the biodegradable resins mean a polymer which has nearly the same physical properties as general-purpose plastics in uses as a material, however, after wasted, those are fast decomposed and changed to valuable products by natural conditions such as microorganisms which are bacteria and mildew, temperature, moisture, and light under natural circumstances such as active sludge, soils, composts, and water, and occasionally, which is finally decomposed until carbon dioxide and water.

Although already commercially-supplied biodegradable polyester resins are described in JP-A-08029989 and JP-A-09194700 Official Gazettes, etc., those are insufficient in mechanical properties compared to general-purpose resins now in use.

Although the aliphatic polyester resins are typified by a polyester resin which is obtained by a polycondensation reaction of $\alpha,\omega$-bifunctional aliphatic alcohol with $\alpha,\omega$-bifunctional aliphatic dicarboxylic acid, or an esterification reaction thereof with a diester of a dicarboxylic acid, since those usually have a low melting point, those cannot be employed as a substitute of conventional polyolefins. However, it has been known that a certain kind of aliphatic polyester resin has a melting point of not less than 100°C and thermoplasticity, and there has been carried out an investigation for synthesis. That is, it corresponds to a polyester resin obtained from succinic acid and 1,4-butanediol, a polyester resin obtained from succinic acid and ethyleneglycol, a polyester resin obtained from oxalic acid and neopentylglycol, a polyester resin obtained from oxalic acid and 1,4-butanediol, and a polyester resin obtained from oxalic acid and ethyleneglycol, etc. Of those, although the polyester resin obtained from oxalic acid is particularly poor in thermal stability, and it cannot be highly-polymerized, the polyester resin obtained from succinic acid is relatively good in thermal stability, contrivance has been carried out for synthesis. However, even in the aliphatic polyester resin obtained from succinic acid, in the case that it is polymerized using general apparatuses and it is not highly-polymerized, it is not apt to be obtained a resin having practical mechanical strength.

Further, it is not economical to highly-polymerize the aliphatic polyester resin obtained from succinic acid, and even highly-polymerized resin is not sufficient in biodegradability.

Therefore, it is highly-polymerized by changing terminal hydroxyl groups in a molecule of the polyester resin to urethane bonds using a polyisocyanate. As the polyisocyanate to be employed herein, an aliphatic polyisocyanate is more excellent in biodegradability than an aromatic polyisocyanate, and hexamethylene diisocyanate. etc. are often employed.

As described hereinabove, in the existing circumstances, the aliphatic polyester resin having a low molecular weight is highly-polymerized, whereby, mechanical properties are given in order to apply to a processing such as injection molding, blow molding, preparation of fibers, and preparation of films.

However, in the case that even the aliphatic polyester resin has high crystallizablity, or urethane bonds are introduced into molecules of the resin as described hereinabove, biodegradability by microorganisms usually lower. It is distinct from a result, as known, that biodegradation initiates at a noncrystalline portion of the resin and a crystalline portion is not apt to be decomposed, resulting in that it is apt to be remained, and a result that even though there is employed a polycaprolactone polyol which is excellent in biodegradability as a polyol, if hexamethylene diisocyanate is employed as the polyisocyanate, biodegradability of a caprolactone-based polyurethane is almost not observed in an evaluation of a degradation test using an active sludge regulated according to JIS K6950. Since such a tendency is observed even in a resin containing urethane bonds of a relatively low-density, also in a polyester resin having an inherent biodegradability, a decline of the biodegradability is often caused by the presence of a small amount of urethane bonds such as several % by weight or so which become contained in modification for a high molecular weight. In fact, it shows a result of difficult degradation in an evaluation by the degradation test using an active sludge regulated according to JIS K6950 of a polyester resin having a number-average molecular weight of 40,000-50,000 highly-polymerized by combining 4-5 pieces of terminal hydroxyl groups in a succinic acid-based polyester resin having a number-average molecular weight of 10,000 or so using a polyisocyanate.

On the other hand, although lactone resins such as a polycaprolactone are a biodegradable resin and an environmentally-friendly resin, since a melting point is relatively low, for example, it is approximately 60°C in the polycaprolactone, and since it is problematic in moldability of film or sheet and, it is limited in view of practicability at a high temperature, and it was not able to be employed as the film or sheet.

The aliphatic polyester resin alone shows biodegradability in a circumstance at which there exists a microorganism by which it is effectively decomposed. However, by mixing and kneading the polycaprolactone having a more excellent degradability than in the case of the resin alone, a degradability of the resin is improved because of a probability increase of the presence of a microorganism by which the resin kneaded is decomposed in a circumstance, or because of formation of a circumstance at which the microorganism becomes readily grown up by a spread of surface area and a change to hydrophilicity in the surface through initiation of decomposition.

For that reason, JP-A-09067513 Official Gazette discloses a biodegradable polyester resin composition in which 1-200 parts by weight of a polycaprolactone is formulated with 100 parts by weight of an aliphatic polyester resin in order to improve the biodegradability of an aliphatic polyester resin having a relatively not high biodegradability in itself or an aliphatic polyester resin which contains a small amount of urethane bonds.

In the case that a multi-layers film or sheet is molded using the biodegradable materials, there is a problem that although strength in MD direction (a machine direction or winding direction) is sufficient, strength in TD direction (a right angle to MD) is not sufficient in a layer of the biodegradable polyester resin composition in which 1-200 parts by weight of a polycaprolactone is formulated with 100 parts by weight of an aliphatic polyester resin. Further, in the case that the resin is molded by vacuum molding, blow molding, and inflation molding, etc., there was a problem that a resin melted causes a draw-down during molding.

Heretofore, there has been employed a throw-away glove made from plastics such as a polyolefin and, even though the above-described biodegradable resins are employed in place of the conventional resins, there cannot be obtained a throw-away glove which is excellent in biodegradability because of the above-described problems during molding.

Further, a hygroscopic property is required for the throw-away glove in addition to biodegradability, and there is desired a glove which does not cause dusting by static electricity.

Heretofore, there has been employed a stake made from plastics such as a polyolefin and a polyvinyl chloride and, even though the above-described biodegradable resins are employed in place of the conventional resins, there cannot be obtained a stake which is excellent in biodegradability because of the above-described problems during molding.

Heretofore, there has been employed a protecting material for plants such as a tin-plated sheer, a metallic net, and a plastics-made sheet or net in order to keep away for a bark, twigs, and leaves, etc. of plants to be bitten by herbivorous animals such as hares, deer, cattle, and giraffes, etc. There is a problem that the metallic sheer or net is heavy, rusted, and expensive. etc.

Plastics-made ones have merits of the light weight, rustlessness, and a low cost, etc., and there have been conventionally employed ones made from materials such as a polyolefin or a polyvinyl chloride, etc. However, even though the above-described biodegradable resins are employed in place of the conventional resins, there cannot be obtained a protecting material for plants which is excellent in biodegradability because of the above-described problems during molding.

Heretofore, paper itself alone or a laminate in which paper is laminated with a synthetic resin film such as a polyolefin resin, etc. has been employed as materials for wrapping and tapes made from papers. However, since the paper itself is weak in moisture, it is limited in a range to be used. Film manufactured from a synthetic resin such as a polyethylene causes the above-described problems in the case of scrapping.

As the biodegradable resins for satisfying the above-described requests, there has been known, in addition to a specified aliphatic polyester-based biodegradable resins, a blend-based resin composition such as a starch-EVOH-based resin (an ethylene-vinyl alcohol-based copolymer), an EVOH-based resin-aliphatic polyester-based resin, and an aliphatic polyester-based resin-polyolefin-based resin. Although the resins or resin compositions are put to practical use by molding into a variety of shapes such as films, there has not been still proposed an excellent laminate which is well-balanced in a variety of properties such as physical properties to be required for a biodegradable laminate, biochemical degradability to be required after disposal and, moldability to be required in preparation of a film, etc., a laminability with paper, and performance in laminated paper.

JP-A-08188706 Official Gazette proposes a biodegradable plastic film obtained by molding 100 parts by weight of a mixture composed of 80-100% by weight of a polycaprolactone (hereinafter, occasionally shortened into PCL) which is a biodegradable resin and 20-0% by weight of a biodegradable linear chain polyester-based resin produced by microorganisms and 0.3-0.8 part by weight of a lubricant. However, it includes a problem in a mechanical strength during molding films. Accordingly, it is difficult to mass-produce films, and even though a bag for garbages prepared from the films is thrown into a compost apparatus together with foods wastes, it takes enough 100 days for biochemical degradation, accordingly, decomposition rate is not always quick.

Heretofore, there has been employed a multi-layers film made from a general-purpose resin in a variety of fields and, further, recently, there has been commercially-supplied a film made from a biodegradable resin such as a polylactic acid-made film, a polyester film made from a poly-succinic acid-ethyleneglycol, and a polycaprolactone-made film. However, the films are not sufficient in tear strength.

Heretofore, there have been known particle-state products covered by a thin layer such as fertilizers which are gradually-dischargeable, slowly-effective, and delayed-effective, agricultural chemicals, medicines, perfumes, and microcapsules for carbonless paper. As the slowly-effective fertilizers, a variety of effect-controllable type fertilizers have been developed for the purpose of manifestation of an fertilizing effect depending upon growth of farm products. Particularly, there are disclosed and commercially supplied many slowly-effective fertilizers in which surface of particle-state products is covered by a coating material. A variety of effect-controllable type fertilizers are proposed in JP-B-95000505 Official Gazette, US Patent No. 3295950, JP-B-65028927 Official Gazette, JP-B-69028457 Official Gazette, British Patent No. 815829, JP-B-62015832 Official Gazette, and JP-B-67013681 Official Gazette, etc. However, it is taught that it is difficult to control an elution rate of fertilizing components in the effect-controllable type fertilizers.

For that reason, there is a problem that those become supplied at many times in paddy or field, etc.

In order to solve the problems, JP-B-85021952 and JP-B-85003040 Official Gazettes disclose a method for forming a coating in which a coating material comprising a polyolefin is employed and, in the case of coating the surface of particle-state products, it is dried by a heated air stream, and a solution of the coating material is sprayed over the particle-state products at the same time. As a characteristic in the method, it is taught that an elution rate of the particle-state products can be controlled and, moreover, the method for forming a coating layer over the surface of the particle-state products has been widely put to practical uses.

Further, JP-B-85003040 and JP-B-70001672 Official Gazettes, etc. show that a function for controlling elution is maintained by dispersing inorganic powder such as talc and sulphur into a coating layer of polyolefin-based resins, etc., and degradation or decomposition of a residual coating layer is accelerated after elution.

However, in the case that the polyolefin-based resins, etc. are employed, there is a problem that the coating layer is remained for a certain long time of period, and it is floated in paddy.

In the particle-state products conventionally proposed, the coating layer is remained in soil without falling to pieces or degradation, or even though it is fallen to pieces, it is not decomposed, resulting in that it causes a risk such as retardancy of growth of farm products and environmental pollution in soil and water for irrigation or rivers surrounded by fields. For that reason, it has been intensively desired that the coating layer has biodegradability, and duration of a fertilizing effect can be controlled in the particle-state products.

In such a degradable coating layer, the degradability means decomposition by light, oxygen, and microorganisms, etc. and, particularly, in the conventional particle-state products coated, it is difficult to control an elution rate of fertilizing components, there has been a drawback that duration of a fertilizing effect is readily affected by circumstances such as weather and soil, etc. Further, it is indicated that the coating layer is remained in soil over a long time of period after elution of the fertilizing components.

Still further, there has been tried utilization of many biodegradable resins and, for example, there is described a combination of a cellulose derivative, a low molecular weight polyethylene, or paraffin, etc. with a polycaprolactone, a polylactic acid, or an aliphatic polyester resin in JP-A-07033576 Official Gazette.

However, in the case, since a melting point is 60°C in the polycaprolactone to be employed, heat resistance and tensile strength are insufficient, and it is limited in the utilization as wrapping materials such as films. Further, it occasionally causes blocking during transportation and storage of molded products.

Still further, since the polylactic acid and the aliphatic polyester resin are low in solubility to solvents, there are not still found sufficient ones because of accompanying by difficulty in practical uses. In addition, although there is likewise disclosed a particle-state product coated by a polycaprolactone in the above-described JP-A-07000505 Official Gazette, the biodegradable resin is high in moisture permeability, and it occasionally causes a blocking problem during storage of the particle-state product, resulting in that there is not found a particle-state coated fertilizer having sufficient properties.

Besides, in addition to the coated fertilizer, although coated agricultural chemicals, etc. are also known, those include a similar problem.

Heretofore, mechanical strength is often sacrificed in a so-called biodegradable resin (also called a biodegradable plastics) in order to give biodegradability, and there are desired resins which have high biodisintegrable ability and mechanical properties, particularly, a high impact strength.

A cushion sheet having discontinuous cells is employed as a sheet-like cushion material, and it is a cushion sheet in which a plain base film is laminated with a thinner film by which many domed swellings are formed like an embossed film and, the many domed swellings form an independent cell, respectively.

Shape, size, the number (density), and interval, etc. of the domed swellings are variously selected and, the cushion sheet is widely employed for wrapping articles, for wrapping foods and, moreover, for working a tiles bed, etc. by fixing it inside a concrete frame.

For the sheet, the above-described biodegradable resins can be employed. However, in the case that a film is molded by lamination, there is a problem that although a layer of the above-described biodegradable polyester resin in which a polycaprolactone is mixed with the above-described aliphatic polyester resin has a strength in an MD direction, it does not have a sufficient strength in a TD direction.

On the other hand, a polycaprolactone (PCL) is a crystalline resin, and has a relatively low melting point such as 60°C, and heat resistance and tensile strength are insufficient, resulting in that it is limited in an application as a wrapping material such as a film. For that reason, there has been investigated an improvement by crosslinking using an ionizing radiation.

As the ionizing radiation industrially and widely employed, there are known γ-ray by cobalt 60 and an electron beam by an accelerator. However, since the crosslinking by ionizing radiation is mainly caused in a noncrystalline region of polymeric materials, in the case of irradiation in the vicinity of the room temperatures for the PCL as it is, there is required a large amount of irradiation quantity such as, for example, 200 kGy, resulting in that a gel fraction is apt to become high. Contrarily, in the case of a treatment in the vicinity of a melting point, there is a tendency that strength is lowered because of formation of a large amount of voids.

Accordingly, even though there are followed conventional irradiation conditions by ionizing radiation and the PCL is crosslinked, practical materials cannot be obtained.

Heretofore, as described in JP-A-08039745 Official Gazette, there are recently employed in wide fields a large amount of cards such as an ID card, a member card, a cashing card having a monetary value, a credit card, a prepaid card, a commutation ticket, and a passing ticket, etc. Particularly, frequency of use of a so-called prepaid-card (a prepayment card) is very increasing, in which a fixed amount of money is in advance paid and it is coded as a value information corresponding to the fixed amount of money. In the card, the value information and identifiable information are recorded as a design and character information printed and coded onto a card material through a read-write machine and, further, those are recorded as an information to be read by the machine at a magnetically or optically recording portion arranged in the card material. For that reason, there are required gate properties such as mechanical properties, durability, flexural resistance, and stiffness, etc., so that it can be used in the read-write machine.

As materials for satisfying such the requirements and being capable of readily manufacturing, a plastics such as a polyethylene terephthalate resin (PET) has been principally employed, which satisfies mechanical properties alone as a material for the card.

Still further, a polyvinylchloride resin has been employed as a base material for general cards. The cards are usually disposed after being sold or lent to users and being finished to use.

And, the plastics cards made by the above-described materials have been disposed by burning or reclamation of wastes after the use thereof at present time. However, plastics wastes include a problem of durability of an incinerator by high temperature in burning, a problem of environmental pollution by waste gases in burning of the polyvinylchloride resin, and it is impossible to completely select from the former material (PET) which is slight in influence by burning. Further, in reclamation of wastes, since those are remained with an original shape without decomposing in a dumping site, those are semipermanently remained as garbages, resulting in that an influence to natural circumstances becomes problematic. In all cases, there is a problem of disposal after use.

Therefore, there have been investigated a variety of uses of natural-based biocelluloses and starch-based plastics, cellulose-based esters having a low substitution degree, polyesters synthesized by microorganisms, aliphatic polyester resins, etc., as a biodegradable resin, and those are also investigated as a material for cards.

'Practical and Biodegradable Plastics' (page 42, 1992) published by CMC, Ltd., mentions as described hereinafter concerning biodegradability of a poly(ε-caprolactone). That is, (i) in 1972, Potts et al found that a poly(ε-caprolactone) having a high molecular weight (molecular weight of 30,000) disappeared after being buried for 1 year [Am. Chem. Soc. Polymer Preprint, 13, 629 (1972)]. (ii) In 1976, Tokiwa et al reported that a poly(ε-caprolactone) having a molecular weight of 25,000 was almost completely decomposed by Penicillium SP. 26-1 isolated from soil [J. Ferment Technol., 54, 603 (1976)]. (iii) In 1975, Diamond et al reported that a film prepared from a poly(ε-caprolactone) was degraded by Aspergillus or in soil [Int. Biodetr. Bull., 11, 127 (1975)]. (iv) According to a result of field tests by burying in soil and immersion in water carried out by the Biodegradable Plastics Study Party, it is reported that disappearance of poly(epsilon-caprolactone)s began after 6 months in many places and it disappeared after 1 year in almost all places (unpublished data provided by the Biodegradable Plastics Study Party/Technology Meeting).

However, although the poly(ε-caprolactone) has a high ductility and high biodegradability, it has a low melting point and low heat resistance.

Of the biodegradable aliphatic polyester resins, although the polylactic acid shows a high stiffness, it shows a low ductility and low biodegradability and, the poly(ε-caprolactone) (shortened into a polycaprolactone) shows a high ductility and high biodegradability, it shows a low melting point and low heat resistance. Further, the polylactic acid shows a poor compatibility with the polycaprolactone and, a mixture shows a low ductility.

Still further, as described in JP-A-57150393, JP-A-59220192, JP-A-51093991, JP-A-63260912, and JP-A-57150393 Official Gazettes, there are developed plastics which are capable of being decomposed in a natural circumstance such as light or underground and, those are employed as disposable-type packages for commercial goods and, nowadays, those are partially employed as commercial products. In a field of the cards, JP-A-05042786 and JP-A-05085088 state that biodegradable or photodegradable plastics are employed as a material for the cards.

Besides, there has been utilized a card in which paper is employed as a material for the card and, in particular, the paper can be readily burned and buried, and it is low in costs for the preparation. Accordingly, it is regarded as a most suitable material for the cards in order to solve the above-described environmental problems such as garbages which are recently discussed.

However, in the case that paper is employed as a material for the cards, in consideration of total applicability as cards such as durability, flexural resistance, resistance to chemicals, water resistance, surface smoothness, glossiness, and workability, etc., it is poor in all the functions. Accordingly, paper alone is remarkably limited in the uses, for example, for boarding tickets or admission tickets, etc. which are used only as temporary uses, resulting in that those are unsuitable for the prepaid cards which are repeatedly used for a certain period. In the case, although it is thought that there is laminated an outer layer such as a protecting layer made from synthetic resins such as polyethylene resins, polypropylene resins, polyvinyl chloride resins, and a PET, or such a material other than plastics such as an aluminum foil, those are not excellent in disposability, resulting in that those are not basically different from the above-described plastics cards.

Further, JP-A-07009788 Official Gazette states a card in which a biodegradable resin layer is laminated with one surface or both surfaces of a paper-made base material, and which has an excellent properties for a conventional card and excellent disposability.

In the case of using the card in which a biodegradable resin layer is laminated with one surface or both surfaces of a paper-made base material which is made for the purpose of an improvement of the above-described problems, although it is not problematic in ordinary uses, in the case that it is exposed to an abnormal circumstance, for example, washing by water, water soaks from edges of the card and, curl, expansion and contraction, and peeling of the edges, etc. are occasionally caused in the card, resulting in that the card is readily damaged. Further, when it is used through the read-write machine, there is caused a problem of catching at a carrying gate, etc. for the card by the curl and peeling.

Still further, a card in which a base material itself for the card is constructed by a biodegradable plastics is gradually decomposed by properties of the plastics after dumping. However, since the card is prepared in consideration of convenience of the card and a problem in the preparation of the card, in the case of merely using the biodegradable plastics as a base material for the card, it is not regarded that the card has mechanical properties such as a flexural resistance and stiffness. Besides, since the card requires a fixed thickness in view of strength and easiness in handling, when it is integrally molded, the biodegradable plastics are used depending upon bowing in surface of the card and the thickness, resulting in that it takes time for decomposing. Moreover, since the biodegradable plastics are high-priced, there is caused a problem that the card itself becomes high-priced.

Under such the problems, the above-described JP-A-8039745 Official Gazette discloses a card in which the whole of resins constructing the card has biodegradability together with having a gate property such as stiffness which is required in mechanically reading-writing.

However, hardness and dimensional stability are insufficient in the card obtained, and there is not always sufficient a printing applicability of a information recording layer to the base material and, a further improvement is required in biodegradability.

In view of the above-described actual condition, purposes of the respective inventions are shown hereinafter.

The purpose of the present invention [I] is to provide a biodegradable polyester resin composition in which biodegradability is improved in an aliphatic polyester having relatively not high biodegradability in itself and an aliphatic polyester resin containing a urethane bond (hereinafter, so far as those are not particularly distinguished, both are merely called "aliphatic polyester resin"), and which is not apt to cause a draw-down phenomenon during vacuum molding, blow molding, and inflation molding.

Further, the purpose of the present invention [II] is to provide a biodegradable throw-away glove made from a resin having an improved biodegradability, and having a hygroscopicity and less adherence of dust by static electricity.

Still further, the purpose of the present invention [III] is to provide a stake made from a resin having an improved biodegradability, a biodegradable stake which is employed for agriculture, civil engineering or construction, and a biodegradable stake in which an agricultural work is improved by utilization thereof.

Moreover, the purpose of the present invention [IV] is to provide a protecting material for plants made from a resin having an improved biodegradability in order to prevent an injury eaten by animals.

Besides, the purpose of the present invention [V] is to provide a biodegradable tape which is obtained by molding a resin or resin composition having an improved degradability, moldability, and mechanical properties, in which a lactone resin is employed, and a wrapping-packing tape and a pressure-sensitive adhesive tape in which the biodegradable tape is employed.

Also, the purpose of the present invention [VI] is to provide a card having a biodegradability by utilizing a strong point of a high stiffness in a polylactic acid and a high ductility and biodegradability in a polycaprolactone, and in which a magnetic recording layer and/or thermally-sensitive recording layer are coated over a base material for the card having gate properties for reading-writing in a read-write machine while maintaining durability, stiffness, moldability and processability, mechanical strength, hardness, impact strength, dimensional stability, and flexural resistance in a base material for the card.

Also, the purpose of the present invention [VII] is to provide a laminate having an excellent biodegradability and a good moldability in a film itself, and a good laminability with paper and, in the laminate obtained, strength decline of the paper by water is prevented, and a heat sealing ability is excellent as a material for wrapping.

Also, the purpose of the present invention [VIII] is to provide a lamination film having an excellent biodegradability, a good moldability in the film itself, and a strong adhesive strength (laminability) between layers and, in the lamination film obtained, tear strength is improved, and to provide a biodegradable lamination film for agriculture using thereof.

Also, the purpose of the present invention [IX] is to provide a biodegradable multi-layers film or sheet having a good moldability and an excellent strength, and a quickly-biodegradable rate.

Also, the purpose of the present invention [X] is to provide a biodegradable thin film having the thickness of 5-25 μm which is good in a continuous moldability, excellent in strength, etc., and has a quickly-biodegradable rate.

Also, the purpose of the present invention [XI] is to provide a cushion sheet having discontinuous projections which is good in moldability and excellent in strength, and has a quickly-biodegradable rate.

Also, the purpose of the present invention [XII] is to provide a particle-state product having a degradable thin layer such as a coated fertilizer, a coated agricultural chemical, and micro capsules for carbonless paper, which are excellent in storage stability, and which are not remained by decomposition even being left under natural circumstances.

Also, the purpose of the present invention [XIII] is to provide a coated particle-state fertilizer which is biodegradable, and low in moisture permeability and, further, in which residual resins derived from a coated layer after use of the particle-state fertilizer do not float in a paddy field.

And also, the purpose of the present invention [XIV] is to provide a biodisintegrable resin composition which is biodisintegrable and, in which a mechanical property, particularly, an impact strength is largely improved.

DISCLOSURE OF THE INVENTION

The present inventors, as a result of repeated intensive investigations, have found out the following matters, and the respective present inventions have been completed.

The present inventors have found out that biodegradability is remarkably improved by formulating and kneading an aliphatic polyester having relatively not high biodegradability in itself and a polyester resin in which a biodegradability is lowered by containing a urethane bond with a polycaprolactone having a higher biodegradability.

That is, it was found out that there can be obtained a higher degradable ratio than a degradable ratio to be expected from a degradable ratio in a polyester resin alone having a low biodegradability which constructs a kneaded resin composition and a content ratio thereof, and a degradable ratio in a polycaprolactone alone having a higher biodegradability arid a content ratio thereof. Further, since the polycaprolactone has a low melting point of 60°C, although it is usually expected that a melting point in the whole resin composition becomes lower by kneading it, a biodegradability in the aliphatic polyester having relatively not high biodegradability in itself and the aliphatic polyester resin containing a urethane bond is remarkably improved by formulating-adding a relatively small amount of the polycaprolactone by which a decline of the melting point can be controlled within a range not practically causing a problem.

The present inventors have found out that there can be obtained a biodegradable polyester resin composition which is not apt to cause a draw-down phenomenon during vacuum molding, blow molding, and inflation molding by adding a specified amount of an inorganic filler such as talc into a biodegradable polyester resin which contains 100 parts by weight of an aliphatic polyester resin highly-polymerized by, for example, an aliphatic isocyanate and 1-200 parts by weight of the polycaprolactone, and the present invention [I] has been completed.

Also, the inventors have found out that a film is readily molded without a draw-down phenomenon during molding by employing such the kneaded resin composition, that there can be obtained a throw-away glove having a remarkably improved biodegradability, good fitness to hands by a moisture absorbing property, and a dust-keeping off property by trimly cutting an unnecessary portion together with heat sealing after laminating the film, and that the throw-away glove is suitable for gardening, food-processing and handling, handling medical devices, and working in a clean room, etc., and the present invention [II] has been completed.

Also, the inventors have found out that such the kneaded resin composition is molded into a stake, that fertilizers and/or chemicals are gradually supplied from the stake into soil by containing fertilizers and/or chemicals in the stake, that the stake is decomposed after lapse of a use period, and that a stake containing talc is readily driven into the ground and improved in biodegradability, and the present invention [III] has been completed.

Also, the inventors have found out that an injury by being eaten can be prevented by winding around a trunk of a tree after molding such the kneaded resin composition into a protecting material for plants, that it is readily decomposed without hindrance to growth of plants after the use, and that biodegradability is further improved by formulating talc, and the present invention [IV] has been completed.

Also, the inventors have found out that there can be obtained a biodegradable tape well-balanced in view of moldability of a film, physical properties of a film, and biodegradability after the use, etc. by adding a lubricant, a plasticizer, and a thermal stabilizer, etc. to a lactone resin typified by a polycaprolactone and an aliphatic polyester resin, and the present invention [V] has been completed.

Also, as a result of an intensive investigation in order to further improve physical properties for a card, the inventors have found out that a biodegradable resin composition is excellent as a base material for the card by employing an aliphatic polyester resin as a compatibilizing agent for a polylactic acid-based resin and a polycaprolactone-based resin, and the present invention [VI] has been completed.

Also, the inventors have found out that there can be obtained a biodegradable laminate well balanced in view of moldability of a film, physical properties of a film, and biodegradability after the use, etc. by preparing the film using a specified aliphatic polyester resin alone or the aliphatic polyester resin and a polycaprolactone, and then, by thermally- and compressively-laminating the film with paper, and the present invention [VII] has been completed.

Also, the inventors have found out that there can be obtained a lamination film by co-extruding a lamination film composed of a polybutylene succinate resin film laminated at both sides of a polycaprolactone resin layer, which has a more excellent biodegradability, a more improved tear strength, and a more excellent laminability than any one of a single layer film composed of a polycaprolactone alone having same thickness as the lamination film, or a single layer film composed of a polybutylene succinate resin alone having the same thickness as the lamination film, and the present invention [VIII] has been completed.

Also, the inventors have found out that there can be obtained a biodegradable multi-layers film molded by co-extruding a biodegradable polyester resin composition in which 1-200 parts by weight of a polycaprolactone is mixed with 100 parts by weight of an aliphatic polyester resin and a polycaprolactone irradiated by ionizing radiation, and which has a good moldability, an excellent strength, and a quick biodegradation rate, and the present invention [IX] has been completed.

Also, the inventors have found out capability of solving such the problems concerning a thin layer film by the use of a composition composed of an aliphatic polyester resin having a specified range of a melt flow rate and melt tension and a polycaprolactone, and the present invention [X] has been completed.

Also, the inventors have found out capability of solving such the problems by the use of a polycaprolactone alone which is moderately irradiated by ionizing radiation or a composition composed of a polycaprolactone which is irradiated by ionizing radiation and an aliphatic polyester resin as a raw material for an embossed film and a base film, and the present invention [XI] has been completed.

Also, as an intensive investigation for selecting a coating material in order to prepare a particle state product which does not cause a blocking in storage during summer season and which is coated by a biodegradable coating layer which is adjustable a period of degradation of the coating layer, the inventors have found out capability of reducing the blocking while maintaining biodegradability by the use of a polycaprolactone irradiated by ionizing radiation which is a coating material, and the present invention [XII] has been completed.

Also, as a result of an intensive investigation for selecting a coating material in order to prepare a particle state fertilizer coated by a degradable coating layer which is adjustable a period of a fertilizing effect, the inventors have found out capability of uniformly coating and solving the above-described problems by coating the surface of the particle state fertilizer mixing a polylactone (A) having an excellent biodegradability with a component (B) such as a petroleum resin and a rosin, and the present invention [XIII] has been completed.

Also, the inventors have found out that Dupon't Impact strength of a blend is jumpingly improved by formulating and kneading a small amount of a rubber-modified styrene-based resin having a high impact strength into a mixture of a polycaprolactone having a high biodegradability with an aliphatic polyester and, based on the finding, there have been found out that an impact strength of a composition is largely improved without loss of biodegradability by blending a small amount of a thermoplastic resin having a high impact strength into a biodegradable resin composition composed of a polycaprolactone, a synthetic polyester resin, and an amide of a fatty acid, further, the following facts have been found out concerning the biodegradability in the resin composition. That is, although residual substances are remained by the presence of a small amount of nonbiodegradable components, the greater part of biodegradable components themselves show a high biodegradability without being obstructed and, even in the case that it is molded, a molded article does not show an original shape, and the amount of residual substances is slight, and it is not problematic in the shape and the amount (in the present invention, such the state of biodegradation is named a biodisintegrable property) compared to general-purpose resins which are remained without being not almost decomposed, and the present invention [XIV] has been completed.

That is, a first aspect of the present invention provides a biodegradable polyester resin composition comprising an aliphatic polyester resin, a polycaprolactone, and inorganic additives, in which the ratio of the aliphatic polyester resin with respect to the polycaprolactone is 100 parts by weight/1-200 parts by weight and, the ratio of total amount of the aliphatic polyester resin and the polycaprolactone with respect to the inorganic additives is 95-50% by weight/5-50% by weight.

A second aspect of the present invention provides a biodegradable and throw-away glove obtained by putting one upon another of two layers of films having the thickness of 40 µm obtained by T-die molding of a polyester resin composition in which 100 parts by weight of the aliphatic polyester resin is formulated with 1-200 parts by weight of the polycaprolactone, and by trimly cutting after heat sealing of a circumferential portion into a glove-shape.

A third aspect of the present invention provides a biodegradable stake comprising molding a polyester resin composition in which 100 parts by weight of the aliphatic polyester resin is formulated with 1-200 parts by weight of the polycaprolactone and, in which a fertilizer and/or agricultural chemicals may be contained.

A fourth aspect of the present invention provides a protecting material for plants which prevents a damage eaten by animals through winding a net around a trunk of a tree, which is obtained by molding a polyester resin composition obtained by formulating 5-100 parts by weight of talc with 100 parts by weight of a polyester resin composition in which 100 parts by weight of the aliphatic polyester resin is formulated with 1-200 parts by weight of the polycaprolactone.

A fifth aspect of the present invention provides a biodegradable tape which comprises molding of a lactone resin alone or a lactone-contained resin composition composed of the lactone resin, other biodegradable resins, and/or an additive for resins, which is excellent in degradability, moldability, and mechanical properties, and which is employed as a wrapping-packing tape and a pressure sensitive adhesive tape.

A sixth aspect of the present invention provides a biodegradable card characterized by employing a biodegradable resin composition layer as a base material comprising 85-5% by weight of a polylactic acid-based resin (A), 5-50% by weight of an aliphatic polyester resin, and 10-45% by weight of a polycaprolactone-based resin (C) (total of the (A)+(B)+(C) is 100% by weight) and, further 5-300 parts by weight of fillers (D) based on 100 parts by weight of the total, of the (A)+(B)+(C) .

A seventh aspect of the present invention provides a biodegradable laminate comprising a biodegradable resin layer (1) composed of an aliphatic polyester resin alone or a lactone resin and the aliphatic polyester resin and at least one of a sheet-like material (2) selected from the group consisting of papers, a pulp sheet, and a cellulose-based film.

An eighth aspect of the present invention provides a biodegradable laminated film comprising laminating a biodegradable resin layer (1) with a biodegradable resin layer (2) which is different from the biodegradable resin layer (1) in which total of the layers is composed of at least two layers and, in which 2 different kinds of biodegradable resin layers are laminated.

A ninth aspect of the present invention provides a biodegradable multi-layers film or sheet comprising a layer (A) composed of a biodegradable aliphatic polyester resin composition in which 1-200 parts by weight of a polycaprolactone is formulated with 100 parts by weight of the aliphatic polyester resin, and a layer (B) composed of a composition of a polycaprolactone alone or a composition of the polycaprolactone with a biodegradable resin other than the polycaprolactone, in which the polycaprolactone which constructs the layer (B) is characterized by irradiating solely or together with at least one of other constructing components by ionizing radiation.

A tenth aspect of the present invention provides a biodegradable film which is composed of a composition of a aliphatic polyester resin with a polycaprolactone, in which the thickness of the film is 5-25 µm, and which is composed of any one of the compositions (1)-(3) described below.

(1) the aliphatic polyester resin has a melt tension of not less than 2 g and a melt flaw rate of 1-9 g/10 minutes, and the polycaprolactone is a linear chain type polycaprolactone,
(2) the polycaprolactone has a melt tension of not less than 2 g and a melt flow rate of 1-9 g/10 minutes, and the aliphatic polyester resin is a linear chain type aliphatic polyester resin, or (3) the composition has a melt tension of not less than 2 g and a melt flow rate of 1-9 g/10 minutes.

An eleventh aspect of the present invention provides a cushion sheet having discontinuous cells which comprises a cushion sheet having discontinuous cells in which an embossed film (2) having a large number of projections (3) over all surface of the film is laminated with a plain base film (1) and/or the embossed film (2), characterized in that the embossed film (2) and the plain base film (1) are formed by a polycaprolactone alone or a composition of the aliphatic polyester resin with the polycaprolactone, and the polycaprolactone is irradiated solely or together with at least one of other constructing components by an ionizing radiation.

A twelfth aspect of the present invention provides a particle-state article having a degradable thin layer characterized in that the surface of the particle-state article is coated by a mixture of at least one kind selected from the group consisting of a polycaprolactone alone or the polycaprolactone and a natural resin, a cellulose acetate resin, a biodegradable cellulose ester, a biodegradable aliphatic polyester, an olefin polymer, a copolymer containing an olefin, a polyvinylidene chloride polymer, a copolymer containing vinylidene chloride, a diene-based polymer, waxes, a petroleum resin, oils & fats and a modified product therefrom with other coating agents, and the polycaprolactone is irradiated solely or together with at least one of other constructing components by an ionizing radiation.

A thirteenth aspect of the present invention provides a particle-state composition for agriculture and gardening in which a mixture of a polycaprolactone with petroleum resins and/or rosins is coated on the surface of a particle-state fertilizer.

A fourteenth aspect of the present invention provides a composition having a biodisintegrable property comprising 100 parts by weight of a biodegradable resin composition having a biocollapse property and 5-20 parts by weight of a thermoplastic resin, and the biodegradable resin composition is composed of 5-70 parts by weight of a polycaprolactone and 95-30 parts by weight of an aliphatic polyester resin.

Brief Description of Drawings

Figure I-1 is a graph showing a transition of biodegradability with a time lapse in relation to an extrusion-molded sheet of a kneaded product of a polyester having a high molecular weight/polycaprolactone PH7/talc in the present invention.

In the above-described graph, (1) and (2) show the following items.

(1) a kneaded product of a polyester resin/polycaprolactone PH7/talc
(2) a kneaded product of a polyester resin/polycaprolactone PH7

Figure VI-1 is a cross-sectional drawing showing an Example in relation to a card of the present invention.
Figure VI-2 is a cross-sectional drawing showing another Example in relation to a card of the present invention.
Figure VI-3 is a cross-sectional drawing showing other Example in relation to a card of the present invention.

In the Figures, marks are as follows.

1, 10, 11: card, 2: a base material for a card, 3: a visible information-design portion, 4: a magnetic recording layer, 5: a thermally-sensitive recording layer, 12: a core sheet, 13: a covering sheet

Figure XI-1 is a cross-sectional drawing showing a constructing example in relation to a cushion sheet having discontinuous cells of the present invention.
Figure XI-2 is a cross-sectional drawing showing another constructing example in relation to a cushion sheet having discontinuous cells of the present invention.
Figure XI-3 is a cross-sectional drawing showing other constructing example in relation to a cushion sheet having discontinuous cells of the present invention.

In the Figures, marks are as follows.

1: a projection, 2: an embossed film, 3: a base film

Figure XIII-1 is an outlined drawing showing an apparatus example which is suitable for the preparation in the present invention.

In the Figure XIII-1, marks are as follows.

1 a jet column, 2 a hole for throwing a fertilizer, 3 a hole for exhausting a waste gas, 4 a nozzle for a liquid, 5 a pump, 6 a valve, 7 a hole for taking out, 8 a heat exchanger, 9 an orifice flow meter, 10 a blower, 11 a liquid tank, $T_1$, $T_2$, $T_3$ a thermometer, SL steam

Figure XIV-1 is a drawing showing a transition of a biodisintegrable property by an active sludge with a time lapse in relation to respective resins or resin compositions.

In the Figure XIV-1, marks are as follows.
The mark ● shows a resin composition (E) having a biodisintegrable property in the present invention.
The mark ▲ shows a biodegradable polyester resin composition (C).
The mark ■ shows a rubber-modified polystyrene-based graft resin (D).

## BEST MODE FOR CARRYING OUT THE INVENTION

First of all, in order to simplify descriptions, there are illustrated common matters for the present inventions [I]-[XIV].

[Aliphatic polyester resin]

The aliphatic polyester resin to be employed in the present inventions is not particularly limited and, preferably, it is a resin having a melting point of not less than 100°C, thermoplasticity, and biodegradability.

For example, there can be both employed an aliphatic polyester resin containing urethane bonds as shown in JP-A-05310898 Official Gazette and an aliphatic polyester resin not containing urethane bonds which is obtained by an transesterification reaction as shown in JP-A-09095529 Official Gazette.

(Aliphatic polyester resin not containing urethane bonds)

Although the aliphatic polyester resin to be employed in the present inventions is not particularly limited, there are enumerated a polyester or copolyester of an aliphatic dicarboxylic acid having a low molecular weight with an aliphatic diol having a low molecular weight; a polymer or copolymer of a hydroxycarboxylic acid such as a polylactic acid, a polyhydroxy propionic acid, and a polyhydroxy butylic acid; a polymer, etc. of the hydroxycarboxylic acid and the aliphatic dicarboxylic acid with an aliphatic diol, an aliphatic polyester of a terpolymer described in JP-A-09235360 and JP-A-09233956 Official Gazettes, a copolymer of lactic acid with a hydroxycarboxylic acid described in JP-A-07177826 Official Gazette; and a polyamide ester resin synthesized from ε-caprolactone and ε-caprolactam, etc. These may also be employed solely or in combination of two or more kinds.

As the polyester of an aliphatic dicarboxylic acid having a low molecular weight with an aliphatic diol having a low molecular weight, there is enumerated a polyester of a linear chain or branched aliphatic diol having a carbon number of 2-10 with a linear chain or branched aliphatic dicarboxylic acid having a carbon number of 2-10, and those are particularly preferred in the present invention.

As the aliphatic diol, there is specifically enumerated a diol having a carbon number of 2-10 such as ethyleneglycol, propyleneglycol, 1,4-butanediol, neopentylglycol, hexanediol, and 1,4-cyclohexanedimethanol.

As the aliphatic dicarboxylic acid, there are enumerated oxalic acid, malonic acid, succinic acid, glutaric acid, adipic acid, suberic acid, and sebasic acid, etc.

There is employed a polyester having the diol content of 20-70% by weight and the aliphatic dicarboxylic acid content of 30-80% by weight.

Of the above-described aliphatic polyester resins, there is employed a resin having a melting point of not less than 100°C and thermoplasticity. Depending upon uses, there is preferred a resin having a relatively not high biodegradability and, there can be exemplified a polyester resin obtained from succinic acid and 1,4-butanediol, a polyester resin obtained from succinic acid and ethyleneglycol, a polyester resin obtained from oxalic acid and neopentylglycol, and a polyester resin obtained from oxalic acid and ethyleneglycol, etc., and the polyester resin obtained from succinic acid and 1,4-butanediol is particularly preferred.

Further, as the aliphatic polyester resin, there may also be a polyester ether obtained by copolymerization of a combination of the above-described dicarboxylic acid derivatives and the diols with a polyalkylene glycol such as diethylene glycol, triethylene glycol, and dipropylene glycol; a polyester ether obtained by copolymerization of dioxycarboxylic acid derivatives such as diglycol acid; and a polyester carbonate obtained by copolymerization of an organic carbonate compound such as dimethylcarbonate, diethylcarbonate, dipropylcarbonate, and diphenylcarbonate. Particularly, there is preferred a copolymer composed of a succinic acid derivative, 1,4-butanediol, and the organic carbonate compound.

In the aliphatic polyester resin, a number average molecular weight ranges in 1,000-500,000, preferably, not less than 20,000 and, more preferably, not less than 40,000. Upper value is not particularly limited, and there can be practically employed a resin having 500,000 or so.

(Aliphatic polyester resin having urethane bonds)

The aliphatic polyester resin having urethane bonds is obtained by highly-polymerizing the above-described aliphatic polyester resin using, preferably, an aliphatic diisocyanate.

As the aliphatic diisocyanate compounds, there are exemplified hexamethylene diisocyanate, rysin diisocyanate methylester {OCN-$(CH_2)_4$-CH(-NCO)(-COOCH$_3$)}, and trimethylhexamethylene diisocyanate, etc. and, of those, hexamethylene diisocyanate is preferred. Further, in the aliphatic polyester resin having urethane bonds, a number average molecular weight ranges in, preferably not less than 20,000 and, more preferably, not less than 40,000.

As the aliphatic polyester resin having urethane bonds, there can be enumerated respective series of Bionolle #1000, #3000, and #6000 manufactured by Showa Kobunshi, Ltd.

As the polylactic acid, there can be enumerated, for example, ECOPLA (manufactured by Kurgil, Ltd.) and Lacty (manufactured by Shimadzu Seisakusyo, Ltd), etc.], etc.

In the present invention, the aliphatic polyester resin not containing urethane bonds and the aliphatic polyester resin containing urethane bonds are both named the aliphatic polyester resin. Further, the aliphatic polyester resin to be employed in the present invention also includes a polyester produced by microorganisms. As the polyester produced by microorganisms, there are enumerated a homolymer of a polyhydroxy alkanic acid such as a poly-3-hydroxy butylic acid, and a poly-3-hydroxy valeric acid or a poly-4-hydroxy valeric acid, a copolymer of a poly-3-hydroxy butylic acid with a poly-3-hydroxy valeric acid, and a copolymer of a poly-3-hydroxy butylic acid with a poly-4-hydroxy valeric acid, etc., and the copolymer of a poly-3-hydroxy butylic acid with a poly-4-hydroxy valeric acid is preferred in view of both mechanical properties and biodegradability.

[Lactone Resin]

The lactone resin (also called a polylactone) employed in the present invention includes a homopolymer of a lactone monomer, a lactone copolymer of at least two kinds of lactone monomers, a copolymer of the lactone monomers with the monomers other than the lactone monomers, and a mixture thereof, etc.

As the lactone monomers, there are enumerated ε-caprolactone; a variety of methylated lactones such as 4-methylcaprolactone, 3,5,5-trimethylcaprolactone, and 3,3,5-trimethylcaprolactone; β-propiolactone; γ-butyrolactone; δ-valerolactone; and enantolactone, etc.

As the monomers other than the lactone monomers to be copolymerized with the lactone monomers, there are enumerated an aliphatic hydroxycarboxylic acid such as lactic acid, hydroxypropionic acid, and hydroxybutyric acid; an aliphatic diol and an aliphatic dicarboxylic acid exemplified for the aliphatic polyesters described hereinabove, etc.

In the lactone resin, a number average molecular weight ranges in 10,000-1,000,000, preferably 50,000-500,000 and, more preferably, not more than 200,000.

(Polycaprolactone)

Of the above-described lactone resins, a polycaprolactone is preferred.

The polylactone resin to be employed in the present invention can be obtained by a conventional ring-opening polymerization method of ε-caprolactone using a compound having an active hydrogen such as, for example, an alcohol as an initiating agent. In the initiating agent, functionalities are not particularly limited, and there can be preferably employed a monofunctional alcohol such as methanol, ethanol, propanol, and butanol; a bifunctional alcohol such as water, ethyleneglycol, diethyleneglycol, and propyleneglycol; and a trifunctional alcohol such as glycerine and trimethylolpropane.

Molecular weight of the polycaprolactone to be employed ranges from a low molecular weight to a high molecular weight, and in the case that the polycaprolactone having a low molecular weight is employed, since a decline of heat resistance and mechanical strength increases in a kneaded resin, although use amount is limited, there appears a merit that melt viscosity lowers in a resin composition, and moldability is elevated. However, use of the polycaprolactone having a high molecular weight is more preferred because of capability of increasing mixing ratio, and capability of well-balancing between all of heat resistance, mechanical properties, and biodegradability.

Specifically, there is preferably employed a polycaprolactone resin having a number average molecular weight value of from 1,000 to 200,000, and more preferably from 5,000 to 100,000. It is to be noted that although there can be also employed a polycaprolactone having a number average molecular weight exceeding 200,000 without any problems, it is difficult to obtain the polycaprolactone having such the very high molecular weight, and it is not realistic.

Further, as the polycaprolactone to be employed, in addition to a homopolymer of ε-caprolactone, there can be employed a copolymer containing not more than 20% by weight of comonomer constructing units such as valerolactone, glycolide, and lactide.

The polycaprolactone having the above-described molecular weight corresponds to a resin having a relative viscosity value of from 1.15 to 2.80 regulated by JIS K6726, and preferably not less than 1.50.

As the polycaprolactone resin commercially supplied, there are enumerated PCL H7, PCL H4, and PCL H1 (these are occasionally described as PH7, PH4, and PH1, respectively), etc. manufactured by Daicel Chemical Industries, Ltd. PCL H7 has a number average molecular weight of 70,000-100,000 and relative viscosity of 2.35-3.20, PCL H4 has a number average molecular weight of approximately 40,000, and PCL H1 has a number average molecular weight of approximately 10,000.

[Composition ratio of the aliphatic polyester resin with respect to the polycaprolactone]

Formulating proportion of the aliphatic polyester resin with respect to the polycaprolactone, although depending upon both molecular weight and biodegradability to be required, ranges in 100 parts by weight of the former and 1-200 parts by weight of the latter, preferably, 5-50 parts by weight of the latter and, particularly, preferably 20-40 parts by weight of the latter except a specifically designated case.

In the case that the aliphatic polyester resin is kneaded with the polycaprolactone, the presence of compatibility between both is desired from a viewpoint of mechanical properties in a resin composition obtained by kneading. In the case that compatibility is absent between both, for example, there can be preferably added a compatibilizing agent such as a copolymer of resin components to be kneaded with polycaprolactone components, for example, a resin having intermediate polarity between both, etc.

[Other biodegradable resin]

As other biodegradable resin to be employed in the present invention, there are enumerated a biodegradable cellulose ester, a polyamino acid ester, a polypeptide (a natural polyamino acid), a polyvinyl alcohol, starch, cellulose, paper, pulp, cotton, wool, silk, carrageenan, chitin, chitosan, plant substance powder such as coconut shell powder and chest nut shell powder, and mixture thereof, etc.

The other biodegradable resins can be added in 1-100 parts by weight based on 100 parts by weight of the polyester resin composition in which 100 parts by weight of the above-described polyester resin is formulated with 1-200 parts by weight of the polycaprolactone.

(Biodegradable cellulose ester)

As the above-described biodegradable cellulose esters, there are exemplified esters of an organic acid such as a cellulose acetate, a cellulose butylate, and a cellulose propionate; esters of an inorganic acid such as a cellulose nitrate, a cellulose sulphate, and a cellulose phosphate; a mixed ester such as a cellulose acetate-propionate, a cellulose acetate-butylate, a cellulose acetate-phthalate, and a cellulose nitrate-acetate. The cellulose esters may be employed solely or in combination of two or more kinds.

Further, there can be also employed a lactone-modified cellulose ester in which the above-described biodegradable cellulose esters are modified by the above-described lactones.

Of the cellulose esters, the esters of an organic acid and, the cellulose acetate and a caprolactone-modified product are particularly preferred.

The biodegradable cellulose ester composition to be employed in the present invention contains a biodegradable cellulose ester which has an average substitution degree of not more than 2.15 (provided that substantially not include zero) and, moreover, in which not less than 60% by weight is decomposed after 4 weeks based on the amount of carbon dioxide gas produced in an experimental method according to the ASTM (American Society for Testing Materials) 125209-91. Hereinafter, a cellulose ester having an average substitution degree of not more than 2.15 is abbreviated as a cellulose ester having a low substitution degree, so far as not particularly mentioned.

Further, in the biodegradable cellulose ester employed in the present invention, an average substitution degree is not more than 2.15, preferably 1.0-2.15 and, more preferably 1.1-2.0 or so. In the case that the substitution degree is less than 1.0, water resistance lowers in the surface of the particle-state product and, in the case of exceeding 2.15, there remarkably lower not only a compatibility with other components and fluidity in melting, but also biodegradability. The biodegradable cellulose ester to be employed in the present invention may be a composition containing a cellulose ester having an average polymerization degree of 50-250, and an equivalent ratio of alkaline metals or alkaline earth metals with respect to the amount of sulfuric acid remained of 0.1-1.1.

Still further, the biodegradable cellulose ester employed in the present invention may be also constructed by the cellulose ester alone having a low substitution degree, and it may be constructed by a plurality of cellulose esters having a different substitution degree which contain not less than 10% by weight of the cellulose ester having a low substitution degree.

It is to be noted that the above-mentioned sulfuric acid is derived from sulfuric acid employed as a catalyst in the preparation of the cellulose ester. Sulfuric acid remains as not only a free sulfuric acid but also a salt of sulfuric acid, sulphoacetate, and a sulfuric acid ester, and it may be free. Total amount of sulfuric acid remained in the cellulose ester is usually $1.8 \times 10^{-3}$-$6.0 \times 10^{-2}$% by weight (0.005-0.1% by mol) or so based on $SO_4^{2-}$.

As the above-mentioned alkaline metals, there are included lithium, potassium, and sodium, etc., and as alkaline earth metals, there are included magnesium, calcium, strontium, and barium, etc.

The biodegradable cellulose ester to be employed in the present invention may be a composition in which a biodegradability is improved, and the composition contains a cellulose ester having the average substitution degree of not more than 2.15, and the average polymerization degree of 50-250, and the equivalent ratio of the alkaline metals or alkaline earth metals with respect to sulfuric acid remained of 0.1-1.1.

The biodegradable cellulose ester to be employed in the present invention may be constructed by the cellulose ester alone having a low substitution degree, and may contain a plurality of cellulose esters having a different substitution degree so far as it contains the cellulose ester having a low substitution degree.

A composition constructed by the cellulose esters having a different substitution degree contains the above-mentioned cellulose ester having a low substitution degree and other cellulose esters (hereinafter, merely referred to as a cellulose ester having a high substitution degree, so far as particularly not mentioned).

The substitution degree of the above-mentioned cellulose ester having a high substitution degree may be different from the substitution degree of the cellulose ester having a low substitution degree, and substituted groups may be identical to or different from substituted groups in the cellulose ester having a low substitution degree. The cellulose ester having a high substitution degree includes a cellulose ester having a poor biodegradability (for example, a cellulose ester having the substitution degree of not less than 2.2, and particularly, not less than 2.4).

Further, a preferred cellulose ester having a high substitution degree often contains the identical substituted groups similar to the substituted groups in the cellulose ester having a low substitution degree, particularly, it often contains the identical substituted groups. The above-mentioned identical or similar substituted groups, in the case that the cellulose ester having the low substitution degree is a cellulose acetate, include a residual group of an organic acid ester having a carbon number of 1-4 or so.

The composition containing a plurality of cellulose esters having a different substitution degree is characterized in that even though the content of the cellulose esters having a low substitution degree is a small amount, biodegradability can be elevated in the cellulose esters. The content of the cellulose esters having a low substitution degree is not less than 10% by weight, preferably 10-90% by weight, and more preferably 10-75% by weight (for example, 10-50% by weight) or so based on the total cellulose esters. In the content of the cellulose esters having a low substitution degree of not less than 10% by weight, there can be jumpingly improved a biodegradability in a cellulose ester having a poor biodegradability. In the cellulose ester composition containing not less than 10% by weight of the cellulose ester having a low substitution degree as a cellulose ester component, it decomposes in not less than 20% by weight, preferably not less than 25% by weight after 4 weeks based on the amount of carbon dioxide gas produced in the experimental method according to the ASTM 125209-91. It is to be noted that the cellulose ester composition can be biologically decomposed within a short time of period with an increase of the content of the cellulose esters having a low substitution degree.

A mechanism of biodegradation is not distinct in such the cellulose ester. However, it is guessed that there are cultivated microorganisms which do not inherently have degradability for the cellulose esters having a high substitution degree by allowing to contain a small amount of the cellulose esters having a low substitution degree, resulting in that the cellulose esters having a high substitution degree can be also decomposed.

It is to be noted that the cellulose esters can be prepared by usual methods regardless of high or low substitution degree. Also, the substitution degree of the cellulose esters may be adjusted by a one-stage reaction in a reaction of an organic acid or an acid anhydride with a cellulose and, the substitution degree may be adjusted by hydrolysis after the preparation of the cellulose esters having a high substitution degree (for example, 3-substituted esters).

The biodegradable cellulose ester has a number-average molecular weight of 10,000-1000,000, preferably 30,000-600,000, and more preferably 50,000-400,000.

(Polyamino acid resin, Polypeptide)

As the polyamino acid resin, a polymer of a synthetic amino acid is enumerated and, as the polypeptide, a polymer of a natural amino acid is enumerated.

(Starch)

As the starch, there are enumerated raw starch, processed starch, and a mixture thereof.

As the raw starch, there are enumerated corn starch, potato starch, sweet potato starch, wheat starch, cassava starch, sago starch, tapioca starch, rice starch, bean starch, arrowroot starch, bracken starch, lotus rhizome starch, and water chestnut starch, etc. As the processed starch, there are enumerated physically-modified starch (α-starch, classified amirose, and moisture- and thermally-treated starch); enzyme-modified starch (hydrolyzed dextrin, enzyme-modified dextrin, and amirose, etc.); chemically-modified starch (acid-treated starch, starches oxidized by hydrochloric acid, and dialdehyde starch); derivatives of the chemically-modified starch (esterified starches, etherified starch, cationized starch, and crosslinked starch, etc.), etc.

Of the above descriptions, as the esterified starch, there are enumerated acetic acid-esterified starch, succinic acid-esterified starch, nitric acid-esterified starch, phosphoric acid-esterified starch, urea-phosphoric acid-esterified starch, xantgenic acid-esterified starch, and acetoacetic acid-esterified starch, etc.; as the etherified starch, there are enumerated allyl-etherified starch, methyl-etherified starch, carboxymethyl-etherified starch, hydroxyethyl-etherified starch, and hydroxypropyl-etherified starch, etc.; as the cationized starch, there are enumerated reaction products of starch with 2-diethylaminoethyl chloride, reaction products of starch with 2,3-epoxypropyl trimethyl ammonium chloride, etc.; as the crosslinked starch, there are enumerated starch cross linked by formaldehyde, starch cross linked by epichlorohydrin, starch crosslinked by phosphoric acid, and starch crosslinked by acrolein, etc.

Further, as a modifier for starch, there can be also added urea, an alkaline earth and alkaline metal hydroxide, and a mixture thereof.

[Additives for resins]

As the additives for resins to be employed in the present invention, there are enumerated plasticizers, thermal stabilizers, lubricants, anti-blocking agents, nucleating agents, accelerators for photo-degradation, accelerators for biodegradation, automatic oxidants, anti-oxidants, ultraviolet ray stabilizers, antistatic agents, flame retardants, flowing drop agents, water resistible agents, anti-bacterial agents, deodorizing agents, deodorants, fillers (inorganic additives or organic additives), extenders, coloring agents, and a mixture thereof.

(Plasticizer)

As the plasticizer, there are exemplified an ester of an aliphatic dibasic acid, a phthalate, a polyvalent hydroxy carboxylate, a polyester-based plasticizer, an ester of a fatty acid, an epoxide-based plasticizer, and a mixture thereof.

Specifically, there are enumerated the phthalate such as di-2-ethylhexyl phthalate (DOP), dibutylphthalate (DBP), and diisodecylphthalate (DIDP), an adipate such as di-2-ethylhexyl adipate (DOA) and diisodecyladipate (DIDA), an azelaic ester such as azelaic acid di-2-ethylhexyl (DOZ), the polyvalent hydroxy carboxylate such as acetyl citric acid tri-2-ethylhexyl and acetyl citric acid tributyl, the polyester-based plasticizer such as a polypropyleneglycol adipate, and those are employed solely or in combination of two or more kinds.

Addition amount of the plasticizers, although depending upon uses thereof, preferably ranges in 5-15 parts by weight based on 100 parts by weight of the polyester resin composition in which 1-200 parts by weight of the polycaprolactone is formulated with respect to 100 parts by weight of the above-described aliphatic polyester resin.

(Thermal stabilizers)

As the thermal stabilizers, there is a salt of an aliphatic carboxylic acid. As the aliphatic carboxylic acid, an aliphatic hydroxycarboxylic acid is particularly preferred. As the aliphatic hydroxycarboxylic acid, lactic acid and hydroxy butyric acid, etc. which naturally exist are preferred.

As the salt, there are enumerated salts such as sodium, calcium, aluminum, barium, magnesium, manganese, iron, zinc, lead, silver, and copper, etc. Those can be employed solely or in combination of two or more kinds.

Further, in the case of employing outdoors, a photostabilizer can be added. As the photostabilizer, there are enumerated "MARK1413" manufactured by Asahi Denka, Ltd. and ""TINUVIN326 manufactured by Chiba Geigy, AG, etc.

Addition amount of the various thermal stabilizers ranges in 0.5-10 parts by weight based on 100 parts by weight of the polyester resin composition in which 1-200 parts by weight of the polycaprolactone is formulated with respect to 100 parts by weight of the above-described aliphatic polyester resin.

(Lubricant and liquid lubricant)

As the lubricants, there can be employed ones which can be usually employed as an internal lubricant or an outer lubricant.

For example, there are enumerated fatty acid esters, hydrocarbon resins, paraffins, higher fatty acids, oxyfatty acids, fatty acid amides, alkylenebis fatty acid amides, aliphatic ketones, fatty acid esters of a lower alcohol, fatty acid esters of a polyvalent alcohol, fatty acid esters of a polyglycol, aliphatic alcohols, polyvalent alcohols, polyglycols, polyglyceroles, metal soaps, modified silicones, and a mixture thereof. Preferably, the fatty acid esters and the hydrocarbon resins, etc. are enumerated.

In the case of selecting the lubricant, it is required that there is selected a lubricant having a melting point lower than those depending upon a melting point of the lactone resin or a variety of the aliphatic polyester resins. For example, there is selected an amide of a fatty acid having a melting point of not more than 160°C in consideration of a melting point of the synthetic aliphatic polyester resins.

Formulation amount ranges in 0.05-5 parts by weight based on 100 parts by weight of the polyester resin composition in which 1-200 parts by weight of the polycaprolactone is formulated with respect to 100 parts by weight of the above-described aliphatic polyester resin. In the case of exceeding 5 parts by weight, physical properties also lower.

As the amide of a fatty acid, although there can be employed publicly-known ones, since uses of products extend over a wide range, there are preferred amide of ethylenebis stearic acid, amide of stearic acid, amide of oleic acid, and amide of erucic acid which are high in safeness, and registered in FDA (USA Food and Drug Administration) from a viewpoint of preventing environmental pollution.

The fatty acid amide is added in the formulating proportion of 0.2-5 parts by weight, and more desirably 0.3-1.5 part by weight based on 100 parts by weight of the amount of the resins which are primary polymer components.

In the case of not more than 0.2 part by weight, an effect for preventing a blocking is small and, in the case of more than 5 part by weight, slipping of a laminate becomes too large, resulting in that a printing applicability and a pressure sensitive adhesive property become worse.

As the liquid-state lubricants, there is employed a lubricant having a melting point of not more than 70°C, and preferably, a liquid-state one at ordinary temperatures.

As the liquid-state lubricants, there are enumerated paraffin waxes; stearyl alcohol; stearic acid; and stearates such as butyl stearate, esters of stearic acid such as a monoglyceride of stearic acid, pentaerythritol tetrastearate, and stearyl stearate, etc.

The liquid paraffins, which are most preferred as the liquid-state lubricant, is very safe because an acute oral toxicity (rat) LD50 is 5 g/kg, and it is approved as an additive for foods in Food Hygiene Law.

In the case of mixing liquid-state lubricant, when a total system containing a resin has a higher melting point than the above-described respective solid lubricants, although the solid lubricants can be practically employed, there is desirably employed a liquid paraffin which is liquid at room temperatures, and it is best in working. The liquid paraffins, which are most preferred as the liquid-state lubricant, is very safe because an acute oral toxicity (rat) LD50 is 5 g/kg, and since it is approved as an additive for foods in Food Hygiene Law, it is a very appropriate material in view of preventing environmental pollution in the case of dumping molded articles of resins.

As a commercially supplied product, there can be enumerated Rikestar-EW-100 (manufactured by Riken vitamin, Co.) and Hoechst Wax OP (manufactured by Hoechst, AG), etc.

As the above-described amide of a fatty acid, there are enumerated monoamides of a saturated fatty acid such as an amide of lauric acid, an amide of palmitic acid, an aide of a palmitic acid having a high purity, an aide of stearic acid, a refined amide of stearic acid, an aide of a stearic acid having a high purity, an amide of behenic acid, an amide of behenic acid having a high purity, an amide of hydroxystearic acid, and an amide of oleic acid; bisamides of a saturated fatty acid such as bisamide of methylenebis stearic acid, bisamide of ethylenebis capric acid, bisamide of ethylenebis lauric acid, bisamide of ethylenebis stearic acid, bisamide of ethylenebis isostearic acid, bisamide of ethylenebis hydroxystearic acid, bisamide of ethylenebis behenic acid, bisamide of hexamethylenebis stearic acid, bisamide of hexamethylenebis behenic acid, bisamide of hexamethylenebis hydroxystearic acid, bisamide of N,N'-distearyladipic acid, and bisamide of N,N'-distearylsebasic acid; monoamides of an unsaturated fatty acid such as monoamide of oleic acid, monoamide of a refined oleic acid, and monoamide of licinoleic acid; bisamides of an unsaturated fatty acid such as bisamide of ethylenebis oleic acid, bisamide of hexamethylenebis oleic acid, bisamide of N,N'-dioleiladipic acid, bisamide of N,N'-dioleilsebasic acid; substituted amides such as amide of N-stearylstearic acid, amide of N-oleiloleic acid, amide of N-stearyloleic acid, amide of N-oleilstearic acid, amide of N-stearyleruic acid, and amide of N-oleilpalmitic acid; amide of methylol stearic acid; methylol amides such as amide of methylol behenic acid; aromatic bisamides such as bisamide of N,N-distearyl isophthalic acid and bisamide of methaxylilene bistearylic acid.

These are a solid lubricant at ordinary temperatures.

(Anti-static agent)

In the case that a biodegradable film is employed for articles in which electro static charge becomes problematic, there are employed anti-static agents such as carbon, metal powder, an electroconductive resin which are an electroconductive material, and a nonionic-, cationic-, and anionic-based anti-static agents, which are publicly-known.

(Accelerators for photo-degradation)

As the accelerators for photo-degradation, for example, there are exemplified benzoins, benzoin alkyl ethers; benzophenones and derivatives thereof such as benzophenone, and 4,4'-bis(dimethylamino)benzophenone; acetophenones and derivatives thereof such as acetophenone and α,α-diethoxyacetophenone; quinones; thioxanthones; a photo-exiting agent such as phthalocyanine, an anatase-type titanium dioxide, an ethylene-carbon monoxide copolymer, and a sensitivity accelerator of an aromatic ketone with metallic salts, etc. The accelerators for photo-degradation may be employed solely or in combination of two or more kinds.

(Accelerators for biodegradation)

As the accelerator for biodegradation, there are exemplified, for example, an organic acid such as an oxo acid (for example, an oxo acid having a carbon number of 2-6 or so such as glycolic acid, lactic acid, citric acid, tartaric acid, and malic acid), a saturated dicarboxylic acid (for example, a lower saturated dicarboxylic acid having a carbon number of 2-6 or so such as oxalic acid, malonic acid, succinic acid, succinic anhydride, and glutaric acid); a lower alkyl ester of the organic acids with an alcohol having a carbon number of 1-4 or so. A preferred accelerator for biodegradation includes citric acid, tartaric acid, and malic acid which are an organic acid having a carbon number of 2-6 or so, and an activated carbon prepared from coconut shells, etc. The accelerators for biodegradation are employed solely or in combination of two or more kinds.

Further, as the accelerators for biodegradation, there are included biodegradable enzyme, for example, hydrolysis enzymes such as lipase, cellulase, and estellase. The biodegradable enzyme can be employed by suspending or dispersing in a solvent.

It is to be noted that the accelerators for photo-degradation can be employed together with the accelerators for biodegradation.

(Fillers and extenders)

Further, in the biodegradable polyester resin composition of the present invention, so far as biodegradability of resin components is not obstructed, there can be added a variety of fillers, for example, inorganic additives (also called inorganic fillers) such as calcium carbonate, mica, calcium silicate, talc, finely-powdered silica (an anhydride), white carbon (a hydrate), asbesto, china clay (calcined), a mottled stone, a variety of titanium oxides, and glass fiber, and organic additives (also called organic fillers) such as particles of natural materials.

The biodegradability is further improved by the addition of the fillers and, moreover, since melt strength (viscosity) increases, a draw-down phenomenon can be prevented during molding while melting, and moldability is improved in vacuum molding, blow molding, and inflation molding, etc.

Addition amount of the fillers ranges in (5-50)/(95-50) by weight, preferably (10-45)/(90-55), more preferably (20-40)/(80-60), and most preferably (25-35)/(75-65) based on the total amount of the aliphatic polyester resin and the polycaprolactone. By representing "the weight ratio of (5-50)/(95-50) of fillers (inorganic additives)/(total amount of the aliphatic polyester resin and the polycaprolactone)" by 'part by weight', there can be approximately represented "5-100 parts by weight of the inorganic fillers based on 100 parts by weight of the total amount of the aliphatic polyester resin and the polycaprolactone".

Excessively large amount of the fillers causes a bleeding of powder in the resins and, excessively small amount of the fillers remarkably causes draw-down, necking, unevenness of thickness, and an eye mucus phenomenon.

Finely-powdered silica which is an inorganic additive may be a silica prepared by a dry method and even a silica prepared by hydrolysis at high temperatures in an oxygen-hydrogen flame by silicone tetrachloride, and particle diameter is preferably not more than 50 nm.

As the organic additives, there are enumerated finely-powdered particles having a diameter of not more than 50 nm prepared from paper. Addition amount of the organic fillers is the same as in the case of the inorganic fillers.

As the extenders, there are enumerated glass balloons, etc.

Addition amount of the extenders is the same as in the case of the inorganic fillers.

(Method for kneading the additives for resins)

As the method for kneading the polycaprolactone, the aliphatic polyester resin, and the additives for resins, a usual method can be preferably employed and, specifically, pellets and powder of raw resins and small pieces of solid are mixed by dry blending with a Henshel mixer and a ribbon mixer and, then, kneaded by feeding into a melt mixer such as a single- or twin-screw extruder, a Banbury mixer, a kneader, and a mixing roll, etc. Further, even in the case that a liquid polycaprolactone is added, it can be kneaded by the same methods.

Subsequently, there are collectively described illustrations and possibility of utilization in industries concerning inherent items for the respective present inventions [I]-[XIV].

Hereinafter, the present invention [I] is illustrated.

The present invention [I] is a biodegradable polyester resin composition comprising 100 parts by weight of an aliphatic polyester resin and 1-200 parts by weight of a polycaprolactone, and a biodegradable polyester resin composition further containing inorganic additives in which the ratio of total amount of the aliphatic polyester resin and the polycaprolactone with respect to the inorganic additives is 95-50% by weight/5-50% by weight.

As the aliphatic polyester resin in the present invention, ones described in the above-described common items can be employed.

As the polycaprolactone in the present invention, ones described in the above-described common items can be employed.

As the inorganic additives in the present invention, ones described in the above-described common items can be employed.

The biodegradable polyester resin composition comprises the above-described aliphatic polyester resin, polycaprolactone, and inorganic additives and, it is kneaded by methods described in the above-described common items to be employed for molding.

Further, in the biodegradable polyester resin composition or molded article provided in the present invention, degradation ratio exceeds 20% after cultivation in a municipal drainage sludge for 4 weeks, and preferably 30%, which is regulated by JIS K6950 described hereinafter.

Still further, in the biodegradable polyester resin composition provided in the present invention can be employed as a film, and a molded article by vacuum molding/compression molding instead of a conventional polyolefin in wide uses. Particularly, it is preferably employed for uses of articles which are apt to be left in circumstances.

POSSIBILITY OF UTILIZATION IN INDUSTRIES FOR THE PRESENT INVENTION [I]

According to the present invention [I], there can be readily improved biodegradability in an aliphatic polyester resin in which biodegradability is relatively not high in itself or an aliphatic polyester resin having a high molecular weight in which a biodegradability becomes lower because of containing urethane bonds, whereby, it becomes possible to mold by vacuum molding, blow molding, and inflation molding, and it can be employed in various fields instead of a conventional polyolefin. Accordingly, the present invention is very large in industrial merits, from a viewpoint of environmental protection.

Hereinafter, the present invention [II] is illustrated.

The biodegradable film (hereinafter, occasionally abbreviated as merely a film) and the throw-away glove of the present invention are obtained by molding the biodegradable polyester resin composition [I] of the present invention.

In order to give a flexibility to the film, to strengthen bulkiness, to elevate tear strength and, or to elevate an adhesive strength, so far as biodegradability of the resin components is not obstructed, there can be optionally mixed the above-described other biodegradable resins and/or a variety of additives for resins.

As a method for molding the composition into a biodegradable film, there can be employed a variety of molding methods such as a T-die extruding, a T-die casting, a blow molding, inflation molding, and calendar molding molding.

Thickness of the film is 10-100 μm, preferably 20-50 μm, particularly preferably 30-40 μm,

It is possible to give a pattern such as an embossing finish at least one surface of the glove. The embossing finish at an outer surface gives an effect for preventing a slip in the case of handling articles using the glove, and when the films and the gloves are put one upon another, those are readily taken out one by one piece. Further, it is possible to readily wear the glove by the embossing finish at an inner surface and, since the films do not adhere to the skin also during working, a feel in use is excellent.

Accordingly, it is possible to form the embossing finish at inner and outer surface and, size of the embossing finish at inner and outer surface can be changed according to purposes.

It is possible to not form the embossing finish at adhesive portions in consideration of an adhesive property of the film.

The embossing finish can be given by passing through the film between a chilling roll and a compressing roll which have an appropriate roughness during the preparation of the film. Kinds of the embossing finish may be even anyone of a tortoise shell pattern, a lattice pattern, a silky pattern, a diamond pattern, an iridescent pattern, a hemp pattern, a satin pattern, and a splash pattern, etc. Depth of the embossing finish is 2-300 μm.

In the film, many openings having 1 μm-10 mm can be also partially cut.

The glove having a variety of shapes and size can be manufactured.

Shape of the glove may be a 5-fingers type one, a mitten type one in which a thumb is separated from other 4 fingers, and even a bag-shape one in which finger portions are not formed.

The film is cut into a fixed size and shape. Cut film is not particularly limited if it is a size being capable of punting the glove shape, and it may be rectangular, and also a shape roughly-cut into a glove shape. In the case that two layers of the films are put one upon another, one layer of cut film may be even folded, and two layers of cut films are put one upon another.

The films put one upon another are adhered to form a glove shape. An adhered portion is an outside enveloping portion of a hand except an inserting portion.

For adhesion, although an adhesive may be even employed, it is preferably heat-sealed. Temperature for heat-sealing is a temperature higher than a melting point of the resins which is not more than 250°C.

Width in heat-sealing is not more than 1 mm, preferably not more than 0.7 mm, more preferably not more than 0.5 mm, and particularly preferably not more than 0.2 mm. If the width in heat-sealing can be controlled narrower, since an extra portion is narrower, fine work can be conveniently made.

The films put one upon another are cut into a glove shape after adhesion, an extra portion of the film is removed. Although cutting may be conducted using a molding die equipped with edges after heat-sealing, it is preferred to cut together with heat-sealing.

In the case that one layer of the cut film is sealed by folding to form a glove shape, a folding portion is not required to seal and cut. In the case that the inserting portion is sealed, it may be cut when cutting or employing.

Further, in order to obtain a plurality of rectangular-shaped gloves in series, two layers of long film are put one upon another in surface and back surface to heat-seal, whereby, a rectangular-shaped glove is obtained by heat-sealing alone because of the absence of an unnecessary portion. Each of the rectangular-shaped glove may be obtained such as being capable of cutting off by perforation. In the case, each finger can be separated immediately before the use by cutting off perforation formed also among fingers. By such the method, since there are obtained continuously connected gloves which are rectangular-shaped as a whole, storage and taking off become easy.

In the biodegradable throw-away glove, optionally, a moisture-absorbing sheet layer (for example, a nonwoven fabric) can be inserted between two layers of the glove inside and outside. As a material for the moisture-absorbing sheet layer, there can be employed even the above-described composition composed of the aliphatic polyester and the caprolactone to be employed in the present invention, and there can be also employed the above-described other biodegradable resins.

POSSIBILITY OF UTILIZATION IN INDUSTRIES FOR THE PRESENT INVENTION [II]

The biodegradable throw-away glove provided according to the present invention [II] can be employed in wide-ranging uses as a substitute for a conventional biodegradable throw-away glove made from a polyolefin. Particularly, it is preferably employed in uses for an article which is apt to be left alone in circumstances, uses in which a moisture absorbing property is required, and uses in which dust is disliked, etc.

The biodegradable throw-away glove provided according to the present invention [II] is readily fitted hand, in which the hand does not become stuffy, which is not apt to cause spoiling of the hand, in which slipping by sweat is not apt to be caused in the glove and, in which dust is not apt to be drawn. Accordingly, it can be utilized for handling precision instruments, precision electric apparatuses, semiconductors, medicines and substances, for industries such as manufacturing, for medical cares, for gardening, for processing and handling foods, for housekeeping, and, further, in hotels, banquet halls, marriage ceremony halls, spots for coating, and laboratories, etc.

According to the present invention [II], there can be readily obtained the throw-away glove having an excellent biodegradability and a moisture-absorbing property, and it can be utilized in a variety of uses such as household, hospitals, schools, laboratories, working spots such as coating, manufacturing and processing plants, and places for handling foods.

Hereinafter, the present invention [III] is illustrated.

The biodegradable stake of the present invention is obtained by molding the biodegradable polyester resin composition [I] of the present invention.

In order to elevate mechanical physical properties and processing physical properties in the biodegradable stake of the present invention, so far as biodegradability of the resin components is not obstructed, there can be optionally mixed the above-described other biodegradable resins and/or a variety of additives for resins.

The composition is molded into a stake. As shapes for the stake, there are enumerated a square shape, a round rod shape, a wedge shape, a T-shape, a dog spike shape, a spike shape, and a pin shape, etc. In the stake, a pointed head of the stake which is struck into soil may be sharpened, and a hollowed cylindrical (tubular) shape without being sharpened, etc.

At least one spectacled holes are fitted at a portion of the stake, through which a rope is passed for pulling a trunk and branches, etc. of plants. Projections can be fitted at a middle portion of an outside of the stake, by which pulling out is prevented and, in the case of a T-shaped stake, there can be fitted projections for pressing at a ground surface side of an upper edge.

As the fertilizers and/or chemicals to be contained at an inside of the stake, the following ones are exemplified.

As the fertilizers, there are enumerated natural-based fertilizers such as dung of domestic animals, fish meals, oil lees, composts, and ashes of plants, nitrogen-based fertilizers such as ammonium sulphate and urea, phosphorus-based fertilizers such as ammonium phosphate and superphosphate, potassium-based fertilizers such as potassium chloride, potassium sulphate, and potassium nitrate; compound fertilizers thereof; mixed fertilizers containing chemicals described below, etc.

As the chemicals, there can be added agricultural chemicals such as herbicides, bactericides, and insecticides within a range in which biodegradability of the stake is not obstructed over a fixed time of period in addition to nutritive substances, growth controlling substances, mineral substances, pH controlling agents, and soil improving agents, etc.

Shapes of the fertilizers and/or chemicals to be contained in the stake may be powder, particles, jelly-like, liquid, and a mixture thereof, or degradable or water soluble capsules in which those are filled up, and even ones wrapped by a biodegradable resin film.

As a method for allowing to contain the fertilizers and/or chemicals at an inside of the stake, the following methods are enumerated.

(a) A method in which cavities are formed at inside of the stake to keep the fertilizers and/or chemicals and, so that the fertilizers and/or chemicals are supplied into soil by dissolving according to degradation or dissolving of the biodegradable stake with the lapse of time.

(b) A method in which there are arranged at least one small holes, preferably many holes at an lower and side portion or a bottom portion of the stake in the above-described (a), the fertilizers and/or chemicals are stored in the cavities, and the fertilizers and/or chemicals are supplied into soil from the small holes with the lapse of time. The fertilizers and/or chemicals may be replenished again in the cavities by extending a durable period of the stake.

(c) A method in which the stake is tubular in the above-described (b), the fertilizers and/or chemicals are stored at an inside of tube, and the fertilizers and/or chemicals are supplied into soil from an opened bottom of the tube with the lapse of time.

In the above-described (a)-(c), the fertilizers are filled up from a vessel-like opened edge of the stake. Of course, there may be fitted a mouth for filling up at a side portion or a bottom portion.

The opened edge can be capped or plugged, etc. in order to prevent scattering of contents. As materials of the cap and plug, there can be employed the same or different kind of the biodegradable resin as in the stake.

After driving the stake, the fertilizers and/or chemicals may be even filled up from a vessel-like opened edge, or the fertilizers and/or chemicals may be also replenished again.

(d) A method in which a number of minute holes are arranged, and the fertilizers and/or chemicals are stored (in the case, powder may be filled, or liquid may be impregnated and, further, those may be filled after drying) in the minute holes.

(e) A method in which the fertilizers and/or chemicals are kneaded together with the above-described biodegradable resin to be employed in the present invention, and molded into a stake. The stake is driven into ground as it is.

(f) A method in which the biodegradable resin is molded into a case-shaped thinly-walled stake, and a stake-shaped product of the fertilizers and/or chemicals obtained in the (e) is stored in the stake. In the case, a stake is driven into ground, in which the fertilizers and/or chemicals are stored, and the fertilizers and/or chemicals are supplied into soil with the lapse of time by degradation or dissolving of the case made from the biodegradable resin.

It is to be noted that those may be filled up in a particle or powder shape without molding the fertilizers and/or chemicals for storing in the case-shaped stake into a stake shape, and it corresponds to the above-described (a) or (b).

As methods for molding the stake, there can be employed a variety of molding methods such as injection molding, extrusion molding, transfer molding, and compression molding.

Size of the stake is not particularly limited, and there can be employed one having the length of several centimeters to several meters and diameter of several millimeters to several centimeters.

In the case of driving into ground the stake, although a large-sized stake is driven by striking with a hammer, etc., a small-sized stake or, in the case of soft ground, can be also driven by hands. In a stake to which inorganic fillers are added, strength of the stake is improved, and it can become readily driven by a hammer even though thickness is thin.

POSSIBILITY OF UTILIZATION IN INDUSTRIES FOR THE PRESENT INVENTION [III]

The biodegradable stake of the present invention [III] can be obtained as a stake in which a biodegradability is improved by using an aliphatic polyester resin. Further, in the biodegradable stake in which the fertilizers and/or chemicals are filled up at an inside thereof, the fertilizers and/or chemicals are supplied from the stake, whereby, working time for scattering the fertilizers can be saved, and utilization rate of the fertilizers and/or chemicals is improved. After use, since the stake is biologically decomposed, it may be employed at a plain surface and also a sloped surface for vegetation, civil engineering, constructing, and constructing in water, etc. Further, in the case of becoming unnecessary, it is decomposed in natural circumstances, and it can be employed for gardening in household, orchards, field plantation, afforestation, water fields, planting in water, etc. by mixing fertilizers and/or chemicals in the stake.

Hereinafter, the present invention [IV] is illustrated.

The biodegradable material for protecting plants of the present invention is obtained by molding the biodegradable polyester resin composition [I] of the present invention.

Further, in order to elevate mechanical physical properties and processing physical properties in the biodegradable material for protecting plants of the present invention which is prepared from a net, so far as biodegradability of the resin components is not obstructed, there can be optionally mixed the above-described other biodegradable resins and/or a variety of additives for resins.

In the material for protecting plants, a repellent can be added in order to keep away a damage eaten by animals.

As the repellent, there are enumerated organic compounds such as a terpene-based compound, cycloheximide, and nonanoylvanilyl amide, and inorganic compounds such as copper powder and sulphur powder.

The repellent is formulated in 0.001-1 part by weight based on 100 parts by weight of the total amount of the aliphatic polyester resin and the polycaprolactone.

The composition is kneaded and molded into the material for protecting plants by a molding machine. As a shape of the material for protecting plants, there are enumerated a net, a sheet, a meshsheet, grids, a rod, a pipe, and a tube, etc. In the present invention, those are generically named a material for protecting plants.

The net is a product fixed by combining filaments lengthwise and laterally. In order to fix by the combination of warps and wefts, weaving, adhesion, and fusion are conducted. In the net, thickness, width, and height are the same as in the above-described sheet. Thickness of the filaments or strands constructing the net is preferably 100-10,000 denier depending upon kinds of plants, animals by which damage is given, and strength of wind, etc. Also, mesh in the net is 0.1-100 mm. The net may be directly wound around a trunk of trees, and it can be also employed like a fence by surrounding and fixing supports around the trees. In the sheet, thickness is 0.1mm to 10 mm, and preferably 0.5 to 5mm. Height and width are not particularly limited, and it is adjusted by cutting off from a wide or long size sheet according to the size of plants, or it may be also adjusted within a desired width and length by using a plurality of pieces which are molded according to a settled standard. The sheet can be reinforced by forming lattice-like irregularity on the surface. Use methods of the sheet are the same as in the net.

The meshsheet is prepared by forming openings in the above-described sheet, or by molding as a sheet having openings. Shapes of the openings may be anyone of a round, square, and tortoise shell shape, etc. Thickness, length, and width are the same as in the above-described sheet. In a longitudinal and lateral materials constructing the meshsheet, thickness is 0.1-10 mm, and aperture is 0.1-10 mm. Use methods are the same as in the sheet.

The grid is an article which has a paling-shape or a fence-shape as a whole shape and, in which the longitudinal and lateral materials are rod-shaped or plate-shaped, and it is employed in the case that strength is required. Thickness or a maximum width of the materials is 1-100 mm, and aperture is 10-500 mm. The longitudinal and lateral materials are inlaid, adhered or fused at intersection. The grid can be prepared by molding in advance into a desired shape, by combining a molded unit piece having a fixed shape, or by adhesion or fusion of intersection in the longitudinal and lateral materials after molding.

The grid can be employed for covering plants as a whole and, for enclosing surroundings of fruit trees, etc.

The rod or pipe keeps away invasion of animals by piercing it into the ground of surroundings of the plants like a fence and, at the same time, it has also a role of a support which defends inclination or tumbling of plants.

As methods for molding the material for protecting plants, there can be employed a variety of molding methods such as injection molding, extrusion molding, transfer molding, compression molding, and blow molding.

For example, as methods for molding the net, there may be even a knot-fixing netting method by which a net for filling oranges is prepared and also a square knot-fixing netting method, or even a method in which warps and wefts are extruded from respective molding dies and those are thermally fused. The warps and wefts may be thermally fused after being knitted. Further, the warps and wefts for forming the net may be stretched.

As methods for molding the sheet, there are enumerated a T-die extruding, blow molding, and calendar molding, etc.

As other methods for molding the meshsheet and grid, there can be employed a method such as an injection molding method for a plastics hamper, basket, a separator for golf clubs, a net for planting, and a fence, etc.

Further, those may be prepared by coating a solution or melt of the composition composed of the above-described polyester and the polycaprolactone on a net made from cellulosic fibers, etc.

As size of the material for protecting plants, for example, there are enumerated a long size one having width of 0.3-3 m and ones cut in a free size thereof, etc.

Plants for applying the material for protecting plants are not particularly limited, it may be applied to anyone of trees, grasses, and vegetables, etc.

The material for protecting plants can be employed by winding a trunk of a tree, covering over surroundings of specified portions in roots, buds, leaves, flowers, and fruits, etc., covering plants like a dome, and enclosing plants like a fence.

In the material for protecting plants, a thinly-made one can be employed for controlling atmospheric temperatures and sunlight, etc.

POSSIBILITY OF UTILIZATION IN INDUSTRIES FOR THE PRESENT INVENTION [IV]

According to the present invention [IV], there can be readily obtained the material for protecting plants in which biodegradability is improved by employing the aliphatic polyester resin. The material for protecting plants of the present invention can be utilized for keeping away a damage of plants by animals, etc.

Hereinafter, the present invention [V] is illustrated.

The present invention relates to a biodegradable tape which comprises molding a lactone resin (a) alone or a lactone-contained resin (c) composed of a lactone resin (a) and other biodegradable resins (b), or a lactone-contained resin composition (e) composed of the lactone-contained resin (c) and an additive for resins (d) and, particularly, it relates to a biodegradable tape in which the lactone resin (a) is a polycaprolactone, and the other biodegradable resins (b) is an aliphatic polyester.

Composition ratio is 10-60% by weight of the lactone resin (a) and 90-40% by weight (total of the lactone resin and the aliphatic polyester is 100% by weight) of the other biodegradable resins (b) and, particularly, there is preferred a biodegradable tape which comprises 100 parts by weight of the total of the lactone resin and the aliphatic polyester and 10-50 parts by weight of talc.

The aliphatic polyester resin which is a synthetic polymer is a polyester resin other than the lactone resin, and it is an aliphatic polyester resin obtained by a condensation-polymerization system.

As a commercially supplied polyester from a diol/aliphatic dicarboxylic acid, there are enumerated a biodegradable polyester resin such as a polyethylene succinate, a polybutylene succinate, and a polybutylene succinate/adipate, for example, Bionolle # 1000 series, # 3000 series, and # 6000 series (manufactured by Showa Kobunshi, Ltd.), etc. and, as an aliphatic polyester from a hydroxycarboxylic acid, there are enumerated, for example, ECOPLA (manufactured by Kirgil, Ltd.) and Lacty (manufactured by Shimadzu Seisakusyo, Ltd.), etc.

In the case of employing the polycaprolactone and a polylactic acid, formulation ratio by weight is 99/1-1/99, and preferably 90/10-60/40.

In the case of employing the polycaprolactone and the polyester from a diol/aliphatic dicarboxylic acid, those are formulated in range of the weight ratio of 80/20-10/90, and preferably 50/50-20/80.

In the case of employing by mixing three kinds of biodegradable polymers of the polylactic acid, the polyester from a diol/aliphatic dicarboxylic, acid the polycaprolactone, the weight ratio of the polyester from a diol/aliphatic dicarboxylic acid with respect to the polycaprolactone ranges in 20/80-80/20, and the weight ratio of the polylactic acid with respect to the polycaprolactone ranges in 20/80-80/20.

In the present invention, there are employed the biodegradable cellulose esters, starch, and additives for resins which are described in the common items.

Into the above-described lactone resin and lactone resin composition, there can be optionally added resin components other than the lactone resin and aliphatic polyester resin, for example, an ethylene/vinyl acetate copolymer (EVA) and other polyolefins, a hydrogenated styrene-butadiene rubber, a polyurethane, a polyamide, and a polyhydroxybutylate, etc.

As the ethylene/vinyl acetate copolymer, there is enumerated a copolymer having an ethylene content of 10-70% by weight and a vinyl acetate content of 30-90% by weight, and preferably a copolymer having an ethylene content of 20-40% by weight and a vinyl acetate content of 60-80% by weight. In the case that the vinyl acetate content is less than 30% by weight, extension at break becomes smaller and, in the case that the vinyl acetate content exceeds 90% by weight, an impact strength (Izod impact value) becomes smaller. A weight average molecular weight is preferably 50,000-500,000 or so. In the case of less than 50,000, strength at break and yield strength lower and, extension at break also becomes smaller. Further, in the case of exceeding 500,000, strength at break lowers.

As addition amount, the EVA is 5-70 parts by weight, and preferably 10-30 parts by weight based on 100 parts by weight of the lactone resin or 100 parts by weight of total of the lactone resin and the other biodegradable resins. In the case that the EVA is less than 5 parts by weight, extension at break and impact strength cannot be sufficiently obtained and, in the case that the EVA exceeds 70 parts by weight, transparency lowers in the composition. and strength also largely lowers. As a commercially supplied EVA, there are enumerated Evaslene 250, 310P, and 450P (manufactured by Dainippon Ink, Ltd.), etc. In the case that the present invention is applied to the biodegradable tape, the addition of the EVA preferably increases (excellent in a shrinkage property at a low temperature) a shrinkage ratio at a low temperature.

Further, fillers such as talc and calcium carbonate are mixed in a ratio of 10-50 parts by weight of the fillers, for example, talc based on 100 parts by weight of total of the lactone resin, for example, a polycaprolactone and the aliphatic polyester resin, for example, a polybutylene succinate.

In the resin composition, melt flow index (MI) is preferably 0.5-20 g/10 minutes, particularly, 1-5 g/10 minutes in a measure at 190°C and the load of 2160 g.

The above-described polycaprolactone and aliphatic polyester resin are employed by mixing.

Formulating weight ratio of the polycaprolactone with respect to the aliphatic polyester resin is 70-5% by weight of the polycaprolactone and 30-95% by weight of the aliphatic polyester resin, preferably not more than 60% by weight, particularly preferably 40-10% by weight of the polycaprolactone.

In the case that the aliphatic polyester resin is formulated in an amount of exceeding 90% by weight, biodegradation delays and, contrarily, in less than 30% by weight, for example, in the case of being molded into the tape, heat resistance becomes poor.

When the formulating proportion of the polycaprolactone exceeds the above-described proportion, mechanical physical properties becomes insufficient at a high temperature in the tape.

The biodegradable tape of the present invention is obtained by molding the lactone-contained resin (c) or the lactone-contained resin composition (e) into a tape-state using a T-die type extruder, by cutting an obtained film into a tape-state, by molding textiles or strands into a tape-state by weaving or knitting those, and by molding into a tape-state by fusion of textiles arranged.

The tape may be laminated with other biodegradable resins-made materials, and may be also reinforced by fibers.

The biodegradable tape may be monoaxially- or biaxially-stretched, and projections may be formed at one or both sides to give an effect for preventing a slip. A pressure sensitive adhesive layer and a releasing agent layer and/or heat-sealing layer can be also formed at one surface or both surfaces.

The tape of the present invention is employed as a wrapping-packing tape and a string, a band equipped with parts such as a stopper, etc., a pressure sensitive adhesive tape equipped with a pressure sensitive adhesive layer and a releasing agent layer over the surface, a heat sealing tape equipped with a heat sealing agent over the surface, a clearance tape laminated with other foam, and, a tape for a separator, a covering tape, a tape for preventing tearing of wrapping materials, a displaying tape, and a side tape for diapers and menstrual materials, etc.

POSSIBILITY OF UTILIZATION IN INDUSTRIES FOR THE PRESENT INVENTION [V]

According to the present invention [V], there can be a biodegradable tape which is well-balanced in moldability, physical properties in uses, and degradability after dumping, etc., and which can be employed as a wrapping-packing tape and a pressure sensitive adhesive tape.

Hereinafter, the present invention [V] is illustrated.

The present invention [V] is a base material for a card prepared from a biodegradable resin composition comprising 85-5% by weight of a polylactic acid-based resin (A), 5-50% by weight of an aliphatic polyester resin (B), and 10-45% by weight of a polycaprolactone-based resin (C) (total of the (A)+(B)+(C) is 100% by weight) and, further 5-300 parts by weight of fillers (D).

By the composition, there is obtained the base material for a card having stiffness, durability, flexural resistance, water resistance, chemical resistance, a water-proofing property, surface smoothness, glossiness, moldability, and heat resistance of not less than 100°C of blocking temperature in the resin alone, and a card obtained can keep mechanical properties such as durability, stiffness, moldability, mechanical strength, hardness, impact strength, dimensional stability, and flexural resistance, and which is excellent in printing ability of an information recording layer containing magnetic components and thermally-sensitive components, whereby, which shows gate properties for mechanically reading-writing in a read-write machine. Further, even though it is left alone in natural circumstances after dumping, it can be sufficiently and naturally decomposed by an improved biodegradability.

The polylactic acid-based resin (A) to be employed in the present invention is a copolymer of a polylactic acid or lactic acid with other aliphatic hydroxycarboxylic acid, and there can be employed ones described in the common items.

The polycaprolactone-based resin (C) to be employed in the present invention is a homopolymer of a polycaprolactone or a copolymer of the polycaprolactone with other aliphatic hydroxycarboxylic acid, ones described in the above-described common items can be employed.

Further, as the copolymer of the caprolactone, there may be a readily biodegradable copolymer which is composed of (a) an ε-caprolactone structural unit and (b) an oxetane structural unit, or even a readily biodegradable copolymer which is composed of (a) an ε-caprolactone structural unit and (b) a dimethyltrimethylene carbonate structural unit, which are disclosed in JP-A-07304835 Official Gazette and satisfies the above-described composition and molecular weight.

The aliphatic polyester resin (B) to be employed in the present invention is a polyester resin obtained by a polycondensation of a bifunctional aliphatic alcohol, preferably an α,ω-bifunctional aliphatic alcohol with a bifunctional aliphatic carboxylic acid, preferably an α,ω-bifunctional aliphatic carboxylic acid, and there can be employed the ones described in the common items.

As composition ratio of the resins in the present invention, the polylactic acid-based resin (A) is 85-5% by weight, the aliphatic polyester resin (B) is 5-50% by weight, and the polycaprolactone-based resin (C) is 10-45% by weight, preferably the polylactic acid-based resin (A) is 70-20% by weight, the aliphatic polyester resin (B) is 10-40% by weight, and the polycaprolactone-based resin (C) is 20-40% by weight, particularly preferably the polylactic acid-based resin (A) is 60-40% by weight, the aliphatic polyester resin (B) is 15-25% by weight, and the polycaprolactone-based resin (C) is 25-35% by weight.

Particularly, by adjusting to the above-described composition, hardness increases in the card without decline of biodegradability, and dimensional stability increases, resulting in that a printing ability elevates in a recording layer and, particularly, a printing ability elevates in magnetic components which is described hereinafter.

In the case that the polylactic acid-based resin (A) exceeds 85% by weight, the resin becomes too hard and, in the case of less than 5% by weight, stiffness cannot be obtained. In the case that the polycaprolactone-based resin (C) exceeds 45% by weight, heat resistance lowers, and blocking is apt to be caused and, in the case of less than 10% by weight, ductility cannot be obtained. Ratio of the aliphatic polyester resin (B), which is employed as a compatibilizing agent, is 5-50% by weight. In the case that the aliphatic polyester resin (B) exceeds 50% by weight, there become not well-balanced biodegradability, stiffness, ductility, and heat resistance and, in the case of less than 5% by weight, a compatibility becomes poor between the polylactic acid-based resin (A) and the polycaprolactone-based resin (C).

As the fillers (D) to be employed in the present invention, there can be employed the ones described in the common items.

Preferably, there are exemplified calcium carbonate, mica, calcium silicate, a White Carbon, finely-powdered silica, asbesto, china clay (calcined), glass fibers, and a mixture thereof. In the case that the fillers are fiber-state, flexural strength elevates at a direction of extension.

Ratio of the fillers (D) is 5-300 parts by weight, preferably 10-200 parts by weight, and more preferably 30-150 parts by weight based on 100 parts by weight of the total the polylactic acid-based resin (A), the aliphatic polyester resin (B), and the polycaprolactone-based resin (C).

Further, in the above-described composition, there can be optionally added a variety of additives for resins in a range in which those do not decrease properties of the resin. For example, there can be added 0.1-50 parts by weight of plasticizers, 0.05-3 parts by weight of agents for preventing discoloration, 0.05-3 parts by weight of antioxidants, 0.05-0.5 part by weight of lubricants, and other organic pigments and inorganic pigments based on 100 parts by weight of the resin components. As the inorganic pigments, titanium oxide, etc. are exemplified.

Hereinafter, the card of the present invention is illustrated using the drawings in detail. Figure VI-1 shows a cross-sectional view of the card 1 of the present invention, Figures VI-2 and VI-3 show a cross-sectional view of the cards by other examples of the present invention.

In the card 1 of the present invention shown in the Figure VI-1, the above-described resin composition is employed as a primary component for a base material 2 for the card, and resin components constructing those have complete biodegradability. It is to be noted that polyesters are classified in an aliphatic group in view of the structure, and it is already known (Story of a biodegradable resin, Japan Standard Association, pages 59-66, 1991) that the aliphatic polyester resin in the present invention has biodegradability.

By the use of the resin composition regulated in the present invention, the base material 2 for the card has the identical properties to those of conventional materials such as polyesters and vinyl chloride resins in stiffness, moldability, mechanical strength, hardness, impact strength, dimensional stability, flexural resistance, surface smoothness, glossiness, water resistance, chemical resistance, and a water-proofing property.

Further, by biaxially-stretching molding the resin composition in the present invention, there are improved properties such as stiffness, moldability, mechanical strength, impact strength, dimensional stability, and flexural resistance, etc. in the sheet-state base material 2 for a card obtained.

The base material 2 for a card of the present invention is prepared by molding the thermoplastic resin composition having biodegradability obtained as described above into a sheet-state article through a publicly-known molding method, and by biaxially-stretching to finish, followed by calendaring the article. It is to be noted that the base material 2 for a card, in addition to a single layered construction, may prepare sheets 12 and 13, respectively, which are composed of an identical material or resin materials having different properties, and then, multi-layers the base material for a card such as the card 11 shown in Figure VI-3.

To the card obtained as described above, there can be applied the same printing-finishing method as in the case of conventional paper and plastics-made card. Visual information-design portion 3 such as letters and pictures are printed on the base material 2 for a card by an offset-printing, screen-printing, and gravure-printing method, etc., and the card is prepared by molding into a card size using a punching machine.

Further, in the card of the present invention, there can be formed an information recording layer such as a magnetic recording layer 4 shown in the Figure VI-1 and a thermally-sensitive recording layer 5 shown in the Figure VI-2. The magnetic recording layer 4 and the thermally-sensitive recording layer 5 can be also formed on an identical same card. It is to be noted that the magnetic recording layer 4 is formed by a method in which there is coated a coating liquid in which a magnetic recording material is dispersed in a binder, or a method in which there is laminated a sheet having the magnetic recording layer, etc. Likewise, the thermally-sensitive recording layer 5 can be formed by coating a coating liquid composed of a thermally-sensitive material, for example, a thermally-sensitive leuco dye and a thermally-sensitive diazo dye, etc., or by a metallic thin layer having a low melting point such as tin and aluminum.

By the use of a composition of the above-described biodegradable resin as in the present invention, there can be improved a printing formability of the information recording layer, particularly, the magnetic recording layer.

Biodegradability of a composition composed of the resin alone constructing the card provided in the present invention exceeds 20%, preferably 30%, and mre preferably 60% which is biodegradability after cultivation for 4 weeks in a municipal drainage sludge regulated in JIS K6950 described hereinafter.

Further, the biodegradable resin composition provided in the present invention can be employed in a wide range of uses as a substitute for a conventional polyolefin. Particularly, it is preferably employed in uses of articles which are apt to be left alone in circumstances.

POSSIBILITY OF UTILIZATION IN INDUSTRIES FOR THE PRESENT INVENTION [VI]

As mentioned hereinabove, the card of the present invention improves compatibility between the polylactic acid-based resin (A) and the polycaprolactone-based resin (C) by employing the aliphatic polyester resin (B) as a compatibilizing agent, and the composition composed of the resin alone is excellent in biodegradability, stiffness, ductility, and heat resistance of a blocking temperature of not less than 100°C. By adding fillers to the resins, there can be obtained the card which is excellent in mechanical properties such as stiffness, moldability, mechanical strength, hardness, impact strength, dimensional stability, and flexural resistance, and which has a gate property capable of being employed in a mechanical read-write machine. Even though the card is left alone in natural circumstances without burning when being dumped, it can reduce the influence to an environment by dumping because of improved biodegradability by microorganisms.

Further, since it is excellent in mechanical properties, there can be reduced the thickness, that is, the use amount of the biodegradable resin to be employed, resulting in that costs can be saved. Still further, since it has the nearly same strength and resistance as in the case of employing conventional plastics, it can be sufficiently proof against the uses as throw-away cards.

Also, although the biodegradable resin to be employed for the cards is occasionally poorer in a physical property and moldability compared to the conventional resins, the physical property and moldability can be also improved by mixing additives and nondegradable plastics within a range in which the degradability is not lowered.

Hereinafter, the present invention [VII] is illustrated.

The biodegradable laminate of the present invention comprises a biodegradable resin layer (1) composed of an aliphatic polyester resin alone or a lactone resin and the aliphatic polyester resin and at least one of a sheet-like material (2) selected from a group consisting of papers, a pulp sheet, and a cellulose-based film.

Resin composition in the biodegradable resin layer (1) composed of an aliphatic polyester resin alone and the lactone resin is as follows in an example of a polycaprolactone.

In the case of employing a mixture of the polycaprolactone and the aliphatic polyester resin from a dial and an aliphatic dicarboxylic acid, it is formulated in a range of the weight ratio of the polycaprolactone with respect to the aliphatic polyester resin of 0/100-80/20, and preferably 0/100-50/50.

In the case of employing a mixture of the polycaprolactone and the polylactic acid, it is formulated in a range of the weight ratio of the polycaprolactone with respect to the aliphatic polyester resin of 0/100-60/40, and preferably 0/100-50/50.

In the case of employing a mixture composed of three kinds of biodegradable polymers which includes the polylactic acid, the aliphatic polyester resin from a diol and an aliphatic dicarboxylic acid, and the polycaprolactone, it is formulated in a range of the weight ratio of the aliphatic polyester resin from a dial and an aliphatic dicarboxylic acid with respect to the polycaprolactone of 20/80-80/20, and the weight ratio of the polylactic acid with respect to the polycaprolactone of 20/80-80/20.

In the case that the formulating amount of the aliphatic polyester resin is less than the above-described range, when the laminate is molded, it becomes occasionally insufficient in heat resistance.

A film made from the above-described biodegradable cellulose ester can be also employed as the sheet-like material (2) and even as the biodegradable resin layer (1).

The addition amount of the above-described starch is not particularly limited and, in order to effectively attain the purposes for the addition, it ranges in preferably 10-80 parts by weight, and particularly preferably 25-50 parts by weight based on 100 parts by weight of the aliphatic polyester resin alone or total amount of the lactone resin and the aliphatic polyester resin.

In the present invention, the above-described additives for resins can be mixed to the biodegradable resin.

As formulation amount of the above-described lubricants, the lubricants are 0.05-5 parts by weight, and preferably 0.1-3 parts by weight based on 100 parts by weight of the aliphatic polyester resin alone or total amount of the lactone resin and the aliphatic polyester resin. In the case that it is less than 0.05 part by weight, an effect is not sufficient and, in the case of exceeding 5 parts by weight, molten resins do not twine on a roll, and physical properties also lower.

As addition amount of the above-described plasticizers, it preferably ranges in 3-30 parts by weight, and more preferably 5-15 parts by weight based on 100 parts by weight of the aliphatic polyester resin alone or total amount of the lactone resin and the aliphatic polyester resin. In the case that it is less than 3 parts by weight, extension at break and impact strength become lower and, in the case of exceeding 30 parts by weight, strength at break and impact strength become unpreferably lower.

As addition amount of the above-described thermal stabilizers, it ranges in 0.5-10 parts by weight, and more preferably 0.5-5 parts by weight based on 100 parts by weight of the aliphatic polyester resin alone or total amount of the lactone resin and the aliphatic polyester resin. In the case that thermal stabilizers are employed in the range, impact strength (Dart impact value, or Izod impact value) elevates and, there is shown an effect that a dispersion becomes smaller in the extension at break, strength at break, and impact strength.

In the aliphatic polyester resin alone, a composition of the lactone resin with the aliphatic polyester resin, or a composition containing the above-described variety of additives, a crosslinking agent and a herbicide can be optionally mixed.

The above-described finely-powdered silica is thermally kneaded into the aliphatic polyester resin, or a mixture with the polycaprolactone, at that time, secondarily aggregated particles are loosened by a fairly high shear force, resulting in that an effect for preventing blocking is shown in the laminate which is a product.

The finely-powdered silica is added in a range of 0.1-3 parts by weight based on 100 parts by weight of the resins.

The polycaprolactone and the aliphatic polyester resin which are a primary polymer component are usually supplied in a shape of pellets or beads. When uniformly mixing the finely-powdered silica, etc. having an exceedingly low bulk density, surface of the pellets or beads must be wetted by all means. Liquid paraffin which is a wetting agent is added in a range of 0.1-3 parts by weight, preferably 0.2-0.7 parts by weight based on 100 parts by weight of total amount of the polycaprolactone and the aliphatic polyester resin. In the case of exceeding 3 parts by weight, an internal surface of a tumbler becomes sticky, resulting in that it becomes difficult to stably prepare and, in the case of being less than 0.1 part by weight, an effect is small.

Accelerators for biodegradation are also employed solely or in combination of two or more kinds.

Melt flow index in the resin or the resin composition for obtaining the biodegradable resin layer (1) to be employed in the present invention is 0.5-100 g/10 minutes, preferably 1-20 g/10 minutes, and particularly preferably 1-5 g/10 minutes.

The thickness of the biodegradable resin layer (1) is selected depending upon the purposes, and although it is not particularly limited, it is 0.1 $\mu$m-10 mm, preferably 1 $\mu$m-1 mm, and particularly preferably 10 $\mu$m-0.1 mm.

As the sheet-like material (2) to be employed in the present invention, if it can be decomposed under natural circumstances, it is not limited, and there are enumerated paper, a pulp-sheet, and a cellulose film, etc.

The biodegradable laminate of the present invention can be obtained by molding the aliphatic polyester-contained resin or the aliphatic polyester-contained resin composition into a film using a T-die type extruder, etc., and then by laminating the film obtained with paper, etc.

The film may be monoaxially or biaxially stretched.

Otherwise, it can be also prepared by coating a solution on paper, in which there are dissolved the aliphatic polyester-contained resin or the aliphatic polyester-contained resin composition in solvents.

Further, in order to construct the biodegradable laminate of the present invention, there may be laminated one layer of the biodegradable resin layer (1) and one layer of the sheet-like material (2), one layer of layer of the sheet-like material (2) between two layers of the biodegradable resin layer (1), one layer of the biodegradable resin layer (1) between two layers of the sheet-like material (2) and, or alternately laminated one layer of the biodegradable resin layer (1) and one layer of the sheet-like material (2) to form a plurality of layers.

The biodegradable laminate of the present invention is employed for general wrapping materials, compost bags, mulch films, paper-made trays, and cups (except foods), etc.

In the biodegradable laminate of the present invention, a water-proofing property and a heat-sealing property can be given by the biodegradable resin layer (1). Since the biodegradable resin layer (1) has an excellent biodegradability, it does not leave a shape within 1 year after leaving as it is in natural circumstances.

POSSIBILITY OF UTILIZATION IN INDUSTRIES FOR THE PRESENT INVENTION [VII]

According to the present invention [VII], there was able to be obtained the biodegradable laminate which is well-balanced among moldability and physical properties during molding, and biodegradability after dumping, etc.

Further, since paper is employed, raw materials are low in price compared to a case prepared by biodegradable resins as a whole.

Hereinafter, the present invention [VIII] is illustrated.

The biodegradable laminated film of the present invention comprises laminating at least the biodegradable resin layer (1) with the biodegradable resin layer (2) which is different from the biodegradable resin layer (1).

Accordingly, there is also included a multi-layers film in which there are alternately laminated a plurality of layers composed of the biodegradable resin layer (1) and the biodegradable resin layer (2). The biodegradable resin layer (1) and the biodegradable resin layer (2) may be arranged as an outside layer or an inside layer, respectively. As a preferred example, there is enumerated a multi-layers film in which the biodegradable resin layer (1) is laminated with the biodegradable resin layer (2) or a multi-layers film in which the biodegradable resin layer (1) is laminated between the biodegradable resin layers (2).

Further, the biodegradable laminated film of the present invention comprises laminating the biodegradable resin layer (2) which is different from the biodegradable resin layer (1) at one side of the biodegradable resin layer (1) and laminating the biodegradable resin layer (3) which is different from the biodegradable resin layer (1) and the biodegradable resin layer (2) at another side of the biodegradable resin layer (1).

Accordingly, there is also included a multi-layers film in which the biodegradable resin layer (1), the biodegradable resin layer (2), and the biodegradable resin layer (3) are alternately laminated in which neighboring layers are different from each other. Laminating order is not particularly limited in the biodegradable resin layer (1), the biodegradable resin layer (2), and the biodegradable resin layer (3), and each layer may be arranged as an inside layer or an outside layer. As a preferred example, there is enumerated a lamination film in which the biodegradable resin layer (2) is arranged at one side of the biodegradable resin layer (1) and the biodegradable resin layer (3) is arranged at another side of the biodegradable resin layers (1).

As a biodegradable resin which constructs the biodegradable resin layer (1), the biodegradable resin layer (2), or the biodegradable resin layer (3), there are enumerated an aliphatic polyester resin, a lactone resin, a cellulose ester, a polypeptide, a polyvinylalcohol, a polyamide, a polyamideester, and a mixture thereof.

As the aliphatic polyester resin, the lactone resin, and the polycaprolactone, there are employed ones described in the common items described hereinabove.

In the polyvinylalcohol, saponification degree is not particularly limited, and commercially supplied ones can be employed. In the polyvinylalcohol, a number average molecular weight is 50,000 to 1,000,000, preferably 100,000 to 500,000.

In the present invention, the aliphatic polyester resin, the lactone resin, the cellulose ester, the polypeptide, and the polyvinylalcohol can be also mixedly employed in one biodegradable resin layer.

In the case of employing a mixture of the polycaprolactone with the aliphatic polyester resin from a diol/a dicarboxylic acid, those are formulated in a weight ratio range of the polycaprolactone/the aliphatic polyester resin of 0/100-80/20, and preferably 0/100-50/50.

In the case of employing the polycaprolactone and the polylactic acid, those are formulated in a weight ratio range of the polycaprolactone/the aliphatic polyester resin of 0/100-60/40, and preferably 0/100-50/50.

In the case of employing a biodegradable polymer mixture composed of the polylactic acid, the aliphatic polyester resin from a diol/a dicarboxylic acid, and the polycaprolactone, those are formulated in a weight ratio of the aliphatic polyester resin of a diol and a dicarboxylic acid with respect to the polycaprolactone of 20/80-80/20, and a weight ratio of the polylactic acid with respect to the polycaprolactone of 20/80-80/20.

In the case that the formulating amount of the aliphatic polyester resin is out of the above-described range, in a laminated film molded, heat resistance occasionally becomes insufficient.

In the present invention, there can be added starch, cellulose, paper, pulp, cotton, wool, silk, carrageenan, chitin-chitosan, and finely-powdered plant substances such as coconut shell powder and chest nut powder, and a mixture thereof which are described in the above-described common items to the biodegradable resin.

In the present invention, there can be added the additives for resins which are described in the above-described common items to the biodegradable resin. As the additives for resins, there are enumerated plasticizers, thermal stabilizers, lubricants (including liquid lubricants), anti-blocking agents (finely-powdered silica, etc.), nucleating agents, agents for accelerating photo-degradation, accelerators for biodegradation, automatic oxidants, anti-oxidants, ultraviolet ray stabilizers, antistatic agents, flame retardants, flowing drop agents, water resistible agents, anti-bacterial agents, deodorizing agents, deodorants, herbicides, fillers such as calcium carbonate, extenders, coloring agents, crosslinking agent, and a mixture thereof.

Particularly, the addition of the agents for accelerating photo-degradation and the automatic oxidants is a preferred method in view of giving brittleness to the film after a desired period of lapse time at which it functions as a film for agriculture and, whereby, it is capable of being readily plowed into the ground.

In the biodegradable resin to be employed in the present invention, melt flow index (MI) is 0.5-100 g/10 minutes, preferably 1-20 g/10 minutes and, particularly, preferably 1-5 g/10 minutes in a measure at 190°C and the load of 2160 g.

The biodegradable laminated film and film for agriculture also include a sheet.

Thickness of the biodegradable resin layers (1), (2), and (3) is selected according to purposes, and it is not particularly limited. For example, it is 1 μm-3 mm, preferably 10 μm-1 mm, and particularly preferably 15 μm-0.5 mm.

In order to obtain the biodegradable laminated film of the present invention, although it may be even formed by heat-sealing or by an adhesive after forming a film from the respective biodegradable resins or respective biodegradable resin compositions corresponding to the biodegradable resin layer (1), the biodegradable resin layer (2), and the biodegradable resin layer (3), it is preferably molded into a laminating film by feeding into a coextruder.

As a molding method for coextruding, there can be applied a conventional two-color or three-color extruding method, etc.

The biodegradable laminated film of the present invention may be monoaxially or biaxially stretched. Stretching ratio is 1-10 times, preferably 1-5 times, and more preferably 1-2 times.

In the biodegradable laminated film of the present invention, the biodegradable resin layer (1), the biodegradable resin layer (2), and the biodegradable resin layer (3) preferably comprise a crystalline resin, respectively, and those preferably have a different crystallinity and crystallization rate between respective resin layers. By the presence of the different crystallinity and crystallization rate, molecular orientation is readily put into disorder in the respective resin layers.

In the biodegradable laminated film of the present invention, it is characterized in that tear strength of the film is higher than that of an each single layer film made from the biodegradable resin layer (1), the biodegradable resin layer (2), and the biodegradable resin layer (3) based on the same thickness.

The biodegradable laminated film of the present invention can be employed as a mulch film for agriculture or a mulch sheet for agriculture (hereinafter, referred to as a film for agriculture) as it is, or by molding into a wide film by laterally bonding through heat-sealing. The film for agriculture is a film which is employed for the purpose of a good harvest of farm products by control of an abrupt change in soil temperature, growth control of weeds, and gradual discharge of fertilizers, etc. Further, it is employed as a roofing sheet for a green house cultivation, a mulch sheet for soil covering, and a seed bed covering for the purpose of an elevation of a harvest technology of farm products such as, particularly, rices and fruits.

The film for agriculture may be colored by black, silver, and white dyes, etc., and may be also given transparency, light resistance, scratch resistance, and an anti-blocking property by coating an acrylic-based resin on the surface.

In the film for agriculture of the present invention, a film strength lowers after using over a desired period, and it becomes apt to be plowed into soil and, moreover, since it is completely decomposed by microorganisms in soil, it is unnecessary to recover the film.

The sheet for agriculture of the present invention is excellent in biodegradability and moldability, mechanical properties, particularly, tear resistance, and a heat-sealing property.

Since the biodegradable laminated film of the present invention is excellent in biodegradability, it results in not remaining a shape within 1 year after letting alone under natural circumstances.

POSSIBILITY OF UTILIZATION IN INDUSTRIES FOR THE PRESENT INVENTION [VIII]

According to the present invention [VIII], there can be readily obtained a biodegradable laminated film and a biodegradable film for agriculture therefrom which show excellent biodegradability and excellent moldability in the film itself and, in which adhesive strength (laminability) between layers is excellent, and tear strength of a laminated film obtained is elevated.

Hereinafter, the present invention [IX] is illustrated.

The present invention [IX] relates to a biodegradable multi-layers film or sheet (in the present invention, so far as not being particularly distinguished, both are merely called a multi-layers film or sheet) comprising a layer (A) composed of a biodegradable polyester resin composition in which 1-200 parts by weight of a polycaprolactone is formulated with 100 parts by weight of the aliphatic polyester resin, and a layer (B) composed of a lactone resin alone or a composition of the lactone resin with a biodegradable resin other than the lactone resin, in which the lactone resin is irradiated solely or together with at least one of other constructing components by ionizing radiation. The lactone resin is preferably a polycaprolactone. Accordingly, hereinafter, the biodegradable resin other than the polycaprolactone is identical to the biodegradable resin other than the lactone resin.

It is to be noted that the multi-layers film or sheet is also called a laminated film or sheet and a film or sheet having a plurality of layers.

As the aliphatic polyester resin to be employed in the present invention, there can be employed anyone of the above-described aliphatic polyester resin and/or aliphatic polyester resin containing urethane bonds.

As the the polycaprolactone in the present invention, there can be employed the above-described ones.

(Biodegradable polyester resin composition which constructs the layer (A))

As formulating proportion of the aliphatic polyester resin with respect to the polycaprolactone, the above-described one can be employed and, even in the case of kneading thereof, the above-described methods can be employed.

Further, the above-described fillers can be added to the biodegradable polyester resin composition, so far as it does not obstruct biodegradability of resin components.

(Composition of the lactone resin with the biodegradable resin other than the lactone resins which constructs the layer (B))

As the lactone resin, the above-described lactone resin can be employed. The lactone resin is preferably a polycaprolactone.

Accordingly, hereinafter, the biodegradable resin other than the polycaprolactone is identical to the biodegradable resin other than the lactone resin.

As the biodegradable resin other than the lactone resin, if it is a resin which can be molded into a desired film or sheet as a composition by being formulated with the lactone resin, it is not particularly limited, and a variety of publicly-known resins are employed. For example, there can be preferably exemplified the above-described aliphatic polyester, the above-described biodegradable cellulose ester, the above-described polypeptide, and the above-described starch, etc. Those can be employed solely or in combination of two or more kinds.

As such the biodegradable resin composition, there are enumerated a composition in which a synthetic aliphatic polyester resin is preferably added to the lactone resin and a composition in which a fatty acid amide is further added. Hereinafter, although there is illustrated the composition in which a synthetic aliphatic polyester resin and the fatty acid amide are added to the lactone resin as an example, it is the same also in the case that the lactone resin is employed solely, and in the case that there is employed the composition of the lactone resin with the biodegradable resin other than the lactone resin.

(Lactone resin irradiated by ionizing radiation)

The lactone resin to be irradiated by ionizing radiation is the above-described lactone resin, and there is preferred one which does not soften at ordinary temperatures. From the viewpoint, the polycaprolactone is preferred which has a high molecular weight and a melting point of 60°C or so, and in which a stable property is apt to readily obtain.

As a preferred example in the present invention, although the lactone resin which constructs the layer (A) and/or the lactone resin which constructs the layer (B) are irradiated by a fixed ionizing radiation and, preferably, the lactone resin which constructs the layer (B) is irradiated by a fixed ionizing radiation.

As the lactone resin irradiated by ionizing radiation or a composition containing the lactone resin irradiated by ionizing radiation to be employed in the present invention, there are included, in addition to a lactone resin alone irradiated in advance by fixed ionizing radiation and a resin composition obtained by adding the synthetic polyester resin to the lactone resin irradiated, a resin composition obtained by adding other components after irradiating a mixture of the lactone resin with the synthetic polyester resin by ionizing radiation, and also a resin composition obtained through irradiating by ionizing radiation after mixing the lactone resin, the synthetic polyester resin, and optionally, additives.

Further, as a mode irradiated by ionizing radiation after mixing, there is also included, in addition to a mode in which there is irradiated a composition as a raw material for molding (for example, pellets or strands after kneading for preparing the pellets, etc.), and a mode in which a composition during molding is irradiated. In order to improve biodegradability in a molded article, it is preferred to mold a resin composition containing the lactone resin obtained through irradiating by ionizing radiation, for example, pellets.

In the biodegradable resin composition, there can be further added the above-described liquid lubricants, a finely-powdered silica and/or starch, and a fixed ionizing radiation may be irradiated even after adding thereof.

Likewise, in the biodegradable resin composition of the present invention, there can be formulated the additives for resins such as plasticizers, the accelerators for photodegradation, and the accelerators for biodegradation.

The synthetic aliphatic polyester resin in the biodegradable resin composition is a polyester resin other than the lactone resin, and the aliphatic polyester resin and/or resin having urethane bonds including the above-described aliphatic polyester resin which are obtained in a condensation-polymerization system.

There is illustrated a preferred formulation ratio in respective components which construct the biodegradable resin composition in the present invention.

First of all, as a formulation ratio of the lactone resin with respect to the aliphatic polyester resin, the latter is preferably 30-95% by weight with respect to 70-5% by weight of the former (total of both is 100% by weight) and, in the case, a maximum limit of the former is particularly preferably set up in not more than 60% by weight and, the latter ranges in preferably 60-90% by weight with respect to 40-10% by weight of the former.

In the case, when the lactone resin exceeds 70% by weight, mechanical properties at high temperatures tend to lower in a molded article such as a film and, when it is less than 5% by weight, degradability possibly tends to lower which is based on biochemical degradation. The tendency is likewise shown in the case being off from the range of 40-10% by weight.

On the other hand, when the aliphatic polyester resin exceeds 95% by weight in the formulating amount, biodegradability tends to delay and, contrarily, in the case of less than 30% by weight, heat resistance tends to lower when it is molded into a film. The tendency is likewise shown in the case being off from the range of 60-90% by weight.

Further, in the case that the fatty acid amide is added, it is formulated in the above-described formulating proportion.

In the biodegradable resin composition according to the present invention, there are further optionally added the above-described liquid lubricants and finely-powdered silica, and starch, etc.

In the additives having such the purposes for employing, the addition amount ranges in preferably 0.1-3 parts by weight, more preferably in 0.2-0.7 part by weight based on 100 parts by weight of total amount of the lactone resin and the aliphatic polyester resin. In the case that the addition amount exceeds 3 parts by weight, a large amount of the liquid lubricants adhere to an inside of a tumbler for mixing, resulting in that it becomes occasionally difficult to stably mix because of tackiness and, in the case of less than 0.1 part by weight, occasionally, there is not sufficiently shown an effect as a wetting agent. The tendency is likewise shown in the case being off from the range of 0.2-0.7 part by weight which is more preferred.

Use purpose of the finely-powdered silica is to prevent blocking in the multi-layers film or sheet according to the present invention.

As a method for adding, there is most preferred a method in which it is thermally kneaded into a resin composition containing the lactone resin, a composition comprising the aliphatic polyester resin and the lactone resin, or a composition comprising further adding the fatty acid amide, whereby, secondarily aggregated particles are loosened by a fairly large shear force, resulting in that there is shown an effect for prevent the blocking in the film.

It is to be noted that the addition amount of the finely-powdered silica is preferably a range of 0.1-3 parts by weight based on 100 parts by weight of mixture of the lactone resin with the aliphatic polyester resin in view of an appearance of the effect.

A variety of starch can be added to the resin composition according to the present invention. Although the addition amount of the starch is not particularly limited, for the purpose of effectively attaining an appearance of degradation, it preferably ranges in 10-80 parts by weight, and particularly preferably 25-50 parts by weight based on 100 parts by weight of total amount of the lactone resin and the aliphatic polyester resin.

(Irradiation of ionizing radiation)

Irradiation of ionizing radiation in the present invention is conducted for the lactone resins alone, a composition comprising the lactone resin and the aliphatic polyester resin, a composition comprising the lactone resin and the additives such as the fatty acid amide, and a composition comprising the lactone resin, the aliphatic polyester resin, and the additives in powder-state or pellet-state.

It is to be noted that in the case of the compositions, although there may be even a mere mixture containing respective powder-state or pellet-state components, and there is more preferred a powder-state or pellet-state mixture thereof which is appropriately kneaded. Further, it may be conducted during molding the film or sheet so that there are satisfied temperature conditions of the lactone resin in irradiation by ionizing radiation described hereinafter.

Irradiation quantity is decided by an indication of the gel fraction in the lactone resin which is an index of introduction of crosslinking structures into the polymeric materials. In the case of a low irradiation quantity, it is thought that there is formed a branched structure which is a precursor before crosslinking without growing into crosslinking, and there is formed many branched structures which are insoluble in acetone, however, in the case that the branched structure is slight, it is soluble in acetone. In the present invention, processability can be improved because the high melting point, a decrease of melt index (MI) and/or an increase of melt tension (MT) are caused by introduction of the branched structure in spite of no formation of gel.

In the present invention, branched structures are introduced or gel fraction is 0.01-10%, and preferably 0.05-5.0% in the lactone resin irradiated by ionizing radiation, and crosslinking is caused, whereby, melting point elevates, tensile strength and tear strength are improved, a releasing property from a mold is improved, adherence to a roll lowers, and transparency becomes high.

Also, there is included a mode irradiated by a low irradiation quantity at an initial stage, and then irradiated by a high irradiation quantity at a latter stage, for example, irradiation is carried out so that the gel fraction is adjusted to 0.01-10%, preferably 0.05-5% in a pellets stage, and it is adjusted to 5-90%, preferably 10-90% during molding or after molding.

By the mode, since melt viscosity becomes higher than that of not irradiated ones, irradiation can be carried out again while maintaining the shape at higher temperatures, and crosslinking is caused at higher probability, resulting in that heat resistance is improved.

In the irradiation by ionizing radiation according to the present invention, temperature is not limited, and although it may be an ordinary temperature, powder or pellets of the lactone resin may be even irradiated in a state cooled to a temperature (in the polycaprolactone, 50-35°C) in which it does not attain to crystallization after once melting at a melting point (in the polycaprolactone, 60°C). By irradiating as described hereinabove at such the state, there can be obtained resins having an exceedingly high gel fraction by a low irradiation quantity. As described hereinabove, although the "state of not attaining to crystallization" described herein cannot be precisely specified, since crosslinking is caused at a noncrystalline portion, it means a state that a noncrystalline state is more advantageous. If the crystalline degree is lower than that in a state of room temperatures, a corresponding irradiation effect is obtained.

It is to be noted that even in the case that there are treated a variety of the above-described compositions composed of other components differently from a treatment of the lactone resin alone, an effect is sufficiently obtained by a consideration of a melting state alone in the above-described lactone resin components.

As sources of the ionization radiation to be employed in a irradiation treatment by the ionizing radiation according to the present invention, there can be employed α-ray, β-ray, γ-ray, X-rays, an electron beam, and an ultraviolet ray, etc., and there are more preferred γ-ray from cobalt 60, the electron beam, and X-rays, and, of those, irradiation of γ-ray and the electron beam by the use of an electron accelerator is most advantageous for introducing the crosslinking structures into polymeric materials.

In the crosslinking reaction which is an effect through irradiation by the ionizing radiation of the lactone resin in the present invention, the crosslinking degree becomes large with an increase of radiation dosage. Although the dosage rate of the ionizing radiation is not particularly limited, productivity is preferably more elevated in a higher dosage rate. It is to be noted that an atmosphere is not particularly limited in irradiation by the ionizing radiation, however, since it is possible to decrease quantity of the irradiating dosage in a lower oxygen concentration, it is more advantageous.

In the lactone resin or the lactone resin composition irradiated by the above-described specified ionizing radiation, melt flowability, if it can be supplied for molding a film, is not particularly limited, and melt index (MI)(measured at 190°C and load of 2160 g) for molding a film or sheet is preferably 0.5-20 g/10 minutes and, particularly, appropriately 1-5 g/10 minutes.

In the above-described biodegradable resin composition or the composition further containing the above-described various additives, there can be optionally added resin components other than the lactone resin and the aliphatic polyester resin (for example, ethylene copolymers and other polyolefins, hydrogenated styrene-butadiene rubber, polyurethanes, polyamides, and polyhydroxybutylates, etc.), natural polymers other than the above-described starch (for example, polysaccharide-based polymers, cellulose-based polymers, and protein-based polymers, etc.), and the above-described additives for resins.

Particularly, the addition of the accelerators for photodegradation and the automatic oxidation agents, etc. is a preferred method in view of giving brittleness to the film around a desired period after lapse of time.

As a method for obtaining a mixed composition comprising adding the above-described various additives to the above-described biodegradable resin composition, there can be applied a variety of methods which have been conventionally employed, and it is not particularly limited.

Obtained powdered or pellet-state resin composition containing the additives is can be molded into a film or sheet by molding methods such as an inflation method, a T-die method, and conventional various molding methods owing to an elevation of melt viscosity which is thought to be based on crosslinked structures, compared to a conventional lactone resin or a composition thereof which is not irradiated by ionizing radiation.

(Multi-layers film or sheet)

The biodegradable multi-layers film or sheet of the present invention comprises a layer (A) composed of a biodegradable aliphatic polyester resin composition in which 1-200 parts by weight of a polycaprolactone is formulated with 100 parts by weight of the aliphatic polyester resin, and a layer (B) composed of a lactone resin or a composition of the lactone resin with a biodegradable resin other than the lactone resin, in which the lactone resin is irradiated by ionizing radiation.

As construction of the multi-layers film or sheet, there can be exemplified one comprising a layer (A) and layer (B), one comprising a layer (B) sandwiched between two pieces of the layer (A), and one comprising alternately laminating a plurality of pieces of the layer (A) and layer (B), respectively, etc., there is preferred the one comprising a layer (B) sandwiched between two pieces of the layer (A). In the case, composition in two pieces of the layer (A) may be identical or different from each other, between which the layer (B) is sandwiched.

Biodegradability in the layer (B) is faster than that in the layer (A). Accordingly, in the case that a film or sheet having same thickness is compared, biodegradability in the film or sheet comprising the layer (B) sandwiched between two pieces of the layer (A) is more excellent than biodegradability in a film or sheet comprising the layer (A) alone.

Further, in the film or sheet comprising the layer (B) sandwiched between two pieces of the layer (A), there is improved tensile strength in lateral direction.

In the multi-layered film or sheet, the thickness is not particularly limited and, for example, in the case of the film, it can be employed in 1 μm-1 mm, and preferably 10 μm-0.5 mm and, in the case of the sheet, it can be employed in 0.1 mm-10 mm, and preferably 0.5 mm-5 mm. Thickness ratio of the layer (A) with respect to the layer (B) is not particularly limited, and it is decided depending upon purposes. Further, thickness of two pieces of the layer (A) may be identical or different from each other, by which two pieces of the layer (B) are sandwiched.

(Molding method of the multi-layers film or sheet)

The multi-layers film or sheet can be molded by conventional coextrusion methods using as raw materials the biodegradable polyester resin composition for forming the above-described layer (A) and the lactone resin alone irradiated by ionizing radiation or the composition of the lactone resin irradiated by ionizing radiation with biodegradable resins other than the lactone resin for forming the layer (B).

For example, by the use of a coextruder, the multi-layers film or sheet can be prepared by a T-die method and an inflation method, an extrusion-molded article having multi-layers can be prepared by a blow molding, and a profile extrusion article can be prepared by a profile molding method and, in addition, a multi-layers pipe- or tube molded article can be prepared. In the case of the coextruding, a flat manifold die is employed for the multi-layers sheet, and a flat die or a circular die can be employed for the multi-layers film.

Further, in the multi-layers film or sheet, a film or a sheet corresponding to the above-described respective layers (A) and (B) is molded by a T-die method, an inflation method, a calendaring method, and a casting method, etc., and those may be also prepared by an adhesive or fusion.

The multi-layers film or sheet may be also monoaxially or biaxially stretched.

(Uses)

The biodegradable multi-layers film or sheet provided in the present invention can be employed in wide uses as a substitute for conventional polyolefin resins, polyvinylchloride resins, polyvinylidene chloride resins, polyester resins, polyether resins, and polyamide resins, etc.

For example, as a use for the film, there can be enumerated uses for wrapping materials such as bags and pouches; a deep drawing tube for automatically wrapping animal meats and fishery products; a shrink film wrapped by thermally shrinking; skin packs for closely wrapping; films co-stretched and thermally fixed with other resins; and films thermally fixed with a metal foil. As a use for the sheet, there can be enumerated industrial uses such as secondarily processing vessels for foods; general vessels including bottles; surfacing materials; light-transmittable materials; and materials for house moving, etc.

Although the multi-layers products are illustrated as the film or sheet, it goes without saying that those can be utilized as tubes, pipes, coating materials, molded article having designs, cables, and other profile-molded products. Particularly, it is preferably employed for uses as articles which are apt to be let alone in circumstances.

POSSIBILITY OF UTILIZATION IN INDUSTRIES FOR THE PRESENT INVENTION [IX]

According to the present invention [IX], there can be obtained a multi-layers film or sheet having lengthwise and laterally sufficient tensile strength, in which biodegradation is quick.

In the biodegradable multi-layers film or sheet provided in the present invention, degradation ratio exceeds 20%, preferably 30% after cultivated for 4 weeks in a municipal drainage sludge regulated by JIS K6950.

Hereinafter, the present invention [X] is illustrated.

The present invention [X] is a biodegradable film having a film thickness of 5-25 μm which comprises molding a composition of an aliphatic polyester resin with a polycaprolactone, and in which any one of the aliphatic polyester resin, the polycaprolactone, or the composition which is a constructing component is characterized by MT of not less than 2g and MFR of 1-9g/10 minutes.

Hereinafter, the constructing components are illustrated.

Aliphatic polyester resin (I)

In the aliphatic polyester resin (I), MT is not less than 2g, preferably 5-10g, and particularly preferably not causing fracture (in the case of the bag, a bag-breaking), and MFR is 1-9g/10 minutes, preferably 2-7g/10 minutes, and particularly preferably 2-5g/10 minutes. Further, a melting point is not less than 100°C, and it is preferably thermoplastic.

The aliphatic polyester resin (I) is an aliphatic polyester (I') composed of an aliphatic dicarboxylic acid (a), an aliphatic diol (b), and an aliphatic polycarboxylic acid having 3 or more functionalities (c) and/or an aliphatic polyol having 3 or more functionalities (d), an aliphatic polyester (I") obtained by modification of a linear chain type aliphatic polyester (i) composed of the aliphatic dicarboxylic acid (a) and the aliphatic diol (b) by an isocyanate and/or a polyisocyanate having 3 or more functionalities, and a mixture of the (I') and (I").

The aliphatic polyester resin (I') is a polyester of the aliphatic dicarboxylic acid (a) having a carbon number of 1-10 which is linear or branched, the aliphatic diol (b) having a carbon number of 1-10 which is linear or branched, an aliphatic polycarboxylic acid having 3 or more functionalities (c) and/or an aliphatic polyol having 3 or more functionalities (d). Herein, the aliphatic polycarboxylic acid having 3 or more functionalities (c) has a carbon number of 1-10, and which is linear or branched, and the aliphatic polyol having 3 or more functionalities (c) has a carbon number of 1-10, and which is linear or branched.

Ratio of the aliphatic dicarboxylic acid (a) with respect to the aliphatic dial (b) is the aliphatic dicarboxylic acid (a):the aliphatic dial (b)=30:70% by weight-80:20% by weight in the aliphatic polyester resin (I'), and the aliphatic polyol (d) and/or the aliphatic polycarboxylic acid (c) function as a multi-functional branching agent or a partial crosslinking agent, and which are employed in 0.01-20 parts by weight, and preferably 0.1-5 parts by weight based on 100 parts by weight of total of the aliphatic dicarboxylic acid and the aliphatic diol.

As the aliphatic dicarboxylic acid (a), there can be enumerated the ones described in the above-described common items.

As the aliphatic dial (b), there can be enumerated the ones described in the above-described common items.

As the aliphatic polycarboxylic acid (c), there can be enumerated propane tricarboxylic acid and butane tetracarboxylic acid, etc.

As the aliphatic polyol (d), there can be enumerated glycerine, diglycerine, trimethylolpropane, trimethyloletane, pentaerythritol, dipentaerythritol, and 3-methylpentanetriol, etc.

As a combination of the aliphatic dicarboxylic acid with the aliphatic diol, there can be specifically exemplified succinic acid and/or adipic acid and 1,4-butanediol; succinic acid and ethyleneglycol; oxalic acid and neopentylglycol; oxalic acid and 1,4-butanediol; and oxalic acid and ethyleneglycol, etc, and it is preferably succinic acid and 1,4-butanediol.

A particularly preferred resin in the above-described aliphatic polyester resin (I') is a polyester resin obtained from succinic acid, 1,4-butanediol, and a small amount of trimethylolpropane.

In the aliphatic polyester resin (I'), a number average molecular weight ranges in 1,000-500,000, preferably not less than 50,000, and more preferably not less than 100,000.

By controlling like this, there can be obtained the aliphatic polyester resin (I') having MT of not less than 2g and MFR of 1-9 g/10 minutes.

The above-described aliphatic polyester resin (I") is a resin obtained by modification of the linear chain type aliphatic polyester (i) composed of the aliphatic dicarboxylic acid (a) having a carbon number of 1-10 which is linear or branched and the aliphatic diol (b) having a carbon number of 1-10 which is linear or branched by a diisocyanate (e) and/or a polyisocyanate having 3 or more functionalities (f) which are described hereinafter.

As the linear chain type aliphatic polyester (i), there are enumerated an aliphatic polyester composed of the aliphatic dicarboxylic acid (a) having a carbon number of 1-10 which is linear or branched and the aliphatic diol (b) having a carbon number of 1-10 which is linear or branched which are mentioned in the above-described aliphatic polyester resin (I'), a biodegradable polyester resin such as a synthetic polylactic acid, an aliphatic polyester such as a terpolymer described in JP-A-09235360 and JP-A-09233956 Official Gazettes, a copolymer of lactic acid with a hydroxycarboxylic acid described in JP-A-07177826 Official Gazette, a polyamide ester resin synthesized from ε-caprolactone and ε-caprolactam, and a polyamino acid resin, etc.

As the linear chain type aliphatic polyester (i) composed of the aliphatic dicarboxylic acid (a) and the aliphatic diol (b), there are exemplified a polyester resin from succinic acid and/or adipic acid and 1,4-butanediol; succinic acid and ethyleneglycol; oxalic acid and neopentylglycol; oxalic acid and 1,4-butanediol; and oxalic acid and ethyleneglycol, and it is preferably a polyester resin from succinic acid and 1,4-butanediol.

In the linear chain type aliphatic polyester (i), MFR is usually 2.0-6.0 g/10 minutes, and MT is 0.5-2.0 g.

In the linear chain type aliphatic polyester (i), a number average molecular weight ranges in 1,000-50,000, preferably not less than 10,000, and more preferably not less than 50,000.

The linear chain type aliphatic polyester (i) is modified to the aliphatic polyester resin (I") by allowing to react with the diisocyanate (e) and/or the polyisocyanate having 3 or more functionalities (f).

As the diisocyanate (e), in addition to the aliphatic diisocyanate compounds described in the common items, there are exemplified isophorone diisocyanate, 2,4- and/or 2,6-tolylene diisocyanate, diphenylmethane diisocyanate, hydrogenated diphenylmethane diisocyanate, xylilene diisocyanate, hydrogenated xylilene diisocyanate, 1,5-naphtylene diisocyanate, and a mixture thereof, and as the polyisocyanate having 3 or more functionalities (f), there are exemplified triphenylmethane triisocyanate, hydrogenated triphenylmethane triisocyanate, an adduct of the diisocyanates to a polyvalent alcohol, a terpolymer of the diisocyanates, and a mixture thereof.

Particularly, there are appropriate aliphatic and alicyclic isocyanates such as hexamethylene diisocyanate, hydrogenated diphenylmethane diisocyanate, hydrogenated xylilene diisocyanate, isophorone diisocyanate, triphenylmethane triisocyanate, and hydrogenated triphenylmethane triisocyanate also from viewpoint of preventing discoloration.

A number average molecular weight of the linear chain type aliphatic polyester (i) before modification ranges in 1,000-50,000, preferably not less than 5,000, and more preferably not less than 10,000.

A number average molecular weight of the aliphatic polyester (I'') obtained by modification ranges in 10,000-500,000, preferably not less than 50,000, and more preferably not less than 100,000.

Use amount of the isocyanates is decided so that MT and MFR become a fixed range based on the linear chain type aliphatic polyester (i).

As described hereinabove, the aliphatic polyester resin (I'') is obtained having MT of not less than 2 g and MFR of 1-9 g/10 minutes.

Polycaprolactone (II)

In the polycaprolactone (II), MT is not less than 2 g, preferably 5-10 g, and particularly preferably not causing fracture (in the case of molding into a bag, a bag-breaking), and MFR is 1-9 g/10 minutes, preferably 2-7 g/10 minutes, and particularly preferably 2-5 g/10 minutes. Further, a melting point is not less than 60°C, and it is preferably thermoplastic.

The polycaprolactone (II) to be employed in the present invention is a polycaprolactone (II') obtained by crosslinking of a linear chain type polycaprolactone (ii), or a polycaprolactone (II'') obtained by polymerization of ε-caprolactone using as an initiator of a polyol having 3 or more functionalities.

The linear chain type polycaprolactone (ii) is a polycaprolactone obtained by polymerization of ε-caprolactone using an initiator having monofunctionality or bifunctionality.

Further, as the linear chain type polycaprolactone (ii), there can be also employed a copolymer containing not more than 20% by mol of a comonomer unit such as valerolactone, glycolide, and lactide in addition to a homopolymer of ε-caprolactone.

In the linear chain type polycaprolactone (ii), a number average molecular weight is 1,000-1,000,000, preferably 5,000-500,000, and more preferably 10,000-200,000, and particularly, there can be employed a polycaprolactone having a number average molecular weight of 40,000-100,000.

The polycaprolactone having the molecular weight has a relative viscosity of 1.15-2.80 regulated by JIS K6726 and, particularly, it is preferably 1.50-2.80.

In the linear chain type polycaprolactone (ii), MFR is usually 2.0-6.0 g/10 minutes, and MT is 0.5-2.0 g.

Accordingly, it is difficult to mold a film having thin thickness from the linear chain type polycaprolactone (ii) alone and a combination of the linear chain type polycaprolactone (ii) with the linear chain type aliphatic polyester (i).

In the linear chain type polycaprolactone (ii), the molecular weight can range from a high molecular weight to a low molecular weight. In the case of employing a polycaprolactone having a low molecular weight, since heat resistance and mechanical strength largely lower in a kneaded resin, addition amount is limited, however, there is shown a merit that moldability is improved in the resin composition by a decline of melt viscosity. However, use of a polycaprolactone having a low molecular weight enables to increase a formulating ratio thereof, resulting in that there can be highly well-balanced in heat resistance, mechanical properties, and biodegradability, and it is more preferred.

The crosslinked polycaprolactone (II') is obtained by crosslinking through irradiating the linear chain type polycaprolactone (ii) using ionizing radiation such as an electron beam and γ-ray under a solid state, melting state, and a state solidified after melting, or it is also obtained by heating or light after addition of a crosslinking agent. As the crosslinking agent, there are enumerated a peroxide alone and a mixture of the peroxide with quinone dioxime, an unsaturated acid, and a vinyl compound, etc.

In the crosslinked polycaprolactone (II'), gel fraction (confer the item of Examples in the present invention [IX]) is 0.01-90%, preferably 0.1-70%, and more preferably 1-50%.

The polycaprolactone (II') includes, in addition to a homopolymer, a copolymer containing, for example, not more than 20% by mol of comonomer units such as valerolactone, glycolide, and lactide, which is obtained by copolymerization using a multifunctional initiator, particularly, a polyol having 3 or more functionalities.

The multifunctional initiator is a compound or polymer having 3 or more active hydrogens such as hydroxyl group, amino group, carboxylic group, and thiol group, and there are specifically enumerated glycerine, trimethylolpropane, trimethylolethane, pentaerythritol, pyrogallol, oxyhydroquinone, aminopropanediol, erythrol, malic acid, citric acid, and pentaerythritol tetramercaptoacetate, an oligomer of a compound having both of a radically polymerizable double bond and hydroxyl group in the molecule such as 2-ethylhydroxy(meth)acrylate, a copolymer with other radically polymerizable monomers and a modified product grafted to a variety of polymers, a modified product of ethyleneoxide or propyleneoxide grafted to a variety of polymers, sucrose, starch, celluloses, and a polybutadiene having hydroxyl groups, etc. The polycaprolactone (II') can be prepared by publicly-known methods described in JP-A-07252352.

As the polycaprolactone (II'), there can be employed one having a number average molecular weight of 5,000-1,000,000, preferably 10,000-500,000, and more preferably 50,000-400,000.

In the above-described components, in the case of employing the aliphatic polyester resin (I) as described hereinabove, there can be employed the linear chain type polycaprolactone (ii) or the polycaprolactone (II) as a polycaprolactone, and preferably the linear chain type polycaprolactone (ii).

Further, in the case of employing the polycaprolactone (II), there can be employed the linear chain type aliphatic polyester resin (i) or the aliphatic polyester resin (I) as an aliphatic polyester resin, and preferably the aliphatic polyester resin (i).

Otherwise, there are employed a composition composed of the aliphatic polyester resin (I) and/or the aliphatic polyester resin (i) and a composition composed of the polycaprolactone (II) and/or the polycaprolactone (ii) and, in the composition, MT is not less than 2 g, preferably 5-10 g, and more preferably not causing fracture (in the case of a bag, a bag breaking), MFR is 1-9 g/10 minutes, preferably 2-7 g/10 minutes, and more preferably 2-5 g/10 minutes.

By those, a thin layer film can be formed.

As an example in a commercially-supplied product of the linear chain type aliphatic polyester resin (i), there are enumerated Bionolle (manufactured by Showa Kobunshi, Co. Ltd.) not containing urethane bonds, ECOPLA (manufactured by Kirgil, Ltd.) manufactured from a polylactic acid, Lacty (manufactured by Shimadzu Seisakusho, Ltd.), and Laycia (manufactured by Mitsui Kagaku, Ltd.), etc.

As an example in a commercially-supplied product of the aliphatic polyester resin (I), there are enumerated Bionolle #1903 (manufactured by Showa Kobunshi, Co.), etc.

As an example in a commercially-supplied product of the polycaprolactone (ii), there are enumerated PLACCEL H7 (manufactured by Daicel Kagaku, Ltd.), etc.

As an example in a commercially-supplied product of the polycaprolactone (II), there are enumerated PLACCEL 303, 305, and 405 (manufactured by Daicel Kagaku, Ltd.), etc., in which there is employed a polyol having 3 or more functionalities as an initiator.

Hereinafter, in the case that there is not required a distinction between the polycaprolactone (II) and the polycaprolactone (ii) or a distinction between the aliphatic polyester resin (i) and the aliphatic polyester resin (I), it is merely called the polycaprolactone or the aliphatic polyester resin.

Weight ratio of the polycaprolactone with respect to the aliphatic polyester resin is 70:30-5:95% by weight of the polycaprolactone:the aliphatic polyester resin, and preferably 50:50-30:70% by weight.

In the case, the polycaprolactone exceeds the above range, mechanical properties in the film shows a tendency of lowering at high temperatures.

In the composition of the above-described aliphatic polyester resin with the polycaprolactone, there can be prepared a film by optionally adding the previously-described publicly-known additives, resin components (for example, ethylene copolymers and other polyolefins, hydrogenated styrene-butadiene rubber, polyurethanes, polyamides, and polyhydroxybutylates, etc.) other than the above-described lactone resin and aliphatic polyester resin, or a mixture thereof.

Particularly, the addition of the agents for accelerating photo-degradation and auto-oxidants is a preferred method in view of giving brittleness to the film after a desired period of lapse time.

As a coloring agent, publicly-known dyes and pigments can be employed, whereby, there can be obtained a film having a desired color and design, and a film which is preferred for wrapping and growth of plants, etc.

Preparation for the film is conducted by a variety of conventional molding methods such as an inflation method and a T-die method.

Film production speed by the methods is 10-30 m/minute, and preferably 15-20 m/minute, time of period capable of continuously producing without causing film-cut is not less than 1 hour, preferably not less than 3 hours, more preferably not less than 10 hours and, particularly preferably not less than 24 hours.

The film may be monoaxially or biaxially stretched. Stretched film can be employed as a biodegradable shrink film which is a shrinking type one.

Thickness of the film is 5-25 μm, and preferably 10-20 μm.

Hitherto, in the case that such the thin film is intended to be continuously prepared, although the film has very often cut, the film can be continuously prepared for a long time without causing film-cut by the use of the composition of the present invention.

## POSSIBILITY OF UTILIZATION IN INDUSTRIES FOR THE PRESENT INVENTION [X]

According to the present invention [X], there can be obtained a biodegradable thin-layer film which is excellent in a continuous moldability, outer appearances, and strength, etc., in which biodegradation speed is quick. Although uses are not particularly limited, it can be preferably utilized as a film having possibility of being left alone under circumstances after uses, for example, a film for agriculture, a bag for kitchen garbages, and air-blister cushion material, etc.

Hereinafter, the present invention [XI] is illustrated.

The present invention [XI] is a cushion sheet having discontinuous cells which comprises a cushion sheet having discontinuous cells in which an embossed film 2 having a large number of projections 3 over all surface of the film is laminated with a plain base film 1 and/or another embossed film 2, characterized in that the embossed film 2 and the plain base film 1 are formed by a polycaprolactone alone or a composition of the aliphatic polyester resin with the polycaprolactone, and the polycaprolactone is irradiated solely or together with at least one of other constructing components by an ionizing radiation.

The embossed film 2 and the base film 1 may be identical or different from each other in materials.

XI-1. Structure of the cushion sheet having discontinuous cells

In the the cushion sheet having discontinuous cells of the present invention, discontinuous air cells can be formed between the projections 3 in the embossed film 2 and the plain base film 1 (Figure XI-1).

Further, in the cushion sheet having discontinuous cells, there may be laminated the embossed film 2 themselves or laminated the projections 3 themselves corresponding to each other, whereby, discontinuous air cells can be formed (Figure XI-2).

Still further, in the cushion sheet having discontinuous cells, independent air cells can be formed by laminating the plain base film 1 between two layers of the embossed film 2 (Figure XI-3).

Hereinafter, in order to simplify illustrations, there is illustrated a cushion sheet having discontinuous cells composed of one layer of the embossed film 2 and one layer of the plain base film 1.

In the a cushion sheet having discontinuous cells of the present invention, as size of the projections 3, in the case that bottom surface of the projections is a round shape, the diameter is 1-100 mm, and the height is 1-50 mm. The number of the projections 3 is not less than 10 pieces per 1 $m^2$, and preferably 100-100,000 pieces. Shape is not particularly limited, and there can be formed a variety of shapes such as a column shape, a square shape, a conical shape, a hemi-sphere shape, a rotated ellipse shape, a rugby ball shape, an egg shape, and a cocoon shape. In the case that the bottom surface is not a round shape, corresponding diameter ranges in the above-described scope which is employed in place of the diameter.

Mutual arrangement of the projections 3 is not particularly limited, although those may be arranged at random and, further, those may be arranged in zigzags, the projections 3 on the embossed film 2 are preferably arranged regularly before and behind, at left and right from a structural viewpoint.

XI-2. Materials of the cushion sheet having discontinuous cells.

In the present invention, the embossed film 2 and/or the base film 1 are composed of the polycaprolactone (II) alone or a composition of the polycaprolactone with the aliphatic polyester resin (I), and the polycaprolactone (II) is irradiated solely or together with at least one of other constructing components by an ionizing radiation.

Accordingly, in the case that any one of the embossed film 2 and the base film 1 is composed of the polycaprolactone alone or the composition of the polycaprolactone with the aliphatic polyester resin, and the polycaprolactone is irradiated solely or together with at least one of other constructing components by an ionizing radiation, although the base film 1 combined with it is preferably the same materials, it may be even other biodegradable resins, and it may be even nonbiodegradable resins depending upon uses.

As the polycaprolactone (II), there can be employed ones described in the above-described common items.

The polycaprolactone having the above-described molecular weight has a relative viscosity of 1.15-2.80 regulated by JIS K6726 and, particularly, it is preferably 1.50-2.80.

As the aliphatic polyester resin to be employed in the present invention, there can be employed any one of the aliphatic polyester resin (I') not containing urethane bonds and/or the aliphatic polyester resin (I") containing urethane bonds which are described in the above-described common items (both are represented as (I)).

As formulating ratio of the polycaprolactone (II) irradiated (or, to be irradiated) by an ionizing radiation with respect to the aliphatic polyester resin (I), the latter is preferably 30-95% by weight with respect to 70-5% by weight of the former (total of both is 100% by weight) and, in the case, a maximum limit of the former is particularly preferably set up in not mare than 60% by weight and, the latter ranges in preferably 60-90% by weight with respect to 40-10% by weight of the former.

In the case, when the polycaprolactone exceeds 70% by weight, mechanical properties at high temperatures tend to lower in a molded article such as a film and, when it is less than 5% by weight, a collapse ability possibly tends to lower which is derived from biochemical degradation. The tendency is likewise shown in the case being off from the range of 40-10% by weight.

On the other hand, when the aliphatic polyester resin exceeds 95% by weight in the formulating amount, biodegradability tends to delay and, contrarily, in the case of less than 30% by weight, heat resistance tends to lower when it is molded into a film. The tendency is likewise shown in the case being off from the range of 60-90% by weight.

In the case of employing the polycaprolactone and the polylactic acid, those are formulated in a weight ratio range of 99/1-1/99, and preferably 90/10-60/40.

In the case of employing the polycaprolactone and the aliphatic polyester resin from a diol/a dicarboxylic acid, those are formulated in a weight ratio range of 80/20-20/80.

In the case of employing a biodegradable polymer mixture composed of the polylactic acid, the aliphatic polyester resin from a diol/a dicarboxylic acid, and the polycaprolactone, those are formulated in a weight ratio of the aliphatic polyester resin of a diol and a dicarboxylic acid with respect to the polycaprolactone of 30/70-70/30, and a weight ratio of the polylactic acid with respect to the polycaprolactone of 20/80-80/20.

In the case that a film is molded by the above-described composition, a curve becomes smooth in a shrinking curve, and in the case that a film is shrunk by attaching a film to a vessel, formation of wrinkles can be prevented during shrinking. The property is maintained also in the case of preparing the cushion sheet having discontinuous cells from the film.

In the case that a multi-layers film is prepared by the embossed film 2 and the plain base film 1, the above-described materials are employed in the layer (B).

Formulating proportion of the aliphatic polyester resin (I) with respect to the polycaprolactone (II) which construct the layer (A) in the multi-layers film depends upon respective molecular weight and properties to be required, and the latter (II) ranges in preferably 1-200 parts by weight, more preferably 40-200 parts by weight, and particularly 80-120 parts by weight with respect to 100 parts by weight of the former (I).

The aliphatic polyester resin (I) and the polycaprolactone (II) which construct the layer (A) in the multi-layers film may be same as or different from the aliphatic polyester resin (I) and the polycaprolactone (II) which construct the layer (B) in the multi-layers film, respectively.

XI-3. Additives for resins

To the above-described polycaprolactone and/or biodegradable polyester resin, there can be optionally added the additives for resins described in the above-described common items.

It is to be noted that addition amount of the finely-powdered silica ranges most preferably in 0.1-3 parts by weight based on 100 parts by weight of the polycaprolactone (II) or total amount of the polycaprolactone (II) and the aliphatic polyester resin (I) in view of giving the above-described effect.

In the case that electronic parts such as an IC are wrapped by the cushion sheet having discontinuous cells, since electro static charge in the sheet becomes problematic, there are electrically conductive materials such as carbon, metal powder, and an electrically conductive resin, and nonionic-based, a cationic-based, and anionic-based antistatic agents which are publicly-known.

XI-4. Irradiation treatment by an ionizing radiation for the polycaprolactone (II)

In the present invention, the polycaprolactone (II) which constructs the embossed film (2) and/or the plain base film (1) is irradiated by a fixed ionizing radiation.

The polycaprolactone (II) to be employed in the present invention, as mentioned in the [IX] of the present invention, may contain a polycaprolactone (II) which is in advance irradiated solely by a fixed ionizing radiation or which is irradiated by a fixed ionizing radiation after mixing with the aliphatic polyester resin (I) and the additives for resins, etc. and, or a polycaprolactone (II) which is irradiated by a fixed ionizing radiation during or after molding thereof.

Melt flow properties, if the polycaprolactone and a composition thereof can be supplied in order to mold into a film, are not particularly limited to the polycaprolactone (II) irradiated by a specified ionizing radiation in the present invention and a composition containing the polycaprolactone (II), and in the case of molding a film, melt flow index (MI) (measured at 190°C and the load of 2160 g) is preferably 0.5-20 g/10 minutes and, particularly, appropriately 1-5 g/10 minutes.

In a raw film for preparing the cushion sheet having discontinuous cells, a moderate melt tension is required. The melt tension is not less than 3 g, preferably not less than 6 g, more preferably not less than 10 g and, preferably, a fracture is not caused. Since the discontinuous cells are formed in a semi-melting state of the film, when the melt tension is less than 3 g, those cannot be formed because of a flow of resins. In the case that the cushion sheet having discontinuous cells is prepared by adjusting a melt viscosity to an appropriate range through cooling the film in a semi-melting state, productivity becomes worse, and it is difficult to stably produce because of too narrow conditions in production.

XI-5. Processing for a raw film

Powder-like or pellet-like PCL or PCL-contained composition obtained through irradiation by ionizing radiation, compared to a conventional PCL or a composition thereof which is not irradiated by ionizing radiation, can be molded into a film or a sheet by a variety of conventional molding methods such as an inflation method and a T-die method owing to an elevation of melt viscosity which is thought that it is based on crosslinking structures.

Obtained film is employed for the base film 1 and the embossed film 2 as it is.

XI-5.1 Monolayer film

In the present invention, the embossed film (2) and/or the base film (1) comprise the polycaprolactone (II) alone and a composition thereof with the aliphatic polyester resin (I), and those can be molded by conventional methods using the polycaprolactone irradiated solely or together with at least one of other constructing components by an ionizing radiation as a raw material.

For example, it can be prepared by T-die molding, inflation molding, and blow molding, etc. The film may be monoaxially or biaxially stretched.

A stretched film can be also employed as a film for a shrinkable type cushion sheet having discontinuous cells.

XI-5.2 Multi-layers film

In the present invention, as the embossed film (2) and/or the base film (1), there can be employed a biodegradable multi-layers film comprising the layer (A) composed of a biodegradable aliphatic polyester resin composition in which 1-200 parts by weight of the polycaprolactone (II) which is not irradiated by ionizing radiation is formulated with 100 parts by weight of the aliphatic polyester resin (I), and the layer (B) composed of the polycaprolactone alone or a composition of the polycaprolactone with aliphatic polyester resin, and in which the polycaprolactone is irradiated alone by ionizing radiation, or irradiated by ionizing radiation together with at least one of other constructing components.

As construction of the multi-layers film or sheet, there can be exemplified a film or sheet comprising a layer (A) and layer (B), a film or sheet comprising a layer (B) sandwiched between two pieces of the layer (A), and a film or sheet comprising alternately laminating a plurality of pieces of the layer (A) and layer (B), respectively, etc., and there is preferred the film or sheet comprising a layer (B) sandwiched between two pieces of the layer (A). In the case, composition in two pieces of the layer (A) may be identical or different from each other, between which the layer (B) is sandwiched.

Biodegradability in the layer (B) is faster than that in the layer (A). Accordingly, in the case that a film or sheet having same thickness is compared to each other, biodegradability in the film or sheet comprising the layer (B) sandwiched between two pieces of the layer (A) is more excellent than biodegradability in a film or sheet comprising the layer (A) alone.

Further, in the film or sheet comprising the layer (B) sandwiched between two pieces of the layer (A), there is improved tensile strength in lateral direction.

In the multi-layers film, the thickness is not particularly limited and, for example, it can be employed in 1 $\mu$m-10 mm, and preferably 10 $\mu$m-1.0 mm. Thickness ratio of the layer (A) with respect to the layer (B) is not particularly limited, and it is decided depending upon purposes. Further, thickness of the two pieces of the layer (A) may be identical or different from each other, by which the layer (B) is sandwiched.

XI-5.3 Molding method of the multi-layers film

The multi-layers film or sheet can be molded by conventional coextrusion methods using raw materials which construct the layer (A) and raw materials which construct the layer (B).

For example, if a coextruder is employed, the multi-layers film can be prepared by a T-die method, an inflation method, and a blow molding method. In the case of an extrusion-molding, In the case of the coextruding, a flat die or a circular die can be employed.

Further, in the multi-layers film, a film corresponding to the above-described respective layers (A) and (B) is molded by a T-die method, an inflation method, a calendaring method, and a casting method, etc., and those may be also prepared by an adhesive or fusion.

The multi-layers film may be also monoaxially or biaxially stretched.

A stretched multi-layers film can be also employed as a film for a shrinkable type cushion sheet having discontinuous cells.

XI-5.4 Processing for the embossed film

The above-described base film 1 can be employed for the embossed film 2 to be employed in the present invention. The embossed film 2 is obtained by vacuum molding, compressed-air molding, and vacuum/compressed air molding, etc., optionally, by forming a plurality of the projections 3 over whole surface of the film while heating, using the base film 1.

XI-6. Processing for the cushion sheet having discontinuous cells

By laminating the plain base film 1 and the embossed film 2 having a plurality of the projections 3 obtained as described hereinabove using heating or an adhesive, the cushion sheet having discontinuous cells is formed.

The above-described various cushion sheets having discontinuous cells may be laminated with a craft paper or corrugated board at a projections side or a plain side.

The cushion sheets having discontinuous cells of the present invention is not particularly limited in uses, and it is preferably employed for products which are apt to be left alone under natural circumstances after use.

For example, it is preferably employed for precision equipments, electronic parts, china and porcelain, glassware, furniture, fruits, cookies, and an inside layer for a corrugated paper, etc., and it is excellent in a variety of properties such as a dumping property, a heat insulating property, a moisture-proofing property, lightness, and a hygienic property.

POSSIBILITY OF UTILIZATION IN INDUSTRIES FOR THE PRESENT INVENTION [XI]

According to the present invention [XI], there can be obtained the cushion sheets having discontinuous cells in which heat resistance and biodegradability are improved, and which is well-balanced in moldability of a shrinkable film, physical properties (particularly, it has a sufficient tensile strength lengthwise and laterally) in uses, and biochemical degradability after dumping.

Degradation ratio exceeds 20%, preferably 30% after cultivated for 4 weeks in a municipal drainage sludge regulated by JIS K6950.

Hereinafter, the present invention [XII] is illustrated.

The present invention relates to a particle-state article having a degradable thin layer, in which the surface of the particle-state article is coated by a mixture of at least one kind selected from the group consisting of a polycaprolactone alone irradiated by an ionizing radiation or a composition of the polycaprolactone irradiated by an ionizing radiation with a natural resin, a cellulose acetate resin, a biodegradable cellulose ester, a biodegradable aliphatic polyester, an olefin polymer, a copolymer containing an olefin, a polyvinylidene chloride polymer, a copolymer containing vinylidene chloride, a diene-based polymer, waxes, a petroleum resin, oils & fats and a modified product therefrom with other coating agents, and relates to a particle-state article having a degradable thin layer, in which a mixture with a coating material is coated over the surface of the particle-state article, and then irradiated by an ionizing radiation.

The polycaprolactone (a first component for a coating layer) to be irradiated by an ionizing radiation may be alone or together with at least one of other components.

Herein, at least one of the other components are other coating material (a second component for a coating layer), a third component for a coating layer, and a fourth component for a coating layer, etc. which are illustrated hereinafter.

In the present invention, contents coated by a degradable thin layer in the particle-state article having a degradable thin layer may be even jelly-like, a liquid, and a solid, and the solid may be even particles and powdered materials.

The particle-state article having a degradable thin layer is obtained by steps in which the coating material is dissolved or emulsified, and sprayed and coated over the particle-state article while drying.

As the polycaprolactone which is a raw material in the present invention, there can be employed ones described hereinabove.

As the biodegradable cellulose esters in the present invention, there can be employed ones described hereinabove.

In the present invention, the polycaprolactone irradiated by an ionizing radiation has a gel fraction of 0.05-100%, preferably not less than 1%, and more preferably 5-90%.

By irradiating in the range of the gel fraction, a melting point becomes higher because of formation of crosslinking, and tensile strength and tear strength elevate, resulting in that there is lowered a blocking property between particles during coating and transparency becomes higher in the thin layer.

In the present invention, an irradiation by an ionizing radiation may be conducted even at any stages of a state in which the polycaprolactone is a raw material, a state in which the polycaprolactone coexists with at least one of the other components, during coating, and after coating.

Further, there is included a mode irradiated by a low irradiation quantity at an initial stage, and then irradiated by a high irradiation quantity at a latter stage, for example, irradiation is carried out so that the gel fraction is adjusted to 0.01-10%, preferably 0.05-1.0% in a pellets stage of the polycaprolactone which is a raw material, and it is adjusted to 1-90%, preferably 10-90% during molding or after molding.

As sources of the ionizing radiation to be employed in a irradiation treatment by the ionizing radiation according to the present invention, there can be employed the rays in the above-described present invention [IX].

As materials to be employed as the other coating materials in the present invention, there are enumerated natural resins, a cellulose acetate resin, a biodegradable cellulose ester, a biodegradable aliphatic polyester, a polyvinylalcohol, a polypeptide, an olefin polymer, a copolymer containing an olefin, a vinylidene chloride polymer, a copolymer containing vinylidene chloride, a diene-based polymer, waxes, a petroleum resin, oils & fats, starch, and a modified product therefrom, etc. Those may be employed solely or in combination of two or more kinds together with the polycaprolactone.

The biodegradable aliphatic polyester resins to be employed in the present invention is a polyester resin other than the polycaprolactone, and there can be resins described hereinabove.

(Other coating materials)

The olefin polymer which is one of the other coating materials is a polyethylene, a polypropylene, an ethylene-propylene copolymer, a polybutene, a butene-ethylene copolymer, a butene-propylene copolymer, and a polystyrene, etc., and the copolymers containing an olefin are an ethylene-vinyl acetate copolymer, an ethylene-acrylic acid copolymer, an ethylene-acrylate copolymer, an ethylene-methacrylic acid copolymer, an ethylene-methacrylate copolymer, an ethylene-carbon monoxide copolymer, and an ethylene-vinyl acetate-carbon monoxide copolymer, etc. The copolymer containing vinylidene chloride are a vinylidene chloride-vinyl chloride-based copolymer, and the diene-based polymer is a butadiene polymer, an isoprene polymer, a chloroprene polymer, a butadiene-styrene copolymer, an EPDM polymer, and a styrene-isoprene-copolymer, etc. The waxes are a bees-wax, a wood wax, and paraffins, etc., and the natural resins are a natural rubber, a rosin, etc. The oils & fats and a modified product therefrom are a hydrogenated oil, a solid fatty acid and metal salts thereof, and the polypeptides are a polyamino acid and a polyamide ester, etc., and the starch is a natural starch and a processed starch.

As the starch, there can be employed the above-described starch.

In the present invention, weight percent of the coating material with respect to the unit weight of particles to be coated, that is, coating ratio ranges in 1-40%, preferably 2-30%, and more preferably 4-20%.

Further, the polycaprolactone is employed in a range of 10-100% (by weight), and preferably 50-100% based on total of coating materials, and other coating materials are employed in a range of 0-90% (by weight), and preferably 0-50% based on total of coating materials.

In the case of employing the polycaprolactone and the polylactic acid, formulating weight ratio is 99/1-1/99, preferably 90/10-60/40.

In the case of employing the polycaprolactone and the polyester from the diol/aliphatic dicarboxylic acid, those are preferably formulated in a range of 80/20-20/80 by weight.

In the case of employing a biodegradable polymer mixture composed of the polylactic acid, the aliphatic polyester resin from a diol/aliphatic dicarboxylic acid, and the polycaprolactone, those are formulated in a weight ratio of the aliphatic polyester resin from a diol/dicarboxylic acid with respect to the polycaprolactone of 30/70-70/30, and a weight ratio of the polylactic acid with respect to the polycaprolactone of 20/80-80/20.

It is to be noted that there are optionally employed the third component and the fourth component for the coating material being capable of mixing described hereinafter.

As the third component for the coating material to be employed, there are enumerated surface active agents as an elution controlling agent, talc, calcium carbonate, metal oxides, and, further, a variety of lubricants, plasticizers, and thermal stabilizers, etc., which are an insoluble filler. These components is required to be uniformly dispersed. If not uniformly dispersed, a continuous phase of the coating material is lost because of aggregation of fine particles, resulting in that an effect of the coating layer is lost.

In the present invention, optionally, the fourth component for the coating material is further employed. As such the fourth component for the coating material, there are enumerated, for example, an accelerator for photodegradation, an accelerator for biodegradation, an elution controlling agent, fillers, and cellulose powder, etc., and these components can be employed by uniformly dispersing.

As the accelerator for photodegradation, there can be employed the above-described ones.

As the accelerator for biodegradation, there can be employed the above-described ones.

Further, as the accelerator for biodegradation, there can be included, for example, a biodegradable enzyme such as lipase, cellulase, and esterase. The biodegradable enzyme can be employed by suspending or dispersing in a solvent. It is to be noted that the accelerator for photodegradation and the accelerator for biodegradation can be employed together. Still further, cellulose powder can be also mixed for the purpose of preventing to aggregation of coated granules.

In the present invention, the particle state products can be obtained as follows. That is, the coating material is suspended or dispersed in water or a volatile organic solvent, and sprayed on surface of the particle state products while maintaining it at a high temperature and, simultaneously, while drying in a moment by blowing a high speed heated air stream at the surface. As the organic solvent, there are enumerated ketones such as acetone; ethers such as diisopropylether and tetrahydrofran; alcohols such as methanol, ethanol, and isopropanol; esters such as ethyl acetate; and chlorinated hydrocarbons such as methane chloride, etc.

POSSIBILITY OF UTILIZATION IN INDUSTRIES FOR THE PRESENT INVENTION [XII]

According to the present invention [XII], there can be obtained coating fertilizers, coating chemicals for agriculture, capsulated chemicals, or microcapsule for a carbonless copy paper, which do not remain even though it is left alone under natural circumstances, and which are excellent in storage stability.

Hereinafter, the present invention [XIII] is illustrated.

The particle-state composition for agriculture and gardening of the present invention [XIII] is a coated particle-state fertilizer obtained by spraying a solution composed of the above-described coating material onto the particle-state fertilizers and, simultaneously, while drying in a moment by blowing a high speed heated air stream at the surface, in which the coating layer has degradability, duration of a fertilizing effect can be also adjusted by controlling the thickness and composition ratio of the coating layer.

As the polylactone (A) in the present invention, there can be employed the lactone resin in the common items described hereinabove. Of the polylactone (A), the polycaprolactone is preferred.

A number average molecular weight of the polylactone (A) is 500-200,000, and preferably 1000-20,000. In the case that the molecular weight is too lower than 500, tackiness is shown and, in the case of too more than 200,000, solubility into a solvent becomes worse, and even though it is dissolved, viscosity becomes high, resulting in that processability (coatability) becomes worse.

Density of the polylactone (A) to be employed in the present invention is 1.20-1.25 or so. For that reason, in the case of employing a petroleum resin having the density of 0.97 and a polycaprolactone having the density of 1.21, and in a mixing weight ratio of the polycaprolactone of not less than approximately 20%, coating layer ends to sink in water.

Component (B)

The component (B) to be employed in the present invention is a petroleum resin, rosins, and a mixture thereof. In the component (B), there can be also added shellac, zeins, and arabic gum, etc.

The petroleum resin is a resin obtained by polymerization of distillates having a carbon number of 5-11 in cracking products of petroleum. Density of the petroleum resin to be employed in the present invention is 0.970-0.975 or so.

As the rosins, there are enumerated a rosin, a hardened rosin, and an ester gum. Density d (25/25) of the rosins to be employed in the present invention is 1.07-1.08 or so.

As the rosin esters, there are enumerated a methyl ester of a rosin or abietic acid which is a primary component thereof, a hydrogenated product thereof, an ethylene glycol ester of a rosin or abietic acid, a diethylene glycol ester of a rosin or abietic acid, a pentaerythritol ester of a rosin or abietic acid, and as the ester gum, there is enumerated a glycerine ester of a rosin or abietic acid, etc.

The shellac is a secretion of insects, and there are enumerated ones having an acid value of 80 or so and a softening point of 80°C or so.

As the zeins, there is preferred a vegetable protein extracted from a vegetable such as a corn.

The arabic gum is a secretion of a vegetable, and there are preferred colorless or lemon-yellow ones.

As the above components (B) or other components to be added thereto, there are preferred natural-based ones, for example, a combination of the ester gum with the zeins, whereby, it becomes a completely biodegradable one.

The polylactone (A) is employed in a mixing weight ratio range of 20-70%, and preferably 30-60%.

In the case that the ratio of the polylactone (A) is too less than 20%, biodegradability and disintegrability become poor, and in the case of exceeding 70%, moisture permeability unpreferably becomes too high.

Third components

In the coating layer composed of the above-described polylactone (A) and component (B), there can be added a third component (component (C)).

As such the third component, there are enumerated surface active agents as an elution controlling agent, and talc, calcium carbonate, and metal oxides, etc. which are an insoluble filler.

These third components are required to be uniformly dispersed.

If not uniformly dispersed, a continuous phase of the coating material is lost because of aggregation of fine particles, resulting in that an effect of the coating layer is lost.

Addition amount is preferably not more than 20% by weight based on total weight of the coating layer in view of not too high moisture permeability.

Fourth components

In the present invention, there are optionally employed a fourth components. As such the fourth components, there are enumerated, for example, an accelerator for photodegradation, an accelerator for biodegradation, an elution controlling agent, fillers, and cellulose powder, etc. which are described in the prior common items, and these components can be employed by uniformly dispersing. Further, cellulose powder can be also mixed for the purpose of preventing aggregation of the coated granules.

The above-described third components and fourth components are usually mixed uniformly into the coating layer composed of the polylactone (A) and component (B), and optionally, those may be also coated like layers at an inside or outside of the degradable coating layer.

Thickness of the degradable coating layer is 0.5-5.0 $\mu$m or so, and it can be controlled depending upon purposes and an extent of a gradual effect such as for a paddy field, for a vegetable field, for an orchard, and for a grass plot, etc.

In the case of being too thinner than the range, the moisture permeability results in elevation, and there becomes not shown an effect capable of controlling durability of a fertilizing period and, on the other hand, in the case of being too thicker than the range, it takes a long time of period for disintegration and degradation, and it also causes an increase of costs.

In the degradable coating layer in which there is contained the particle-state composition for agriculture and gardening of the present invention, since specific gravity is larger than water, even though the composition is utilized by scattering in a paddy, the coating layer does not cause a floating phenomenon over water until not remaining a shape by biodegradation of the coating layer even after fertilizers, etc. are dissolved.

In the particle-state composition for agriculture and gardening, there may be even added agricultural chemicals, etc. in addition to fertilizers.

As the fertilizers, there are enumerated a variety of fertilizers such as nitrogen-based ones, phosphorus-based ones, and sulphur-based ones. As the agricultural chemicals, there are enumerated a herbicide, an insecticide, and a sterilizer, etc.

As the size of particle-state products, there are enumerated granulated products and crushed products having diameter of 0.1-10 mm or so.

In the present invention, the particle-state fertilizer can be obtained as follows. That is, the coating material is dissolved or dispersed in a solvent such as a hydrocarbon, a chlorinated hydrocarbon, an alcohol, a ketone, an ester, and an ether, and sprayed on surface of the particle state products while maintaining at a high temperature and, simultaneously, while drying in a moment by blowing a high speed heated air stream at the surface.

By the use of the particle-state composition for agriculture and gardening of the present invention, the moisture permeability in the coating layer is not more than 1,000 $g/m^2$-day-1 atmosphere (atmosphere is occasionally abbreviated 1 atm), preferably not more than 500 $g/m^2$-day-1 atmosphere, and it does not solidify by moisture absorption during storage.

POSSIBILITY OF UTILIZATION IN INDUSTRIES FOR THE PRESENT INVENTION [XIII]

In the particle-state fertilizer according to the present invention [XIII], duration of a fertilizing effect can be controlled, and the coating layer is disintegrated and decomposed by microorganisms in soil after elution of fertilizing components, and it does not remain in soil. Further, residual components are lost by disintegration or decomposition of the coating layer after lapse of a cultivation period of farm products, whereby, there is shown an effect that supply of fertilizers can be readily controlled.

Hereinafter, the present invention [XIV] is illustrated.

The biodisintegrable resin composition of the present invention is composed of 100 parts by weight of a biodegradable resin composition and 5-20 parts by weight of a thermoplastic resin, and the biodegradable resin composition is composed of 5-70 parts by weight of a polycaprolactone and 95-30 parts by weight of an aliphatic polyester resin and, further, there are optionally added at least one kind of a fatty acid amide, a liquid lubricant, talc, and finely-powdered silica.

In the present invention, there can be employed the above-described lactone resin, and it is preferably a polycaprolactone.

Molecular weight of the polycaprolactone is the same as molecular weight described hereinabove, and a number average molecular weight ranges in preferably 10,000-200,000, and more preferably 40,000-100,000.

In the present invention, as an aliphatic polyester resin, there can be employed the above-described aliphatic polyester resins not containing urethane bonds and aliphatic polyester resins containing urethane bonds, and also a polyester produced by microorganisms.

In the present invention, as formulating proportion of the aliphatic polyester resin with respect to the lactone resin, the lactone resin is 5-70 parts by weight, and the aliphatic polyester resin is 95-30 parts by weight.

In the case that the lactone resin is kneaded with the aliphatic polyester resin, although the presence of compatibility between both is preferred in view of mechanical properties in the resin composition obtained by kneading, in the case of the absence of compatibility between both, for example, there can be preferably added a compatibilizing agent such as a copolymer of resin components to be kneaded with the polycaprolactone, for example, a resin having an intermediate polarity between both.

The compatibilizing agent is not particularly limited and, if it has a compatibilizing property between the lactone resin and the aliphatic polyester resin. By the addition of the compatibilizing agent, both resins are exceedingly uniformly dispersed each other, and there is obtained a mixture having an excellent physical property.

[Thermoplastic resin]

The thermoplastic resin to be employed in the present invention is not particularly limited, and there can be exemplified a polystyrene-based resin (a polystyrene alone or a rubber-modified styrene-based resin, etc.), an olefin-based resin (a polypropylene, a polypropylene having a sharp molecular weight distribution obtained by use of a metallocene catalyst, an ethylene-propylene copolymer, a crystalline or noncrystalline olefin resin such as a polymethyl pentene), a polyester-based resin (a polyalkylene terephthalate such as a polyethylene terephthalate and a polybutylene terephthalate, a polyalkylene naphthalate such as a polyethylene naphthalate, or a copolyester containing not less than 50% by mol, preferably not less than 70% by mol of a polyalkylene naphthalate unit, and other aromatic polyester, etc.), a polyamide resin (a homopolymerized nylon or copolymerized nylon such as nylon 6, nylon 66, nylon 10, nylon 12, nylon 610, and nylon 612, and an aromatic polyamide, etc.), a polycarbonate-based resin (a bisphenol A type polycarbonate, etc.), a polysulphone-based resin (a polysulphone and a polyether sulphone, etc.), a polyphenylene ether-based resin, a polyphenylene sulphide-based resin, a polyether ketone-based resin, a polyacetal-based resin (a homopolymerized or copolymerized polyacetal), and a thermoplastic elastomer (a thermoplastic polyurethane elastomer and a polyester elastomer, etc.), etc. The thermoplastic resins may be employed solely or in combination of two or more kinds.

(Rubber-modified styrene-based resin)

Of the thermoplastic resins, the rubber-modified styrene-based resin (a melting point of approximately 70°C) is preferred in which Dupon't impact strength is largely improved by the addition of a small amount.

Although the rubber-modified styrene-based resin may be even a styrene-based resin having impact resistance which is constructed by a mixture of a rubber component with a styrene-based resin not modified by rubber, usually, (a) and (b) described below are employed.

(a) a graft polymer of a rubber component with an aromatic vinyl monomer obtained by polymerization of at least one of an aromatic vinyl monomer under the presence of rubber components.

(b) a block copolymer of a rubber block A with an aromatic vinyl polymer block B (an ABA type or a BAB type block copolymer).

Of those, the rubber-modified styrene-based graft copolymer (a) is particularly preferred in which a large impact resistance is largely improved by the addition of a small amount of rubber.

The block copolymer (b) often forms a thermoplastic elastomer.

Further, the graft copolymer (a) may be even a random copolymer, and a structure in the block copolymer may be a linear-shape or star-shape.

As a preferred rubber-modified styrene-based graft copolymer (a), there are enumerated a graft copolymer [particularly, an impact resistant polystyrene, for example, a styrene-butadiene copolymer (an SB resin), a butadiene-styrene-maleic anhydride copolymer (a rubber-modified styrene-maleic anhydride copolymer), a styrene-acrylonitrile-butadiene copolymer (an ABS resin), an AXS resin (in the formula, A represents acrylonitrile, X represents at least one kind of rubber component selected from an ethylene-propylene rubber (an EPDM rubber), an acrylic rubber, an ethylene-vinyl acetate copolymer, and a chlorinated polyethylene, and S represents styrene, respectively)], and a styrene-based block copolymer (for example, a thermoplastic elastomer such as a styrene-butadiene-styrene (SBS) copolymer and a styrene-isoprene-styrene (SIS) copolymer), etc. The rubber-modified styrene-based graft copolymers (a) may be even a hydrogenated product. Of the above descriptions, there are particularly preferred the SB resin, the rubber-modified styrene-maleic anhydride copolymer, the styrene-acrylonitrile-butadiene copolymer (an ABS resin), the styrene-butadiene-styrene (SBS) copolymer, the styrene-isoprene-styrene (SIS) copolymer, and a hydrogenated product thereof.

The content of the rubber component contained in the rubber-modified styrene-based graft copolymer (a) is, for example, 1-20% by weight, preferably 5-15% by weight, and more preferably 8-10% by weight.

The rubber component is not particularly limited, and there can be employed components which are commonly employed for conventional rubber-modified styrene-based resins, for example, a natural rubber, a synthetic rubber such as a polybutadiene rubber, a polyisoprene rubber, a styrene-butadiene-based copolymerized rubber, a styrene-isoprene-based copolymerized rubber, a butyl rubber, and an ethylene-propylene-based copolymerized rubber, or a graft copolymerized rubber of the rubbers with styrene, etc.

The styrene-butadiene-based copolymerized rubber is particularly preferred. Of the styrene-butadiene-based copolymerized rubber, there is particularly preferred a resin having a number average molecular weight range of 50,000-500,000, the content range of a polymer block formed by styrenes of 10-60% by weight. In the case that the molecular weight is less than 50,000, impact resistance is not sufficient and, in the case of exceeding 500,000, flowability becomes unpreferably lower during molding. Further, there may be employed even a mixture in which a polybutadiene rubber having a number average molecular weight range of 50,000-500,000 or so is appropriately formulated with the styrene-butadiene based copolymerized rubber.

In the above-described thermoplastic resin, in the case that the thermoplastic resin is molded solely into a sheet (thickness of 0.35 mm), Dupon't impact strength is preferably not less than 10 kgf-cm/cm$^2$, and particularly, not less than 15 kgf-cm/cm$^2$.

As formulating proportion of the biodegradable resin composition with respect to the thermoplastic resin, although depending upon mechanical properties and biodegradability in the biodegradable resin composition alone and mechanical properties and biodisintegrable ability in a biodisintegrable resin composition to be finally desired, the thermoplastic resin is 5-20 parts by weight, and preferably 8-12 parts by weight based on 100 parts by weight of the biodegradable resin composition.

In the case that resins to be employed for the biodegradable resin composition are kneaded with the thermoplastic resin, although the presence of compatibility between both is more preferred, in the case of the absence of compatibility between both, for example, there can be preferably added a compatibilizing agent such as a copolymer of the biodegradable resin components with the thermoplastic resin, for example, a resin having an intermediate polarity between both.

The compatibilizing agent to be employed is not particularly limited and, if it has a compatibilizing property between the biodegradable resin composition and the thermoplastic resin. By the addition of the compatibilizing agent, both resins are exceedingly uniformly dispersed each other, and there is obtained a mixture having an excellent physical property.

As the fatty acid amides to be employed in the present invention, there can be employed the fatty acid amides described hereinabove.

As formulating proportion of the fatty acid amides, the fatty acid amides range in 0.2-5 parts by weight, and preferably 0.3-1.5 parts by weight based on 100 parts by weight of total of the lactone resin and the aliphatic polyester resin.

In the case that the formulating proportion of the fatty acid amides is less than 0.2 part by weight, an effect for preventing a blocking is small and, on the other hand, in the case of more than 5 parts by weight, a slip becomes too large in a molded article such as a film, and a printing applicability and adhesive ability, etc. also become worse.

In the biodisintegrable resin composition of the present invention, the above-described liquid lubricants can be further added.

Addition amount of the liquid lubricants is 0.1-3 parts by weight, and preferably 0.3-0.6 parts by weight based on 100 parts by weight of the biodegradable resin composition.

In the biodisintegrable resin composition of the present invention, the above-described finely-powdered silica can be further added.

Addition amount of the finely-powdered silica is 0.1-3 parts by weight, and preferably 0.3-1.0 parts by weight based on 100 parts by weight of the biodegradable resin composition.

In the biodisintegrable resin composition of the present invention, the above-described talc can be further added.

Addition amount of talc is 10-40 parts by weight, and preferably 20-30 parts by weight based on 100 parts by weight of the biodegradable resin composition.

In the biodisintegrable resin composition of the present invention, the above-described various additives for resins can be further added.

As the additives for resins, there are enumerated the above-described plasticizers, thermal stabilizers, extenders, fillers such as calcium carbonate, lubricants, coloring agents, flame retardants, water resistible agents, flowing drop agents, automatic oxidants, ultraviolet ray stabilizers, crosslinking agents, anti-bacterial agents, herbicides, anti-oxidants, deodorants, nucleating agents, antistatic agents, accelerators for photodegradation, and accelerators for biodegradation, etc.

As a method for kneading the lactone resin, the aliphatic polyester resin, the thermoplastic resin and the fatty acid amides, the liquid lubricants, the finely-powdered silica, and talc, etc., the above-described methods can be employed.

In a resin obtained in the present invention, biodegradability in the biodegradable resin components are not deteriorated, and it has a far stronger impact strength than the biodegradable resin components alone.

POSSIBILITY OF UTILIZATION IN INDUSTRIES FOR THE PRESENT INVENTION [XIV]

According to the present invention [XIV], it was able to jumpingly improve an impact resistance in the biodisintegrable resin composition. Accordingly, it has a possibility capable of employing in a variety of fields in place of general-purpose resins.

Further, the biodisintegrable resin composition showed an excellent biodegradability without almost deteriorating the biodegradability in the biodegradable resin components. After biodegradation, since there are finally remained only a small amount of nonbiodegradable components, only small amount of wastes are piled, and it is more advantageous in view of environmental problems compared to the use of the general-purpose resins.

[In relation to Examples and Experimental methods]

Hereinafter, although characteristic Examples of the respective present inventions [I]-[XIV] are illustrated, the respective present inventions are not limited to the Examples.

It is to be noted that "%" and "part" are based on the weight in the respective present inventions, so far as not being particularly noticed.

Physical properties were measured as follows.

Melt Index (MI): It is an extrusion amount (Unit, g/10 minutes) per 10 minutes at 190°C and the load of 2160 g.
Melt tension (MT): It is a value (Unit, g) of a tensile force when pulling a rod-shape resin extruded at conditions of a cylinder temperature of 150°C, a cylinder speed of 1 mm/minute, an extruding diameter of 1 mm ∅, L/D=10, an inlet angle=90°, a pulling speed of 10 m/minute, and a distance of 50 cm between a capillary and a load cell.
Yield strength, extension at break, tensile elasticity: Those are according to JIS K7113.
Dupon't impact strength: It is according to JIS K7211.
Izod impact strength (23°C): It is according to JIS K-7110.
Evaluation method for biodegradability in samples: There are various methods such as a method using an active sludge according to JIS K6950, a method burying in soil, a method immersing into sea water or rivers, and a method evaluating in compost, etc. However, in the Examples described hereinafter, biodegradability is measured from oxygen consumption amount by powdered samples of molded articles in an active sludge according to JIS K6950 which shows a correlation with degradability in actual fields.

(Examples of the present invention [I])

(Examples I-1 to I-3 and Comparative Example I-1) (extrusion molding)

There were formulated Bionolle #1001 (a succinic acid/1,4-butanediol copolymer manufactured by Showa Kobunshi, Ltd.) which is a polyester resin, a polycaprolactone "PCL H7" (a number average molecular weight of 70,000, manufactured by Daicel Chemical Industries, Ltd.), and talc in the weight ratio as shown in Table I-1, followed by supplying to a Laboplasto mill to knead at 150°C and 30 rpm. After torque became stable, thermally kneading was further conducted for 10 minutes, and a resin composition obtained was molded into a sheet by an extrusion molding. Results are shown in Table I-1.

Molding conditions in the extrusion molding

cylinder temperature: 160°C          Screw rotation speed: 60 rpm
Resin pressure: 210-260 kg/cm$^2$
Roll temperature: 60°C          Roll speed: 0.5 m/minute
Sheet: width of 250 mm, thickness of 0.5 mm

Table I-1

|  | Example I-1 | Example I-2 | Example I-3 | Comparative Example I-1 |
|---|---|---|---|---|
| Composition ratio (part by weight) |  |  |  |  |
| Bionolle #1001 | 58 | 49 | 42 | 70 |
| Polycaprolactone "PH7" | 24 | 21 | 18 | 30 |
| Talc | 20 | 30 | 40 | 0 |
| Moldability in sheet extruding | Unevenness in thickness is slightly observed. | Excellent | Excellent | Necking is large, thickness and width are inferior. |
| Specific gravity (g/cm$^3$) | 1.361 | 1.463 | 1.586 | - |
| Vicat softening point (°C) | 106.1 | 107.2 | 109.1 | - |
| Flexural strength (kg/cm$^2$) | 356 | 431 | 500 | - |
| Flexural elasticity (kg/cm$^2$) | 11300 | 17500 | 26900 | - |
| Tensile strength (kg/cm$^2$) | 275 (Yield point) | 288 (Yield point) | 312 (Fracture point) | - |
| Tensile elasticity (kg/cm$^2$) | 10100 | 15100 | 19800 | - |
| Tensile elongation (%) | 121 | 18 | 4 | - |

As a result, in the case that talc is not mixed, necking and unevenness in thickness are remarkable, and in the case of die-lip opened degree of 1.2 mm, even in the case that extrusion temperature was lowered to 140°C and 120°C, it was difficult to extrude a sheet.

(Examples I-4 to I-6 and Comparative Example I-2) (a vacuum-molded sheet)

There were formulated Bionolle #3001 (a succinic acid/adipic acid/1,4-butanediol copolymer manufactured by Showa Kobunshi, Ltd.) which is a polyester resin, a polycaprolactone "PCL H7" (a number average molecular weight of 70,000, manufactured by Daicel Chemical Industries, Ltd.), and talc in the weight ratio as shown in Table I-2, followed by supplying to a Laboplasto mill to knead at 150°C and 30 rpm. After torque became stable, thermally kneading was further conducted for 10 minutes, and a resin composition obtained was vacuum-molded using a single sheet molding machine. Molding conditions in the vacuum molding

Molding temperature: 110°C
Cooling time of period: 5 seconds
Sheet: 250 x 250 mm, thickness of 0.5 mm

Results are shown in Table I-2. As a result, in the case that talc is not mixed, in the molding temperature of 110°C, draw-down is remarkable, and it was difficult to vacuum-mold and, in 95°C, although it was able to mold, a mold releasing ability is worse, and it required more than 2 times of cooling time of period compared to a sample containing talc.

Table I-2

|  | Example I-4 | Example I-5 | Example I-6 | Comparative Example I-2 |
|---|---|---|---|---|
| Composition ratio (part by weight) |  |  |  |  |
| Bionolle #3001 | 56 | 49 | 42 | 70 |
| Polycaprolactone PH7 | 24 | 21 | 18 | 30 |
| Talc | 20 | 30 | 40 | 0 |
| Moldability in vacuum molding | Cooling time of period is slightly long, | Excellent | Excellent | Draw down is caused, and mold release is inferior. |
| Thermally shrinking force (g/cm$^3$) | 250 | 600 | 1100 | 100 |

Thermally shrinking force was measured from a peak top at 120°C using a Molten rheometer (an extension viscometer) manufactured by Toyo Seki, Ltd.
As a result, the thermally shrinking force is large in a sample containing talc, and it is not apt to cause a draw down in a molten resin during vacuum molding, etc.

(Example I-7 and Comparative Example I-3) (biodegradability in an extrusion-molded article)

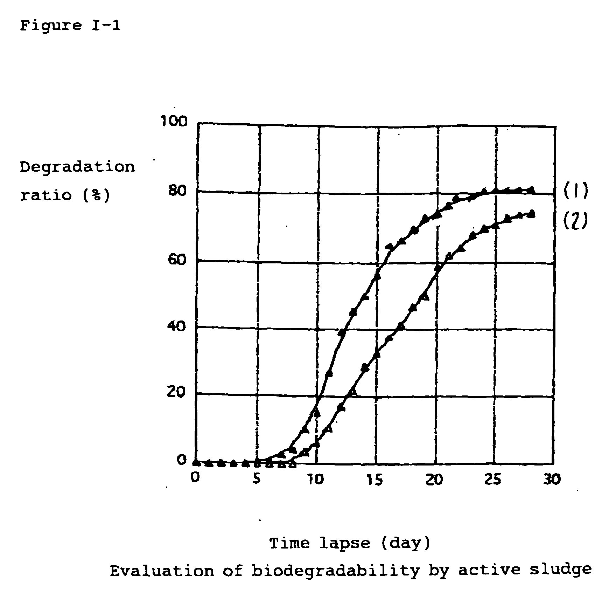

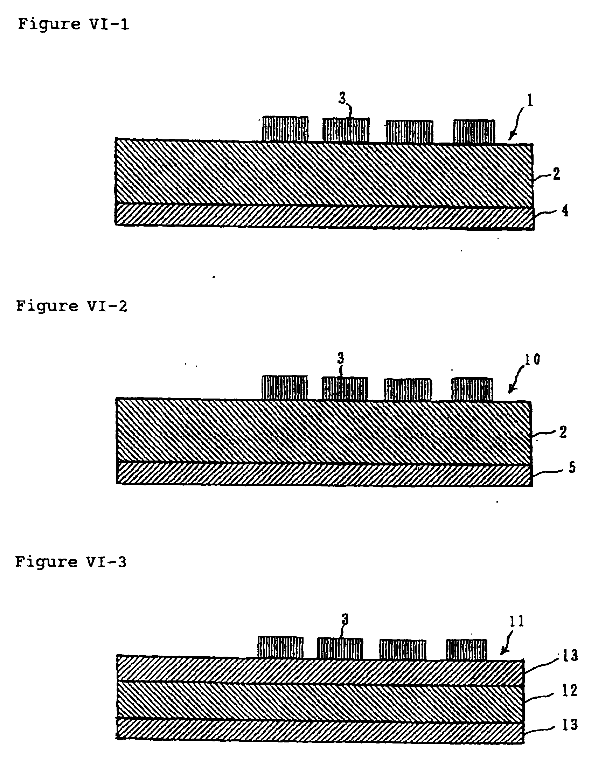

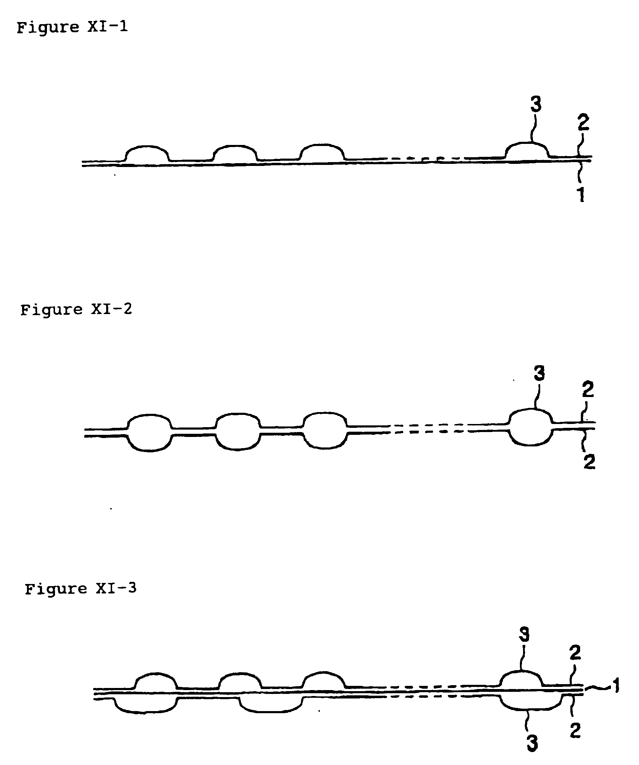

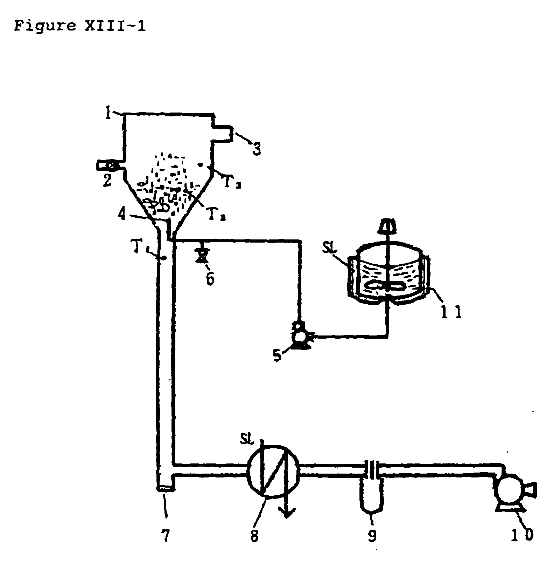

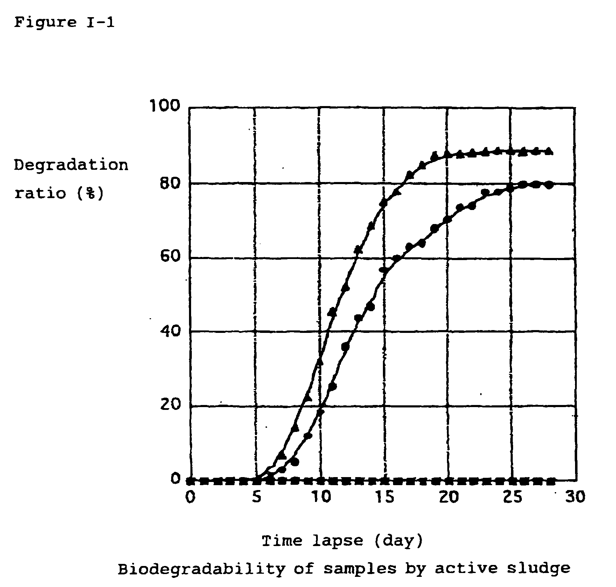

In relation to the sheet (Bionolle #1001/Polycaprolactone "PCL H7"/talc=49/21/30) obtained in the Example I-2, biodegradability was measured.
Result was 81% in the biodegradability after 28 days.
On the other hand, in relation to the sheet (Bionolle #1001/Polycaprolactone "PCL H7"/talc=49/21/0) obtained in the Comparative Example I-1, biodegradability was measured.
Result was 75% in the biodegradability after 28 days.
Results are shown in Figure 1.
The results show an effect that the biodegradability is improved by kneading talc.

(Example I-8 and Comparative Example I-4)

A flask equipped with an agitator, a branched tube, a tube for supplying a gas, and a vacuum line was charged with 43.8 g of dimethyl succinate (Mw=146), 29.1 g of 1,4-butanediol, and 0.02 g of tetraisopropyl titanate, followed by allowing to react at 190°C for 2 hours in ordinary pressures and nitrogen atmosphere while agitating. Successively, after internal pressure attained to 1-0.5 mmHg by gradually reducing pressures, agitation was conducted at 200°C for 8 hours. Furthermore, after heating to 210-220°C under a reduced pressure of 1-0.5 mmHg, agitating was conducted for 5 hours to remove methanol and excessive 1,4-butanediol from the reaction vessel to obtain a polyester resin to obtain a polyester resin. The polyester resin showed a number average molecular weight of approximately 38,000 and a weight average molecular weight of approximately 75,000.
A sheet was likewise prepared as in the Example I-7 using 100 parts by weight of the high molecular weight polyester resin not having urethane bonds, 11.1 parts by weight of a polycaprolactone "PCL H7", and 47.6 parts by weight of talc, and biodegradability was measured.
Result was 46% in the biodegradability after 28 days.
On the other hand, as Comparative Example I-4, a sheet was likewise prepared as in the Comparative Example I-3 using 100 parts by weight of the high molecular weight polyester resin and 11.1 parts by weight of a polycaprolactone "PCL H7", and biodegradability was measured.
Result was 40% in the biodegradability after 28 days.
As a result, in the case of employing the high molecular weight polyester resin not having urethane bonds, even though a formulating amount of the polycaprolactone is decreased, it is shown that the biodegradability is improved by mixing with talc.

(Examples of the present invention [II])

(Example II-1)

A flask equipped with an agitator, a branched tube, a tube for supplying a gas, and a vacuum line was charged with 35.4 parts by weight of succinic acid (Mw=118), 29.1 parts by weight of 1,4-butanediol (Mw=90), and 0.02 part by weight of tetraisopropyl titanate, followed by allowing to react at 200°C for 2 hours in ordinary pressures and nitrogen atmosphere while agitating.
Successively, after internal pressure attained to below 0.5 mmHg by gradually reducing pressures, agitation was conducted at 200°C for 5 hours while removing water and an excessive amount of 1,4-butanediol from the reaction vessel to obtain a polyester resin.
Subsequently, 0.8 part by weight of hexamethylene diisocyanate (Mw=168) was added at 200°C in a nitrogen atmosphere under ordinary pressures to obtain a polyester resin (A) which highly-polymerized. The polyester resin (A) which highly-polymerized exhibited a number average molecular weight of approximately 44,000 and a weight average molecular weight of approximately 185,000 based on a standard Polystyrene with a GPC.
Kneading of the polyester resin (A) with a polycaprolactone and preparation of a film sample were conducted by the following methods.
There were kneaded 100 parts by weight of the polyester resin (A) and 11.1 parts by weight of the polycaprolactone PCL H7 (having a number average molecular weight of 70,000, manufactured by Daicel Chemical Industries, Ltd.) at 150°C in a Laboplasto mill which rotates at 30 rpm. After torque became stable, it was further mixed for 10 minutes while heating to obtain a resin composition. The resin composition obtained was extrusion-molded by a T-die molding, and embossed to prepare a film having the thickness of 40 μm.
Two layers of a film having 300 x 250 mm were laminated, and heat-sealed in order to prepare a fixed hand-shape, followed by cutting a circumferential portion to obtain biodegradable throw-away gloves.
Although the gloves were employed for handling a silicone wafer in a clean room, movement of dust was minor from the gloves to the silicone wafer compared to conventional polyolefin-made gloves.

(Example II-2)

A flask equipped with an agitator, a branched tube, a tube for supplying a gas, and a vacuum line was charged with 43.8 parts by weight of dimethyl succinate (Mw=146), 29.1 parts by weight of 1,4-butanediol, and 0.02 parts by weight of tetraisopropyl titanate, followed by allowing to react at 190°C for 2 hours in ordinary pressures and nitrogen atmosphere while agitating. Successively, after internal pressure attained to 1-0.5 mmHg by gradually reducing pressures, agitation was conducted at 200°C for 8 hours.
Furthermore, heating was continued at 210 to 220°C while agitating under a reduced pressure of 1-0.5 mmHg for 5 hours to remove methanol and excessive 1,4-butanediol from the reaction vessel to obtain a polyester resin (B). The polyester resin (B) showed a number average molecular weight of approximately 38,000 and a weight average molecular weight of approximately 75,000.
A film was likewise obtained as in the Example II-1 using 100 parts by weight of the polyester resin (B) and 11.1 parts by weight of a polycaprolactone "PCL H1P" (having a number average molecular weight of 10,000, manufactured by Daicel Chemical Industries, Ltd.), and biodegradable throw-away gloves were prepared.
After employed the gloves for gardening, those were buried into soil, and those were able to be readily decomposed by biodegradation.

(Comparative Example II-1)

A glove was likewise prepared as in the Example II-1 from a film (thickness of 40 μm) composed of the polyester resin (A) alone.

(Comparative Example II-2)

A glove was likewise prepared as in the Example II-1 from a film (thickness of 40 μm) composed of the polyester resin (B) alone.

(Comparative Example II-3)

A glove was likewise prepared as in the Example II-1 from a film (thickness of 40 μm) composed of the polycaprolactone PCL H7 (manufactured by Daicel Chemical Industries) alone.

(Comparative Example II-4)

Gloves were prepared from films (thickness of 30 μm) composed of an ultra low density ethylene-α-olefin copolymer, a low density branched type polyethylene having a long chain, and a low density branched type polyethylene having a short chain, respectively.

In relation to the films obtained in the above descriptions, mechanical properties, heat resistance, and biodegradability, etc. were evaluated.

Table II-1

|  | Example II-1 | Example II-2 | Comparative Example II-1 | Comparative Example II-2 | Comparative Example II-3 |
|---|---|---|---|---|---|
| Strength at break (kg/cm$^2$) | 620 | 340 | 600 | 355 | 610 |
| Extension at break (%) | 560 | 285 | 530 | 280 | 730 |
| Heat resistance (°C) | 115 | 115 | 118 | 118 | 60 |
| Biodegradability (degradation %) | 36 | 40 | 2 | 15 | 81 |

Mechanical properties: Measurement of the mechanical strength and extension at break was conducted according to JIS 7112 using No. 3 Dumbbell as a sample.

Heat resistance: Two layers of resin pieces (30 x 30 x 1 mm) were laminated, and heated in an oven to observe a fused condition.

Minimum temperature causing fusion was measured.

Biodegradability: Results are shown by degradation ratio after cultivation for 4 weeks.

As a result, the biodegradability ratio in the Examples II-1 and II-2 is 36% and 40%, respectively. It is shown that those are improved in approximately 260% and 100%, respectively, compared to biodegradability ratio (10% in the Example II-1 and 22% in the Example II-2) to be expected from a mixing ratio of the polyesters (A) and (B) with the polycaprolactone. It can be thought that the polyesters (A) and (B) are inductively-decomposed by the polycaprolactone.

On the other hand, the throw away gloves made from conventional polyethylenes do not have biodegradability.

As described hereinabove, there is clearly shown an effect that in the throw away glove of the present invention obtained from a resin composition in which the polycaprolactone is kneaded, the biodegradability is improved without being accompanied by a decline of physical properties such as decline of a melting point in the aliphatic polyester resin to be kneaded during preparing a film.

Further, since the film made from the composition has a hygroscopicity, it is not apt to release dust drawn to the gloves compared to ones made from the polyethylenes, and skin is not apt to become moist with sweat.

(Examples of the present invention [III])

(Example III-1)

A flask equipped with an agitator, a branched tube, a tube for supplying a gas, and a vacuum line was charged with 35.4 parts by weight of succinic acid (Mw=118), 29.1 parts by weight of 1,4-butanediol (Mw=90), and 0.02 part by weight of tetraisopropyl titanate, followed by allowing to react at 200°C for 2 hours in ordinary pressures and nitrogen atmosphere while agitating.

Successively, after internal pressure attained to below 0.5 mmHg by gradually reducing pressures, agitation was conducted at 200°C for 5 hours while removing water and an excessive amount of 1,4-butanediol from the reaction vessel to obtain a polyester resin.

Subsequently, 0.8 part by weight of hexamethylene diisocyanate (Mw=168) was added at 200°C in a nitrogen atmosphere under ordinary pressures to obtain a polyester resin (A) which highly-polymerized. The polyester resin (A) which highly-polymerized showed a number average molecular weight of approximately 44,000 and a weight average molecular weight of approximately 185,000 based on a standard Polystyrene with a GPC.

There were kneaded 100 parts by weight of the polyester resin (A) and 11.1 parts by weight of the polycaprolactone PCL H7 (having a number average molecular weight of 70,000, manufactured by Daicel Chemical Industries, Ltd.) at 150°C in a Laboplasto mill which rotates at 30 rpm. After torque became stable, it was further kneaded for 10 minutes while heating to obtain a resin composition.

The resin composition obtained was molded into a stake having a shape of a square column and a sharpened bottom edge by an injection molding machine.

The stake was employed as a stake for civil engineering, and it was decomposed after 1 year under natural circumstances without remaining a stake-shape.

Separately, a sheet having 150 x 150 x 1 mm was prepared by compression molding while heating from a part of the above-described composition thermally kneaded by the Plasto mill to measure physical properties. Thermal press molding was conducted by preheating (150°C, 10 minutes) after feeding a fixed amount of the composition into a mold and compression molding (150°C, 100 kg/cm$^2$, 10 minutes), followed by being naturally cooled and taking out the sheet from the mold. Results are shown in Table III-1.

(Example III-2)

There were kneaded 100 parts by weight of the polyester resin (A), 11.1 parts by weight of the polycaprolactone PCL H7 (having a number average molecular weight of 70,000, manufactured by Daicel Chemical Industries, Ltd.), and 47.6 parts by weight (30% by weight in a total formulating composition) of talc at 150°C in a Laboplasto mill which rotates at 30 rpm. After torque became stable, it was further kneaded for 10 minutes while heating to obtain a resin composition. The resin composition obtained was molded using an injection molding machine into a cylinder-shape stake having outside diameter of 5 cm, wall thickness of 1 cm, and length of 50 cm in which an end of a ground side is opened, and there are set up many apertures at a half length portion from bottom in a lower side portion.

From the opened edge of the stake, urea fertilizers having large particle size are filled up in an inside of the cylinder, and a same resin-made cap was covered so that the fertilizers do not fall.

The fertilizers-filled up stake was driven in the vicinity of root of an orange tree which is planted at a slope.

After being driven, the fertilizers were gradually flown out of the apertures in the stake, and the fertilizers were supplied around the tree.

Separately, a sheet was likewise prepared as in the Example III-1 from a part of the above-described composition thermally kneaded by the Plasto mill to measure physical properties. Results are shown in Table III-2.

(Example III-3)

A flask equipped with an agitator, a branched tube, a tube for supplying a gas, and a vacuum line was charged with 43.8 parts by weight of dimethyl succinate (Mw=146), 29.1 parts by weight of 1,4-butanediol, and 0.02 part by weight of tetraisopropyl titanate, followed by allowing to react at 190°C for 2 hours in ordinary pressures and nitrogen atmosphere while agitating. Successively, after internal pressure attained to 1-0.5 mmHg by gradually reducing pressures, agitation was conducted at 200°C for 8 hours.

Furthermore, heating was continued at 210-220°C while agitating under a reduced pressure of 0.5-0.1 mmHg for 5 hours and removing methanol and excessive 1,4-butanediol from a system to obtain a polyester resin (B). The polyester resin (B) showed a number average molecular weight of approximately 38,000 and a weight average molecular weight of approximately 75,000.

A biodegradable stake was likewise prepared as in the Example III-1 using 100 parts by weight of the polyester resin (B) and 11.1 parts by weight of a polycaprolactone "PCL H1P" (having a number average molecular weight of 10,000, manufactured by Daicel Chemical Industries, Ltd.).

The stake was employed for gardening, and it was decomposed after 1 year under natural circumstances without remaining a stake-shape.

Separately, a sheet was likewise prepared as in the Example III-1 from a part of the above-described composition thermally kneaded by the Plasto mill to measure physical properties. Results are shown in Table III-1.

(Example III-4)

There were kneaded 100 parts by weight of the polyester resin (B), 11.1 parts by weight of the polycaprolactone PCL H1P (having a number average molecular weight of 10,000, manufactured by Daicel Chemical Industries, Ltd.), and 47.6 parts by weight (30% by weight in a total formulating composition) of talc at 150°C in a Laboplasto mill which rotates at 30 rpm. After torque became stable, it was further kneaded for 10 minutes while heating to obtain a resin composition. The resin composition obtained was molded using an injection molding machine into a column-shape stake having outside diameter of 3.2 cm, wall thickness of 1 mm, and length of 50 cm (length of 40 cm at an empty portion).

There were mixed 100 parts by weight of soybean waste, 50 parts by weight of potassium sulphate, 100 parts by weight of fish powder, and 10 parts by weight of an aqueous solution containing 0.001% by weight of a plant-growth regulator, followed by drying to prepare a rod-shape fertilizer (outside diameter of 3 cm and length of 40 cm). It was inserted into the column-shape stake, and a same resin-made cap was covered.

The fertilizer-filled up stake was driven in the vicinity of root of a grape tree which is planted at a slope. With degradation of the stake, the fertilizer and chemicals were supplied around the tree.

By preparatory molding of such the stake, fertilizers can become supplied by only driving the stake in place of supplying fertilizers, etc. through turning up soil, workability is improved, and utilization ratio of the fertilizers is improved and, further, a bad smell of the fertilizers is also improved. Still further, air, etc. becomes apt to be supplied from the stake into the ground.

Separately, a sheet was likewise prepared as in the Example III-1 from a part of the above-described composition thermally kneaded by the Plasto mill to measure physical properties. Results are shown in Table III-2.

(Example III-5)

A cylinder-shape stake was likewise molded as in the Example III-1 except that there were employed 70 parts by weight of the polyester resin (A) and 30 parts by weight of the polycaprolactone "PCL H7".

From an opened edge of the stake, urea fertilizers having large particle size were filled up in an inside of the cylinder, and a same resin-made cap was covered so that the fertilizers do not fall.

The fertilizers-filled up stake was driven in the vicinity of root of an orange tree which is planted at a slope.

After being driven, the fertilizers were gradually flown from the apertures in the stake, and the fertilizers were supplied around the tree.

Separately, a sheet was likewise prepared as in the Example III-1 from a part of the above-described composition thermally kneaded by the Plasto mill to measure biodegradability of 75%.

(Comparative Example III-1)

A stake was likewise molded as in the Example III-1 except that there was employed the polyester resin (A) alone.

Separately, a sheet was likewise prepared as in the Example III-1 from a part of the above-described composition thermally kneaded by the Plasto mill to measure physical properties. Results are shown in Table III-1.

(Comparative Example III-2)

A stake was likewise molded as in the Example III-1 except that there was employed the polyester resin (B) alone.

Separately, a sheet was likewise prepared as in the Example III-1 from a part of the above-described composition thermally kneaded by the Plasto mill to measure physical properties. Results are shown in Table III-1.

(Comparative Example III-3)

A stake was likewise molded as in the Example III-1 except that there was employed the polycaprolactone PCL H7 (manufactured by Daicel Chemical Industries, Ltd.) alone.

Separately, a sheet was likewise prepared as in the Example III-1 from a part of the above-described composition thermally kneaded by the Plasto mill to measure physical properties. Results are shown in Table III-1.

(Comparative Example III-4)

A stake was prepared using a polyvinyl chloride.

As a result, the biodegradability ratio in the Examples III-1 and III-3 is 36% and 40%, respectively. It is shown that those are improved in approximately 260% and 100%, respectively, compared to biodegradability ratio (10% in the Example III-1 and 22% in the Example II-3) expected from a mixing ratio of the polyesters (A) and (B) with the polycaprolactone. It can be thought that the polyesters (A) and (B) are inductively-decomposed by the polycaprolactone.

On the other hand, the stake made from the polyvinyl chloride do not have biodegradability.

Table III-1

|  | Example III-1 | Example III-3 | Comparative Example III-1 | Comparative Example III-2 | Comparative Example III-3 |
|---|---|---|---|---|---|
| Strength at break (kg/cm$^2$) | 620 | 340 | 600 | 355 | 610 |
| Extension at break (%) | 560 | 285 | 530 | 280 | 730 |
| Heat resistance (°C) | 115 | 115 | 118 | 118 | 60 |
| Biodegradability (degradation %) | 36 | 40 | 2 | 15 | 81 |

Mechanical properties: Measurement of the mechanical strength and extension at break was conducted according to JIS 7112 using No. 3 Dumbbell as a sample.

Heat resistance: Two layers of resin pieces (30 x 30 x 1 mm) were laminated, and heated in an oven to observe a fused condition.

Minimum temperature causing fusion was measured.

Biodegradability: It was measured from oxygen consumption amount in an active sludge according to JIS K6950. Results are shown by degradation ratio after cultivation for 4 weeks.

Table III-2

|  | Example III-2 | Example III-4 |
|---|---|---|
| Composition ratio (part by weight) |  |  |
| Aliphatic polyester (A) | 49 | - |
| Aliphatic polyester (B) | - | 49 |
| Polycaprolactone PH7 | 21 | 21 |
| Talc | 30 | 30 |
| Specific gravity (g/cm$^3$) | 1.46 | 1.45 |
| Vicat softening point (°C) | 107 | 110 |
| Flexural strength (kg/cm$^2$) | 430 | 440 |
| Tensile strength (kg/cm$^2$) | 288 (Yield point) | 290 (Yield point) |
| Biodegradability (degradation ratio %) | 42 | 46 |

As described hereinabove, there is clearly shown an effect that the biodegradability is improved without being accompanied by a decline of physical properties such as decline of a melting point in the aliphatic polyester resin to be kneaded during preparing a film in the stake of the present invention obtained from a resin composition in which the polycaprolactone is kneaded.

Further, in the stake in which talc is formulated, since the resin is hard, the stake is apt to be readily driven by a hammer, etc., and the biodegradability of the stake is improved.

The biodegradable stake in which fertilizers and/or chemicals are filled up is utilized by driving in the vicinity of roots of trees in the case that there are cultivated persimmons, pear, mandarins, and apples at, particularly, a slant field, whereby, fertilizers are gradually discharged, it can largely save labor for handling, and it can prevent scattering and loss of fertilizers by wind and rain, etc., resulting in that it can be effectively utilized.

(Examples of the present invention [IV])

(Example IV-1)

A flask equipped with an agitator, a branched tube, a tube for supplying a gas, and a vacuum line was charged with 35.4 parts by weight of succinic acid (Mw=118), 29.1 parts by weight of 1,4-butanediol (Mw=90), and 0.02 part by weight of tetraisopropyl titanate, followed by allowing to react at 200°C for 2 hours in ordinary pressures and nitrogen atmosphere while agitating.

Successively, after internal pressure attained to below 0.5 mmHg by gradually reducing pressures, agitation was conducted at 200°C for 5 hours while removing water and an excessive amount of 1,4-butanediol from the reaction vessel to obtain a polyester resin.

Subsequently, 0.8 parts by weight of hexamethylene diisocyanate (Mw=168) was added at 200°C in a nitrogen atmosphere under ordinary pressures to obtain a polyester resin (A) which highly-polymerized. The polyester resin (A) showed a number average molecular weight of approximately 44,000 and a weight average molecular weight of approximately 185,000 based on a standard Polystyrene with a GPC.

There were kneaded 100 parts by weight of the polyester resin (A) and 11.1 parts by weight of the polycaprolactone "PCL H7" (having a number average molecular weight of 70,000, manufactured by Daicel Chemical Industries, Ltd.) at 150°C in a Laboplasto mill which rotates at 30 rpm. After torque became stable, it was further kneaded for 10 minutes while heating to obtain a resin composition.

The resin composition obtained was molded into a net in which width is 1 mm, thickness is 0.5 mm, and aperture is 2 mm in lengthwise strands and lateral strands by extruding and thermal fusion using a square knot-fixing molding machine. The net was cut into product width of 60 cm and length of 60 cm and employed as a protecting material for plants.

The protecting materials for plants obtained were buried until attaining to the half length so that those surround around young trees. By those, an injury eaten by hare, etc. was prevented, and the young trees grew into a sufficient dimensions. Further, the protecting materials for plants were disintegrated and decomposed to an extent of not maintaining a shape under natural circumstances after use.

Separately, a sheet having 150 x 150 x 1 mm was prepared by compression molding while heating from a part of the above-described composition thermally kneaded by the Plasto mill to measure physical properties. Thermal press molding was conducted by preheating (150°C, 10 minutes) after feeding a fixed amount of the composition into a mold and compression molding (150°C, 100 kg/cm$^2$, 10 minutes), followed by being naturally cooled and taking out the sheet from the mold. Results are shown in Table IV-1.

(Example IV-2)

There were kneaded 100 parts by weight of the polyester resin (A), 11.1 parts by weight of the polycaprolactone "PCL H7" (having a number average molecular weight of 70,000, manufactured by Daicel Chemical Industries, Ltd.), and 47.6 parts by weight (30% by weight in a total formulating composition) of talc at 150°C in a Laboplasto mill which rotates at 30 rpm. After torque became stable, it was further kneaded for 10 minutes while heating to obtain a resin composition. The resin composition obtained was likewise molded as in the Example IV-1 to prepare a protecting material for plants having width of 90 cm and length of 180 cm.

The protecting material for plants obtained was wound around a trunk of a tree. By the material, an injury eaten by deer, etc. was prevented. Further, the protecting material for plants was disintegrated and decomposed to an extent of not maintaining a shape under natural circumstances after use.

Separately, a sheet was likewise prepared as in the Example IV-1 from a part of the above-described composition thermally kneaded by the Plasto mill to measure physical properties. Results are shown in Table IV-2.

(Example IV-3)

A flask equipped with an agitator, a branched tube, a tube for supplying a gas, and a vacuum line was charged with 43.8 parts by weight of dimethyl succinate (Mw=146), 29.1 parts by weight of 1,4-butanediol, and 0.02 part by weight of tetraisopropyl titanate, followed by allowing to react at 190°C for 2 hours in ordinary pressures and nitrogen atmosphere while agitating. Successively, after internal pressure attained to 1-0.5 mmHg by gradually reducing pressures, agitation was conducted at 200°C for 8 hours.

Furthermore, heating was continued at 210-220°C while agitating under a reduced pressure of 0.5-0.1 mmHg for 5 hours and removing methanol and excessive 1,4-butanediol to obtain a polyester resin (B). The polyester resin (B) showed a number average molecular weight of approximately 38,000 and a weight average molecular weight of approximately 75,000.

Protecting materials for plants were likewise prepared as in the Example IV-1 using 100 parts by weight of the polyester resin (B) and 11.1 parts by weight of a polycaprolactone "PCL H1P" (having a number average molecular weight of 10,000, manufactured by Daicel Chemical Industries, Ltd.).

The protecting materials for plants obtained were employed for farm products, an injury eaten by field mice and moles, etc. was able to be prevented. After harvesting, the protecting materials for plants were disintegrated and decomposed under natural circumstances, and a shape as the protecting materials for plants was not remained.

Separately, a sheet was likewise prepared as in the Example IV-1 from a part of the above-described composition thermally kneaded by the Plasto mill to measure physical properties. Results are shown in Table IV-1.

(Example IV-4)

There were kneaded 100 parts by weight of the polyester resin (B), 11.1 parts by weight of the polycaprolactone "PCL H1P" (having a number average molecular weight of 10,000, manufactured by Daicel Chemical Industries, Ltd.), and 47.6 parts by weight (30% by weight in a total formulating composition) of talc at 150°C in a Laboplasto mill which rotates at 30 rpm. After torque became stable, it was further kneaded for 10 minutes while heating to obtain a resin composition. The resin composition obtained was likewise molded as in the Example IV-2 to prepare a protecting material for plants.

A fence having height of 90 cm and total width of approximately 5 m was prepared from the protecting material for plants obtained by fixing both left and right ends to supports in order to prevent an injury eaten by animals, etc. The fence was taken away at an unnecessary period of time, and it was left in a compost after cutting to naturally decompose.

Separately, a sheet was likewise prepared as in the Example IV-1 from a part of the above-described composition thermally kneaded by the Plasto mill to measure physical properties. Results are shown in Table IV-2.

(Example IV-5)

A protecting material for plants was likewise molded as in the Example IV-1 except that there were employed 70 parts by weight of the polyester resin (A) and 30 parts by weight of the polycaprolactone "PCL H7".

The protecting material for plants obtained was wound around a trunk of a tree. By the material, an injury eaten by deer, etc. was prevented. Further, the protecting material for plants was disintegrated and decomposed to an extent of not maintaining a shape under natural circumstances after lapse of a fixed period.

Separately, a sheet was likewise prepared as in the Example IV-1 from a part of the above-described composition thermally kneaded by the Plasto mill to measure a biodegradability of 75%.

(Comparative Example IV-1)

Although a protecting material for plants was likewise molded as in the Example IV-1 using the polyester resin (A) alone, biodegradability was insufficient.

Separately, a sheet was likewise prepared as in the Example IV-1 from a part of the above-described composition thermally kneaded by the Plasto mill to measure physical properties. Results are shown in Table IV-1.

(Comparative Example IV-2)

Although a protecting material for plants was likewise molded as in the Example IV-1 using the polyester resin (B) alone, biodegradability was insufficient.

Separately, a sheet was likewise prepared as in the Example IV-1 from a part of the above-described composition thermally kneaded by the Plasto mill to measure physical properties. Results are shown in Table IV-1.

(Comparative Example IV-3)

Although a protecting material for plants was likewise molded as in the Example IV-1 using the polycaprolactone PCL H7 (manufactured by Daicel Chemical Industries, Ltd.) alone, mechanical properties and moldability were insufficient.

Separately, a sheet was likewise prepared as in the Example IV-1 from a part of the above-described composition thermally kneaded by the Plasto mill to measure physical properties. Results are shown in Table IV-1.

(Comparative Example IV-4)

Although a protecting material for plants was molded using a low density polyethylene, nothing was biodegradability.

Table IV-1

|  | Example IV-1 | Example IV-3 | Comparative Example IV-1 | Comparative Example IV-2 | Comparative Example IV-3 |
|---|---|---|---|---|---|
| Strength at break (kg/cm$^2$) | 620 | 340 | 600 | 355 | 610 |
| Extension at break (%) | 560 | 285 | 530 | 280 | 730 |
| Heat resistance (°C) | 115 | 115 | 118 | 118 | 60 |
| Biodegradability (degradation %) | 36 | 40 | 2 | 15 | 81 |

Table IV-2

|  | Example IV-2 | Example IV-4 |
|---|---|---|
| Composition ratio (part by weight) |  |  |
| Aliphatic polyester (A) | 49 | - |
| Aliphatic polyester (B) | - | 49 |
| Polycaprolactone PH7 | 21 | 21 |
| Talc | 30 | 30 |
| Specific gravity (g/cm$^3$) | 1.46 | 1.45 |
| Vicat softening point (°C) | 107 | 110 |
| Flexural strength (kg/cm$^2$) | 430 | 440 |
| Tensile strength (kg/cm$^2$) | 288 (Yield point) | 290 (Yield point) |
| Biodegradability (degradation ratio %) | 42 | 46 |

Mechanical properties: Measurement of the mechanical strength and extension at break was conducted according to JIS 7112 using No. 3 Dumbbell as a sample.
Heat resistance: Two layers of resin pieces (30 x 30 x 1 mm) were laminated, and heated in an oven to observe a fused condition.
Minimum temperature causing fusion was measured.
Biodegradability: It was measured from oxygen consumption amount in an active sludge according to JIS K6950. Results are shown by degradation ratio after cultivation for 4 weeks.

As a result, the biodegradability ratio in the Examples IV-1 and. IV-3 is 36% and 40%, respectively. It is shown that those are improved in approximately 260% and 100%, respectively, compared to biodegradability ratio (10% in the Example IV-1 and 22% in the Example IV-3) to be expected from a mixing ratio of the polyesters (A) and (B) with the polycaprolactone. It can be thought that the polyesters (A) and (B) are inductively-decomposed by the polycaprolactone.
On the other hand, the protecting material for plants made from conventional polyethylenes does not have biodegradability.
As described hereinabove, there is clearly shown an effect that the biodegradability is improved without being accompanied by a decline of physical properties such as decline of a melting point in the aliphatic polyester resin to be kneaded during preparing the protecting material for plants of the present invention obtained from a resin composition in which the polycaprolactone is kneaded

Further, in the protecting material for plants containing talc, the biodegradability is more improved.

By winding the protecting material for plants of the present invention around a trunk of plants, there can be prevented an injury eaten by field mice, moles, hare, deer, and birds, etc., and there can be also employed a protecting material for plants in which a repellent is contained inside.

(Examples of the present invention [V])

[Example V-1]

30 parts of a polycaprolactone (PCL H7 manufactured by Daicel Chemical Industries, Ltd.), 70 parts of a poly-1,4-butanediol-succinate (Bionolle #1001 manufactured by Showa Kobunshi, Ltd) were fed into a twin screw ventilation type extruder (diameter of 40 mm), and pellets of a lactone-contained resin were obtained by extruding at a dice temperature of 180°C.

In the lactone-contained resin, melt index was 2 g/10 minutes.

Using the pellets obtained, a tape was prepared by a T-die extrusion method under molding conditions described hereinafter, and physical properties of the tape were measured. Results are shown in Table V-1.

Molding conditions

Extruder: Extruder having a diameter of 40 mm
Screw: L/D=28, a screw for an MDPE (middle density polyethylene)
T-die: Width of 50 mm, gap of 3.0 mm
Extrusion temperature: 170°C at an end point of a cylinder
Die temperature: 170°C Resin temperature (T1): 160°C
Screw revolution: 15 rpm
Discharging amount: 15 kg/hr
Lengthwise stretching ratio: 5 times

Table V-1

| | | Example V-1 | Example V-2 | Comparative Example V-1 |
|---|---|---|---|---|
| Tensile strength at yield (kg/mm$^2$) | MD direction | 2.57 | 3.09 | 3.15 |
| | TD direction | 2.33 | 2.82 | 3.06 |
| 100% Modulus (kg/mm$^2$) | MD direction | 2.00 | 2.22 | 2.34 |
| | TD direction | 1.94 | 2.06 | 2.08 |
| Tensile strength (kg/mm$^2$) | MD direction | 3.74 | 4.21 | 4.12 |
| | TD direction | 3.38 | 3.93 | 3.88 |
| Extension (%) | MD direction | 405 | 320 | 146 |
| | TD direction | 377 | 304 | 127 |
| Tear strength (kg/mm) | MD direction | 22.3 | 21.8 | 24.2 |
| | TD direction | 17.4 | 20.7 | 21.4 |
| Young's modulus (kg/cm$^2$) | MD direction | 5932 | 15982 | 12321 |
| | TD direction | 4828 | 13787 | 10184 |

[Example V-2]

30 parts of talc was added to 70 parts of a lactone-contained resin composed of 30 parts of the polycaprolactone and 70 parts of a poly-1,4-butanediol-succinate which were employed in the Example V-1, followed by feeding into a twin screw ventilation type extruder (diameter of 40 mm), and pellets of a lactone-contained resin composition were obtained by extruding at a dice temperature of 180°C.

Using the pellets obtained, a tape was prepared by a T-die extrusion method under the same molding conditions as in the Example V-1, and physical properties of the tape were measured.

Results are shown in Table V-1.

[Comparative Example V-1]

Using polypropylene pellets, a tape was prepared by a T-die extrusion method under the same molding conditions as in the Example V-1, and physical properties of the tape were measured.

Results are shown in Table V-1.

As results, it was able to obtain a tape which is more excellent than a conventional polypropylene-made packing-wrapping tape.

In relation to the tapes obtained in the Examples V-1, V-2, and Comparative Example V-1, biodegradability test was conducted by the following methods and, as a result, although approximately 75% of the tapes obtained in the Examples V-1 and V-2 were decomposed in degradation test by an active sludge within 28 days, the tapes in the Comparative Example V-1 were not decomposed at all.

(Examples of the present invention [VI])

A number average molecular weight of the resins employed in the present invention was measured by the following GPC method.

Equipment for measurement: Shodex GPC KF-804L (manufactured by Showa Denko Co. Ltd.), an eluate: $CHCl_3$, Sample column: Shodex No 9506461, 3 pieces, Polymer solution: 0.1wt%, 200 μl, Operating conditions: Flow volume of liquid of 1.0 ml/minute, Column temperature 50°C, Pressure 30 kg/cm$^2$, Detector: Shodex RI, Molecular weight standard: a standard Polystyrene

It is to be noted that mechanical properties were measured in the following conditions according to JIS K7127.

Tensilon: Autograph manufactured by Shimadzu Seisakusyo

Sample: No. 3 Dumbbell

Tensile speed: 200 mm/minute

Biodegradability in the card of the present invention was measured by burying the card into a field soil, and visually observing degradation conditions after leaving as it is.

(Reference Examples VI-1 and VI-2)

There were employed Lacty 1012 (a number average molecular weight of 70,000, manufactured by Shimadzu Seisakusyo) as a polylactic acid-based resin (A), PCL-H7 (a number average molecular weight of 100,000, manufactured by Daicel Chemical Industries, Ltd.) as a polycaprolactone based resin (C) and, Bionolle #3020 (a copolyester of succinic acid and 1,4-butane diol/ethylene glycol having a number average molecular weight of 20,000, manufactured by Showa Kobunshi, Ltd.) and Bionolle #1003 (a polyester of succinic acid and 1,4-butane diol having a number average molecular weight of 70,000, manufactured by Showa Kobunshi, Ltd.) as a polyester resin (B).

The polylactic acid-based resin (A), the polyester resin (B), and the polycaprolactone based resin (C) were mixed in a proportion as shown in Table VI-1, followed by kneading at 180°C for 5 minutes in a Laboplasto mill. Composition obtained was molded by a heated press to prepare a sheet having 150 x 150 x 1.0 mm. Molding by a heated press was conducted by preheating (180°C, 10 minutes) a fixed amount of a resin filled in a mold, and by compression molding (180°C, 100 kg/cm$^2$, 10 minutes), followed by naturally cooling and taking out a sheet from the mold.

Results are shown in Table VI-1. It is to be noted that Lacty #1012 is abbreviated as Lacty, and PCL-H7 is abbreviated as H7 in the Table.

As shown in the Table, there was able to be obtained a biodegradable resin composition which is excellent in biodegradability, stiffness, ductility, and heat resistance of a blocking temperature of not less than 100°C.

(Reference Examples VI-3 to VI-6)

There were employed Lacty 1012 (a number average molecular weight of 70,000, manufactured by Shimadzu Seisakusyo) as a polylactic acid-based resin (A), PCL-H7 (a number average molecular weight of 100,000, manufactured by Daicel Chemical Industries, Ltd.) as a polycaprolactone based resin (C) and, Bionolle #1001 (a copolyester composed of succinic acid and 1,4-butane diol having a number average molecular weight of approximately 100,000, manufactured by Showa Kobunshi, Ltd.) and Bionolle #1003 (a polyester composed of succinic acid and 1,4-butane dial having a number average molecular weight of 70,000, manufactured by Showa Kobunshi, Ltd.) as a polyester resin (B).

The polylactic acid-based resin (A), the polyester resins (B), and the polycaprolactone based resin (C) were mixed in a proportion as shown in Table VI-1, followed by kneading at 190°C for 5 minutes in a Laboplasto mill. Composition obtained was molded by a heated press to prepare a sheet having 150 x 150 x 1.0 mm. Molding by a heated press was conducted by preheating (190°C, 10 minutes) a fixed amount of a resin filled in a mold, and by compression molding (190°C, 100 kg/cm$^2$, 10 minutes), followed by naturally cooling and taking out a sheet from the mold.

Results are shown in Table VI-1. As shown in the Table, there was able to be obtained a biodegradable resin composition which is excellent in biodegradability, stiffness, ductility, and heat resistance of a blocking temperature of not less than 100°C.

The fact means that hardness increases and dimensional stability elevates in a base material.

Table VI-1

| | | Reference Examples | | | | | |
|---|---|---|---|---|---|---|---|
| | | VI-1 | VI-2 | VI-3 | VI-4 | VI-5 | VI-6 |
| Formulating proportion | Lacty (g) | 30 | 30 | 50 | 50 | 40 | 30 |
| | H7 (g) | 15 | 15 | 30 | 30 | 30 | 30 |
| | Compatibilizing agent (g) | Bionolle #3020 2.5 | Bionolle #1003 2.5 | Bionolle #1001 20 | Bionolle #1003 20 | Bionolle #1003 30 | Bionolle #1003 40 |
| Physical property | Strength at yield point (kgf/cm$^2$) | 360 | 400 | 420 | 410 | 340 | 310 |
| | Strength at break (kgf/cm$^2$) | 260 | 270 | 290 | 290 | 290 | 260 |
| | Extension (%) | 140 | 90 | 230 | 170 | 150 | 240 |
| | Blocking temperature (°C) | – | – | 118 | 115 | 110 | 100 |
| Biodegradability | Degradation ratio (%) | – | – | 70 | 70 | 70 | 75 |

(Reference Comparative Examples VI-1 to VI-5)

For references, there was not employed a compatibilizing agent in a reference and, as a compatibilizing agent, there were employed an epoxidized styrene-butadiene-styrene block copolymer "ESBS" (a number average molecular weight of 10,000, manufactured by Daicel Chemical Industries, Ltd.), an ethylene-glycidylmethacrylate copolymer "Bondfirst 7M" (a number average molecular weight of 10,000, manufactured by Sumitomo Chemical Industries, Ltd.), a polycarbonate resin containing 10% of PCLH1P (a number average molecular weight of 10,000, manufactured by Daicel Chemical Industries, Ltd.), and Hytrel 40507 (a butylene/polytetramethylene ether glycol copolymerized terephthalate, manufactured by Mitsui Dupon't Polychemical). Results are shown in Table VI-2.

In the case that the compatibilizing agent does not have biodegradability, biodegradability is worse in a three components-based resin composition, and biodegradability is worse in a resin composition not containing 5-50% by weight of the aliphatic polyester resin. In less than 5% by weight, extension is worse and, in more than 50% by weight, blocking temperature lowers.

Table VI-1

| | | Reference Comparative Examples | | | | | |
|---|---|---|---|---|---|---|---|
| | | VI-1 | VI-2 | VI-3 | VI-4 | VI-5 | VI-6 |
| Formulating proportion | Lacty (g) | 30 | 30 | 30 | 30 | 30 | 30 |
| | H7 (g) | 15 | 15 | 15 | 15 | 15 | 30 |
| | Compatibilizing agent (g) | None | ESBS 2.5 | Bondfirst 7M 2.5 | PC containing 10% of PCLH 2.5 | Hytrel #40507 2.5 | Bionolle #1003 50 |
| Physical property | Strength at yield point (kgf/cm$^2$) | 400 | 390 | 360 | 430 | 380 | 310 |
| | Strength at break (kgf/cm$^2$) | 240 | 320 | 280 | 280 | 260 | 290 |
| | Extension (%) | 30 | 60 | 110 | 180 | 120 | 340 |
| | Blocking temperature (°C) | - | - | - | - | - | 60 |
| Biodegradability | Degradation ratio (%) | - | - | - | - | - | 80 |

(Reference Comparative Example VI-6)

Reference Example VI-3 was likewise followed except that there were employed Lacty 1012 (a number average molecular weight of 70,000, manufactured by Shimadzu Seisakusyo) as a polylactic acid-based resin (A), PCL-H7 (a number average molecular weight of 100,000, manufactured by Daicel Chemical Industries, Ltd.) as a polycaprolactone based resin (C) and, Bionolle #1003 (a copolyester composed of succinic acid and 1,4-butane diol having a number average molecular weight of approximately 70,000, manufactured by Showa Kobunshi, Ltd.) as a polyester resin (B) in a proportion as shown in Table VI-2.
Results are shown in the Table VI-2. As shown in Table, blocking temperature is low.

(Example VI-1)

35.0 parts by weight of mica (HAR160 manufactured by Shiroishi Kogyo, Co. Ltd.) and 5.6 parts by weight of titanium oxide were kneaded into 100 parts by weight of the same kind of a resin mixture as employed in Reference Example VI-3 by a ventilation type extruder. Resin composition obtained was extruded at 200°C and a fixed thickness by a T-die melt extruder, followed by biaxially stretching and calendaring to obtain a sheet having an improved surface smoothness and thickness of 190 μm. The sheet showed a flexural elasticity of 40,000 kgf/cm$^2$, and there were obtained properties like a polyethylene terephthalate resin sheet. In order to measure a biodegradability of the sheet, the sheet was crushed into fine powder. After dried, it was measured according to JIS K6950. As a result, an excellent biodegradability of 70% by weight was obtained based on plastics in the sheet. It is to be noted that for references, in relation to PLACCEL H7 and Bionolle#1003, biodegradability was measured, respectively. As a result, it was 81% by weight and 2% by weight, respectively.
There was coated a magnetic coating having the following composition on the sheet by a knife coater to form a black magnetic layer having approximately 10 μm, and magnetic configuration was charged in a horizontal magnetic field having approximately 3000 Gauss, followed by being dries for 3 minutes with a heated air stream of 100°C. There was excellent a formability of the magnetic coating on the sheet.

(Composition of a magnetic coating)

100 parts of magnetic components (17500e: Barium ferrite), 20 parts of a vinylchloride-vinyl acetate copolymer (VAGF manufactured by Union Carbide, Co.), 30 parts of a polyurethane resin (Nippolane 2304 manufactured by Nihon Polyurethane Kogyo), 2 parts of hexamethylene diisocyanate (Coronate HX manufactured by Nihon Polyurethane Kogyo), 5 parts of carbon black (#3000 manufactured by Mitsubishi Kasei, Ltd.), 3 parts of a dispersant (Gurfac RE-610 manufactured by Toho Kagaku, Ltd.), 100 parts of a solvent for dilution (toluene/MEK/MIBK).
The sheet was molded into a card 1 regulated by a cybernetics standard shown in Figure VI-1 which has size of length of 57.5 mm x width of 85.0 mm. The card 1 was passed through a gate equipped with a record-write equipment at a speed of 2 m/sec without causing abnormal conditions. The card was immersed in water for 30 seconds, and it was likewise passed through without causing abnormal conditions after water was wiped. Herein, stiffness was 25 gf/cm, and no change was before and after immersing in water. Further, the card 1 was buried in field soil to observe degradation conditions that a shape was not remained except the magnetic recording layer after a time lapse of 4 months.

(Example VI-2)

There were kneaded 100 parts by weight of the same kind of a resin mixture as the resin mixture employed in Reference Example VI-6, 40 parts by weight of mica (HAR 160 manufactured by Shiroishi Kogyo, Co. Ltd.), and 6.7 parts by weight of titanium oxide in a ventilation type extruder, and then, extruded into a sheet having a fixed thickness at a molding temperature of 200°C by a T-die melt extruder. After biaxially stretching and calendaring, a core sheet was prepared which has an improved surface smoothness and thickness of 560 μm. In relation to the sheet, biodegradability was likewise measured as in the Example VI-1. As a result, it has excellent biodegradability of 75% by weight based on plastics in the sheet.
Successively, the same composition as in the Example VI-1 was extruded into a sheet having a fixed thickness at a molding temperature of 200°C by a T-die melt extruder. After biaxially stretching and calendaring, a cover sheet having thickness of 100 μm was prepared which has an improved surface smoothness. Further, both surfaces of the core sheet 12 were laminated with the cover sheet 13 to prepare a card 11 shown in Figure VI-3. The card showed tensile strength of 4.9 kg/mm$^2$, and a softening point was 100°C which is higher than that of a vinyl chloride resin-made card. As a result of immersion in a liquid paraffin of 150°C for 5 minutes, it showed the same and more excellent properties as in the vinyl chloride resin-made card as a whole without causing peeling between sheets. Also, there was excellent formability of the magnetic coating layer onto the sheet. It is to be noted that the card 11 was buried in field soil to observe degradation conditions that even a shape was not remained except the magnetic recording layer after time lapse of 4 months.

(Comparative Example VI-1)

The same procedures were followed as in the Example VI-1 except that there were employed 100 parts by weight of an aliphatic polyester resin having a number average molecular weight of 90,000 (Bionolle #1003 which is a succinic acid-based polyester resin manufactured by Showa Kobunshi, Ltd.) and 43 parts by weight of a polycaprolactone having a number average molecular weight of 100,000 (PLACCEL H7 manufactured by Daicel Chemical Industries, Ltd.) as resins, and 50 parts by weight of mica (HAR160 manufactured by Shiroishi Kogyo, Co. Ltd.) and 8 parts by weight of titanium oxide were kneaded to obtain a sheet on which a magnetic coating is coated.
In a card obtained from the sheet, stiffness is less, and reading of the card was abnormal.

(Comparative Example VI-2)

The same procedures were followed as in the Example VI-2 except that there were kneaded 100 parts by weight of a resin having a number average molecular weight of 52,000 (an aliphatic polyester resin of a succinic acid with 1,4-butane diol), 50 parts by weight of a polycaprolactone (PLACCEL H7 manufactured by Daicel Chemical Industries, Ltd.), 60 parts by weight of mica (HAR160 manufactured by Shiroishi Kogyo, Co. Ltd.), and 10 parts by weight of titanium oxide.
In a card from the sheet obtained, stiffness is less, and reading of the card was abnormal.

(Examples of the present invention [VII])

(Example VII-1)

A corona-discharged paper (a bleached craft paper, density of 80 g/m$^2$) was prepared.
In a mixture of 30 parts by weight of a polycaprolactone (manufactured by Daicel chemical Industries, Ltd.) with 70 parts by weight of a poly-1,4-butane diol-succinic acid ester (Bionolle 1003 manufactured by Showa Kobunshi, Ltd.) which are in advance dried at 60°C for 3 hours, melt index was 20.
The polycaprolactone and Bionolle were fed into a twin-screw type ventilation style extruder (diameter of 40 mm∅) in the above-described ratio, and a film was extruded at a dice outlet temperature of 200°C and drawing speed of 20 m/minute. The film and the craft paper were thermally compression-laminated by a cooling roll and a press roll to obtain a biodegradable laminate having resin thickness of 30 μm.
The biodegradable laminate obtained was folded into a bag-state in which the biodegradable layer (1) is inside, and a bag was prepared by heat-sealing except an inlet side. Documents were packed in the bag, and the inlet side was packed by heat sealing.
The documents were not wet even in raining.
Further, a film of biodegradable resin layer (1) was buried in compost, and a shape of the film was not remained after a time lapse of 60 days.

(Example VII-2)

30 parts of a polycaprolactone (manufactured by Daicel Chemical Industries, Ltd.) and 70 parts of an aliphatic polyester (Bionolle #1001 manufactured by Showa Kobunshi, Ltd.) were fed into a twin-screw type ventilation style extruder (diameter of 40 mm∅), and extruded at a dice temperature of 180°C to obtain pellets of a lactone-contained resin.
Melt index in the lactone-contained resin was 2 g/10 minutes.
Films were prepared using the pellets under the following molding conditions by a T-die method, and the films were laminated between both surfaces the paper employed in the Example VII-1. Molding conditions

Extruder: 40 mm∅-diameter extruder
Screw: L/D=28, a screw for an MDPE (a middle density polyethylene)
T-die: width of 50 mm, gap of 3.0 mm
Extrusion temperature: 200°C at an edge portion of a cylinder
Die temperature: 200°C
Resin temperature (T1): 180°C

Screw rotation speed: 15 rpm
Discharged amount: 15 kg/hr

Further, as a result of biodegradability by the following method in relation to the film obtained in the Example VII-2, the laminate in the Example VII-2 showed biodegradability ratio of approximately 75% after 28 days in a degradation test by an active sludge.

(Example VII-3)

An aliphatic polyester (Bionolle #1003 manufactured by Showa Kobunshi, Ltd., melt index of 5.6) was fed into a twin-screw type ventilation style extruder (40 mm∅), and extruded at a dice temperature of 200°C to obtain a film. The film obtained was sandwiched between two layers of the paper employed in the Example VII-1, and thermally compressed by a cooling roll and a press roll to obtain a biodegradable laminate having thickness of approximately 30 μm.

(Example VII-4)

A flask equipped with an agitator, a branched tube, a tube for supplying a gas, and a vacuum line was charged with 35.4 g of succinic acid (Mw=118), 29.1 g of 1,4-butanediol (Mw=90), and 0.02 g of tetraisopropyl titanate, followed by allowing to react at 200°C for 2 hours in ordinary pressures and nitrogen atmosphere while agitating. Successively, after internal pressure attained to below 0.5 mmHg by gradually reducing pressures, agitation was conducted at 200°C for 5 hours while removing water and an excessive amount of 1,4-butanediol from the reaction vessel to synthesize a polyester resin.
Subsequently, 0.8 g of hexamethylene diisocyanate (Mw=168) was added at 200°C in a nitrogen atmosphere under ordinary pressures to obtain a polyester resin (A) which highly-polymerized.
The polyester resin (A) showed a number average molecular weight of approximately 44,000 and a weight average molecular weight of approximately 185,000 based on a standard Polystyrene with a GPC.
Kneading of the polyester resin (A) with a polycaprolactone and molding of a sheet sample were conducted by the following methods.
There were kneaded 100 parts by weight of the polyester resin (A) and 11.1 parts by weight of the polycaprolactone "PCL H7" (having a number average molecular weight of 70,000, manufactured by Daicel Chemical Industries, Ltd.) at 150°C in a Laboplasto mill which rotates at 30 rpm. After torque became stable, it was further mixed for 10 minutes while heating to obtain a resin composition.
The resin composition obtained was molded by a heated press to prepare a sheet having 150 it 150 x 1 mm. Molding by a heated press was conducted by preheating (150°C, 10 minutes) a fixed amount of a resin filled in a mold, and by compression molding (150°C, 100 kg/cm$^2$, 10 minutes), followed by naturally cooling and taking out a sheet from the mold.
As a result of a biodegradability test, degradation ratio was 36% at a period of 4 weeks after cultivation.

(Example VII-5)

A flask equipped with an agitator, a branched tube, a tube for supplying a gas, and a vacuum line was charged with 43.8 g of dimethyl succinate (Mw=146), 29.1 g of 1,4-butanediol, and 0.02 g of tetraisopropyl titanate, followed by allowing to react at 190°C for 2 hours in ordinary pressures and nitrogen atmosphere while agitating. Successively, after internal pressure attained to 1-0.5 mmHg by gradually reducing pressures, agitation was conducted at 200°C for 8 hours. Furthermore, heating was continued at 210 to 220°C while agitating under a reduced pressure of 1-0.5 mmHg for 5 hours and removing methanol and excessive 1,4-butanediol to obtain a polyester resin (B).
The polyester resin (B) showed a number average molecular weight of approximately 38,000 and a weight average molecular weight of approximately 75,000.
Kneading of the polyester resin (B) with a polycaprolactone and molding of a sheet sample were conducted by the following methods.
There were kneaded 100 parts by weight of the polyester resin (A) and 11.1 parts by weight of the polycaprolactone "PCL H1P" (having a number average molecular weight of 10,000, manufactured by Daicel Chemical Industries, Ltd.) at 150°C in a Laboplasto mill which rotates at 30 rpm. After torque became stable, it was further mixed for 10 minutes while heating to obtain a resin composition.
The resin composition obtained was molded by a heated press to prepare a sheet having 150 x 150 x 1 mm. Molding by a heated press was conducted by preheating (150°C, 10 minutes) a fixed amount of a resin filled in a mold, and by compression molding (150°C, 100 kg/cm$^2$, 10 minutes), followed by naturally cooling and taking out a sheet from the mold.

Biodegradability was likewise measured as in the Example VII-4. As a result, degradation ratio was 40% at a period of 4 weeks after cultivation.

As a result, it is shown that those are improved in approximately 260% and 100%, respectively, compared to biodegradability ratio (10% in the Example VII-1 and 22% in the Example VII-2) to be expected from a mixing ratio of the polyesters (A) and (B) with the polycaprolactone. It can be thought that the polyesters (A) and (B) are inductively-decomposed by the polycaprolactone.

As described hereinabove, there is clearly shown an effect that the biodegradability is improved without being accompanied by a decline of physical properties such as decline of a melting point in the aliphatic polyester resin to be kneaded by kneading a polycaprolactone.

(Examples of the present invention [VIII])

[Example VIII-1]

There were fed PLACCEL H7 which is a polycaprolactone (a trade name, manufactured by Daicel Chemical Industries, Ltd., a number average molecular weight of 70,000) and Bionolle 1003 which is a poly-1,4-butane diol-succinic acid ester (manufactured by Showa Kobunshi, Ltd.) which are in advance dried at 60°C for 3 hours into a twin-screw type ventilation style 3-colors extruder (40 mm∅), and extruded at a dice outlet temperature of 200°C and drawing speed of 20 m/minute to obtain a three-layers film in which a center layer is composed of a polycaprolactone having thickness of 200 μm, and both outer layers are composed of an aliphatic polyester resin having thickness of 200 μm, respectively.

In a biodegradable laminated film obtained, tear strength was improved compared to a film having thickness of 600 μm which is molded from respective unitary resins.

Further, the biodegradable laminated film was buried in a compost, and a shape of the film was not remained after lapse of 60 days.

Further, as a result of a biodegradability test by the following method in relation to the laminated film obtained, it showed biodegradability ratio of approximately 75% after 28 days in a degradation test by an active sludge.

Biodegradability test method: The laminated film obtained as described above was crushed, and it was supplied in a biodegradability test for 28 days under a circumstance of a municipal drainage sludge according to JIS K6950.

[Example VIII-2]

A flask equipped with an agitator, a branched tube, a tube for supplying a gas, and a vacuum line was charged with 35 kg of succinic acid (Mw=118), 29 kg of 1,4-butanediol (Mw=90), and 0.02 kg of tetraisopropyl titanate, followed by allowing to react at 200°C for 2 hours in ordinary pressures and nitrogen atmosphere while agitating. Successively, after internal pressure attained to below 0.5 mmHg by gradually reducing pressures, agitation was conducted at 200°C for 5 hours while removing water and an excessive amount of 1,4-butanediol from the reaction vessel to synthesize a polyester resin.

Subsequently, 0.8 kg of hexamethylene diisocyanate (Mw=168) was added at 200°C in a nitrogen atmosphere under ordinary pressures to obtain a polyester resin (A) which highly-polymerized.

The polyester resin (A) which highly-polymerized showed a number average molecular weight of approximately 44,000 and a weight average molecular weight of approximately 185,000 based on a standard Polystyrene with a GPC.

The same procedures were followed as in the Example VIII-1 to obtain a three-layers laminated film except that there was employed the aliphatic polyester resin obtained hereinabove. In the film, a center layer is composed of the polycaprolactone, and both outer layers are composed of the aliphatic polyester resin, respectively.

In a biodegradable laminated film obtained, tear strength was improved compared to a film having thickness of 600 μm which is molded from respective unitary resins.

The film was heat-sealed to connect, and it was molded into an agricultural film for a tunnel house. Since the agricultural film has a sufficient heat sealing strength, and has a high transmittance of light, at is suitable for cultivating vegetables in natural fields.

Further, the biodegradable laminated film was buried in a compost, and a shape of the film was not remained after lapse of 60 days.

Still further, as a result of a biodegradability test in relation to the laminated film obtained showed biodegradability ratio of approximately 40% after 28 days in a degradation test by an active sludge.

[Example VIII-3]

The same procedures were followed as in the Example VIII-1 to obtain a three-layers laminated film except that there was employed a polylactic acid having a number average molecular weight of approximately 100,000 as an aliphatic polyester resin. In the film, a center layer is composed of the polycaprolactone, and both outer layers are composed of the aliphatic polyester resin, respectively.

In a biodegradable laminated film obtained, tear strength was improved compared to a film having thickness of 600 μm which is molded from respective unitary resins.

Further, the biodegradable laminated film was buried in a compost, and a shape of the film was not remained after a time lapse of 60 days.

Still further, as a result of a biodegradability test in relation to the laminated film obtained, it showed biodegradability ratio of approximately 75% after 28 days in a degradation test by an active sludge.

[Example VIII-4]

The same procedures were followed as in the Example VIII-1 to obtain a three-layers laminated film except that there was employed a mixed biodegradable resin in which there are mixed Placcel H7 and Bionolle 1003 in a mixing ratio of 30:70 by weight. In the film, a center layer is composed of the polycaprolactone, and both outer layers are composed of the mixed biodegradable resin of the aliphatic polyester resin with the polycaprolactone, respectively.

Further, the biodegradable laminated film was buried in a compost, and a shape of the film was not remained after a time lapse of 60 days.

Still further, as a result of a biodegradability test in relation to the laminated film obtained, it showed biodegradability ratio of approximately 80% after 28 days in a degradation test by an active sludge.

[Example VIII-5]

The same procedures were followed as in the Example VIII-1 to obtain a three-layers laminated film except that there was employed the polycaprolactone as a center layer, Bionolle 1003 as one outer layer, and the polylactic acid having a number average molecular weight of approximately 100,000 as another outer layer.

In a biodegradable laminated film obtained, tear strength was improved compared to a film having thickness of 600 μm which is molded from respective unitary resins.

Further, the biodegradable laminated film was buried in a compost, and a shape of the film was not remained after a time lapse of 60 days.

Still further, as a result of a biodegradability test in relation to the laminated film obtained, it showed biodegradability ratio of approximately 70% after 28 days in a degradation test by an active sludge.

(Examples of the present invention [IX])

[i. Effect in a polycaprolactone irradiated by ionizing radiation] (Reference Example 1)

Pellets (Melt index of 2.57 g/10 minutes) of a polycaprolactone were heated at a temperature exceeding a melting point thereof and cooled to 50°C. During being maintained in a noncrystalline condition, an electron beam which is an ionizing radiation was irradiated in 60 kGy and 160 kGy. As a result, melt index in pellets obtained by irradiation was 0.05 g/10 minutes (Gel fraction described hereinafter of 60%) and 0.03 g/10 minutes (Gel fraction of 80%), respectively. Nonirradiated pellets and irradiated pellets were supplied in a biodegradability test at 25°C for 4 weeks under a circumstance of a municipal drainage sludge according to JIS K6950. As a result, degradation ratio was 86.2% and 77.2%, respectively, in the irradiated pellets whereas degradation ratio was 55% in the nonirradiated pellets. Further, the irradiated pellets were molded into a sheet-like article at 25°C by a hot-press, and crushed to conduct the same biodegradability test. As a result, degradation ratio was 87.0% and 87.8%, respectively.

The ionizing radiation was changed from the electron beam to γ-ray to obtain same test results.

(Reference Example 2)

The polycaprolactone employed in the Reference Example 1 was irradiated by an electron beam at an ordinary temperature in radiation quantity of 15 kGy. Irradiated pellets (melt index of 1.0 g/10 minutes and gel fraction of 0.2%) were extruded by an extruder equipped with a T-die having 40 mm ∅ (a resin temperature of 150°C) to obtain a sheet having thickness of approximately 270 μm. In relation to the sheet obtained, a tear strength test, an impact strength test according to JIS K7211, and a tensile strength test according to JIS K6782 were conducted at an ordinary temperature to compare with test results in a nonirradiated sheet.

As results, in the nonirradiated sheet and the irradiated sheet, a tensile strength (MD: machine direction) is 260 and 280 kgf-cm, respectively, a lateral direction thereof (TD) is 210 and 230 kgf-cm, respectively, a tensile extension (MD) is 1130 and 1240%, respectively, a tensile extension (TD) is 1130 and 1160%, respectively, a tear strength (MD) is 160 and 270 kgf, respectively, a tear strength (TD) is 190 and 450 kgf, respectively, and an impact strength is 23.8 and 25.2 kgf-cm, respectively. In all cases, properties were improved.

(Reference Example 3)

The polycaprolactone employed in the Reference Example 1 was irradiated by an electron beam at an ordinary temperature in 10, 20, 40, and 100 kGy to measure a transition in an MI and gel fraction (%). Results obtained are shown in Table IX-1 described below.

Table IX-1

| Radiation quantity of an electron beam (kGy) | 0 | 10 | 20 | 40 | 100 |
|---|---|---|---|---|---|
| MI (g/10 minutes) | 2.6 | 1.0 | 0.5 | 0.1 | 0.08 |
| Gel fraction (%) | 0 | 0.1 | 0.2 | 0.3 | 23.7 |

It is to be noted that in the Reference Examples 1-3, although there was investigated irradiation onto a mixture in which a biodegradable resin "Bionolle" is added to the polycaprolactone, it was not essentially changed.

[ii. Preparation of a lactone resin (4) irradiated by ionizing radiation or a composition (4') of the lactone resin irradiated by ionizing radiation with other biodegradable resins except the lactone resin]

〈Preparation Example 1〉

10 g of polycaprolactone (a trade name of Placcel H7 manufactured by Daicel chemical Industries, Ltd., which has a number average molecular weight of 70,000) pellets were placed in a glass ample having a diameter of 1.5 cm, and it was connected to a vacuum line to remove air, and it was melt-sealed. The sample was completely melted in an oven of 80°C, and it was inserted into a metal block in advance thermostatted at 45°C, followed by irradiating 100 kGy by γ-rays from cobalt 60 with radiation intensity of 10 kGy/hour. After irradiated, the glass ample was broken to take out a column-shaped PCL having a diameter of 1.5 cm.

A thin plate having the thickness of approximately 5 mm was cut from the PCL, and it was wrapped by a stainless steel net having 200 mesh, and immersed in chloroform liquid for 24 hours to measure a gel fraction (it is a proportion of insoluble components, and represents a crosslinking degree) of 70% calculated by the following equation.

$$\text{Gel fraction (\%)} = (W_2/W_1) \times 100$$

(wherein, $W_1$ represents dry weight of the PCL before immersion, and $W_2$ represents dry weight of insoluble components after immersion)

Further, a sliced PCL having the thickness of 2-3 mm was compression-molded into a film-like piece at 200°C using a thermal press in order to measure heat resistance. The film obtained was exceedingly excellent in transparency. Heat resistance was measured at the conditions of tensile speed of 100 mm/minute and 120°C to obtain a tensile strength and extension in fracture.

Results are shown in Table IX-2.

There were fed 40 parts of polycaprolactone pellets which were spread over a bath-like glass vessel and were irradiated by ionizing radiation as adjusted to the similar gel fraction to the above-mentioned irradiation, 60 parts of a poly-1,4-butanediol-succinate, 0.5 part of liquid paraffin, and 1 part of stearic acid amide into a twin-screw type ventilation extruder (diameter of 40 mm), and extruded at a dice temperature of 180°C to obtain pellets of a resin composition.

Melt index was 0.1 g/10 minutes in the resin composition.

〈Preparation Example 2〉

In a polycaprolactone likewise irradiated by ionizing radiation as in the Preparation Example 2 except that irradiation was conducted in irradiation quantity of 150 kGy by γ-ray, gel fraction was 82%. Further, a heat resistance test was conducted by the method described in the Preparation Example 1, and results are shown in Table IX-2.

There were employed 40 parts of polycaprolactone which was irradiated by ionizing radiation as described hereinabove, 60 parts of a poly-1,4-butanediol-succinate, 0.5 part of liquid paraffin, 0.8 part of stearic acid amide, and 0.8 part of finely-powdered silica ("Aerojil #200" manufactured by Nihon Aerojil, Ltd.) to likewise obtain pellets of a resin composition as described in the Preparation Example 1. Melt index was 0.09 g/10 minutes in the resin composition.

〈Preparation Example 3〉

There were employed 40 parts of polycaprolactone which was irradiated by ionizing radiation as described in the Preparation Example 2, 60 parts of a poly-1,4-butanediol-succinate, 0.5 part of liquid paraffin, 0.5 part of stearic acid amide, and 0.5 part of a finely-powdered silica (the same as the above) to likewise obtain pellets of a resin composition as described in the Preparation Example 1.
Melt index was 0.09 g/10 minutes in the resin composition.

〈Preparation Example 4〉

There were employed 40 parts of polycaprolactone which was irradiated by ionizing radiation as described in the Preparation Example 2, 60 parts of a poly-1,4-butanediol-succinate, 0.5 part of liquid paraffin, 0.5 part of stearic acid amide, 0.5 part of Aerojil #200 (the same as the above), and 50 parts of a corn starch to likewise obtain pellets of a resin composition as described in the Preparation Example 1.
Melt index was 0.09 g/10 minutes in the resin composition.

〈Comparative Preparation Example 1〉

There were employed 40 parts of polycaprolactone not irradiated, 60 parts of a poly-1,4-butanediol-succinate, 0.5 part of liquid paraffin, 0.8 part of stearic acid amide, and 0.8 part of a finely-powdered silica ("Aerojil #200" manufactured by Nihon Aerojil, Ltd.) to likewise obtain pellets of a resin composition as described in the Preparation Example 1. Melt index was 3.9 g/10 minutes in the resin composition.

[iii. Preparation of a biodegradable polyester resin (3) composed of an aliphatic polyester resin (1) and a polycaprolactone (2)]

(Preparation Example IX-1)

A flask equipped with an agitator, a branched tube, a tube for supplying a gas, and a vacuum line was charged with 35.4 g of succinic acid (Mw=118), 29.1 g of 1,4-butanediol (Mw=90), and 0.02 g of tetraisopropyl titanate, followed by allowing to react at 200°C for 2 hours in ordinary pressures and nitrogen atmosphere while agitating. Successively, after internal pressure attained to below 0.5 mmHg by gradually reducing pressures, agitation was conducted at 200°C for 5 hours while removing water and an excessive amount of 1,4-butanediol from the reaction vessel to synthesize a polyester resin.
Subsequently, 0.8 g of hexamethylene diisocyanate (Mw=168) was added at 200°C in a nitrogen atmosphere under ordinary pressures to obtain a polyester resin (1a) which highly-polymerized. The polyester resin (1a) showed a number average molecular weight of approximately 44,000 and a weight average molecular weight of approximately 185,000 based on a standard Polystyrene with a GPC.
Kneading of the polyester resin (1a) with a polycaprolactone and molding of a sheet sample were conducted by the following methods.
There were kneaded 100 parts by weight of the polyester resin (1a) and 11.1 parts by weight of the polycaprolactone "PCL H7" (having a number average molecular weight of 70,000, manufactured by Daicel Chemical Industries, Ltd.) at 150°C in a Laboplasto mill which rotates at 30 rpm. After torque became stable, it was further mixed for 10 minutes while heating to obtain a resin composition which is employed as a raw material for coextruding.
It is to be noted that the resin composition obtained was molded by a heated press to prepare a sheet having 150 x 150 x 0.125 mm. Molding by a heated press was conducted by preheating (150°C, 10 minutes) a fixed amount of a resin filled in a mold, and by compression molding (150°C, 100 kg/cm$^2$, 10 minutes), followed by naturally cooling and taking out a sheet from the mold, which is employed a sheet for thermal fusion.

(Preparation Example IX-2)

A flask equipped with an agitator, a branched tube, a tube for supplying a gas, and a vacuum line was charged with 43.8 g of dimethyl succinate (Mw=146), 29.1 g of 1,4-butanediol, and 0.02 g of tetraisopropyl titanate, followed by allowing to react at 190°C for 2 hours in ordinary pressures and nitrogen atmosphere while agitating. Successively, after internal pressure attained to 1-0.5 mmHg by gradually reducing pressures, agitation was conducted at 200°C for 8 hours. Furthermore, heating was continued at 210 to 220°C while agitating under a reduced pressure of 1-0.5 mmHg for 5 hours to remove methanol and excessive 1,4-butanediol to obtain a polyester resin (1b). The polyester resin (1b) showed a number average molecular weight of approximately 38,000 and a weight average molecular weight of approximately 75,000.

Kneading of the polyester resin (1b) with a polycaprolactone and molding of a sheet sample were conducted by the following methods.

There were kneaded 100 parts by weight of the polyester resin (1b) and 11.1 parts by weight of the polycaprolactone "PCL H1P" (having a number average molecular weight of 10,000, manufactured by Daicel Chemical Industries, Ltd.) at 150°C in a Laboplasto mill which rotates at 30 rpm. After torque became stable, it was further mixed for 10 minutes while heating to obtain a resin composition.

It is to be noted that the resin composition obtained was molded by a heated press to prepare a sheet having 150 x 150 x 0.125 mm. Molding by a heated press was conducted by preheating (150°C, 10 minutes) a fixed amount of a resin filled in a mold, and by compression molding (150°C, 100 kg/cm$^2$, 10 minutes), followed by naturally cooling and taking out a sheet from the mold, which is employed for thermal fusion.

[iv. Preparation of a multi-layers film or sheet]

As raw materials for a multilayer film or sheet, there were employed articles prepared or manufactured as described hereinabove.

Raw materials for layer (B): The composition containing a polycaprolactone irradiated by ionizing radiation obtained in the Preparation Example 1-4.

Raw materials for layer (A): The biodegradable polyester resin composition containing the aliphatic polyester resin and the polycaprolactone which were obtained in the Preparation Examples IX-1 to IX-8.

[Examples IX-1 to IX-8]

A three-layers film was molded by coextrusion, which is composed of the layer (B) having thickness of 250 μm and the layers (A) having thickness of 125 μm which sandwich the layer (B). (molding conditions)

Extruder: 3-manifold type die extruder
Extrusion temperature: 170°C at an end of a cylinder
Die temperature: 170°C, respectively
Resin temperature (T1) for the layer (B): 150°C
Resin temperature (T1) for the both layers (A): 160°C
Screw rotation speed: 15 rpm, respectively
Discharge amount: 10 kg/hour for the layer (B)
Discharge amount: 5 kg/hour for the layer (A), respectively
Biaxially stretching ratio: 3 times

All the films obtained by coextrusion have a sufficient tensile strength lengthwise and laterally, and an adhesive strength was large between the layer (A) and the respective layers (B).

Concerning biodegradability, the films were covered over surface of soil in the summer season in which daytime temperature is 20-35°C, and damaged conditions in the films were observed after 1 month and 3 months and, possibility of plowing in soil was checked further after 2 months. Further, an appearance of biodegradation was checked visually and by hands at the period of lapse of 1 month and 3 months after plowing. As a result, in the films, although a damage was not observed even after 3 months, the films were apt to be readily broken by a contact with a plow, and readily plowed.

Still further, biodegradation was observed visually and by hands at the period of lapse of 1 month after plowing.

[Examples IX-9 to IX-16]

A three-layers sheet was molded by a thermal fusion, which is composed of the layer (B) having thickness of 250 μm and the layers (A) having thickness of 125 μm.

In respective sheets obtained, tensile strength in a lateral direction was improved compared to a sheet composed of the layer (A) alone having 500 μm and, further, biodegradability was accelerated.

Table IX-2

|  | Irradiation quantity (kGy) | Gel fraction (%) | Strength (MPa) | Extension (%) | Haze value (%) |
|---|---|---|---|---|---|
| Preparation Example 1 | 100 | 70 | 2 | 550 | 15 |
| Preparation Example 2 | 150 | 82 | 3 | 470 | 10 |
| Comparative Preparation Example 1 | 0 | 0 | 0 | 0 | 90 |

(Examples of the present invention [X])

As raw materials, the following resins were employed.

Aliphatic polyester: Bionolle #1903 (MFR of 5.5 g/10 minutes and MT of 6.5 g manufactured by Showa Kobunshi, Ltd.), Bionolle #1001 (MFR of 2.0 g/10 minutes and MT of 1.5 g manufactured by Showa Kobunshi, Ltd.).

Bifunctional polycaprolactone: Placcel H7 (an average molecular weight of 70,000, MFR of 2.3 g/10 minutes and MT of 1.0 g manufactured by Daicel Chemical Industries, Ltd.)

Trifunctional polycaprolactone: an average molecular weight of 100,000 manufactured by Daicel Chemical Industries, Ltd.

[Example X-1]

Bionolle #1903 and Placcel H7 were mixed in the weight ratio of 50:50 to obtain a resin composition (MFR of 3.9 g/10 minutes and MT of 3.5 g). Using the composition, respective films having thickness of 10,15, 20, and 25 μm were able to be prepared by a T-die method without any film-break over 6 hours.

In the films, tensile yield strength was 310 kgf/cm$^2$, tensile fracture force was 400 kgf/cm$^2$, tensile fracture extension was 590%, tensile elasticity was 3100 kgf/cm$^2$, Izod impact strength (23°C) was 41 kgf-cm/cm$^2$ based on the thickness of 30 μm, and biodegradability was 71%.

[Comparative Example X-1]

Bionolle #1001 (manufactured by Showa Kobunshi, Ltd.) and Placcel H7 were mixed in the weight ratio of 50:50 to obtain a resin composition (MFR of 2.0 g/10 minutes and MT of 1.2 g). Using the composition, although preparation of respective films having thickness of 15 μm and 25 μm was tried by a T-die method, it was difficult to continuously prepare the films because of a poor film-formability.

[Example X-2]

Bionolle #1001 and Placcel which is a polycaprolactone prepared using a trifunctional polyol as an initiator were mixed in the weight ratio of 50:50 to obtain a resin composition (MFR of 3.2 g/10 minutes and MT of 4.5 g). Using the composition, a film having thickness of 20 25 μm was able to be prepared by a T-die method without any film-break over 12 hours.

〈Preparation Example X-1〉 Preparation of a polycaprolactone crosslinked through irradiation by ionizing radiation

Placcel H7 pellets were placed in a glass ample, and it was connected to a vacuum line to remove air and melt-sealed, and 100 kGy was irradiated by γ-rays from cobalt 60 with radiation intensity of 10 kGy/hour. In the polycaprolactone crosslinked through irradiation by ionizing radiation, gel fraction was 70%.

Further, a sliced PCL having the thickness of 2-3 mm was compression-molded into a film-like piece at 200°C using a thermal press in order to measure heat resistance. A tensile strength of 2MPa and extension in fracture of 550% were obtained at the conditions of tensile speed of 100 mm/minute and 120°C to obtain using a high temperature tensile tester.

Biodegradability was 55% in nonirradiated Placcel H7, and elevated to 80% in the irradiated one.

[Example X-3]

The polycaprolactone crosslinked irradiated by γ-rays from cobalt 60 and Bionolle #1001 were mixed in the weight ratio of 50:50 to prepare a resin mixture so that melt tension becomes the same extent as in the above-described polycaprolactone crosslinked by ionizing radiation. In the resin mixture, MI was 2.5 g/10 minutes, and MT was 6.5 g.

100 parts by weight of the resin mixture, 0.5 part by weight of a liquid paraffin, and 1 part by weight of stearic acid amide were fed into a twin-screw type ventilation style extruder (diameter of 40 mm), and extruded at a dice temperature of 180°C to obtain pellets of a resin composition.

Using the pellets, a film having thickness of 20 μm was able to be prepared without any film-break over 3 hours.

(Examples of the present invention [XI])

[i. Effect in a polycaprolactone irradiated by ionizing radiation]

Concerning the effect, first of all, confer the Reference Examples 1-3 for the present invention [IX].

[Reference Examples XI-1' to XI-3' and Comparative Reference Examples XI-1']

Electron beam was irradiated to Pellets of a polycaprolactone (Placcel H7 having a number average molecular weight of $1.28 \times 10^5$, which is a trade name manufactured by Daicel Chemical Industries, Ltd.) in irradiation quantity of 0 kGy (Comparative Reference Examples XI-1'), 5 kGy (Reference Examples XI-1'), 10 kGy (Reference Examples XI-2'), and 20 kGy (Reference Examples XI-3'), and respective pellets were extruded at 150°C by a T-die extruder, followed by passing through a chill roll and stretching into 3 times to prepare a film having thickness of 0.3 mm.

There was measured strippability of the film obtained to the chill roll and thermal shrinkage ratio of the film. Results are shown in Table XI-1.

Table XI-1

| | Irradiation quantity | Roll | Thermal shrinkage ratio (%) | | | |
|---|---|---|---|---|---|---|
| | (kGy) | Mold releasing property | 40°C | 50°C | 60°C | 80°C |
| Reference Example XI-1' | 5 | △ | 0 | 5 | 30 | 50 |
| Reference Example XI-2' | 10 | ○ | 0 | 10 | 70 | 80 |
| Reference Example XI-3' | 20 | ◎ | 5 | 30 | 80 | 90 |
| Comparative Reference Example | 0 | X | 0 | 0 | *1 | *2 |

◎: very readily strippable
○: readily strippable
△: slightly difficult to strip
X: difficult to strip
*1: extended by self weight while melting without shrinkage (length of 120%)
*2: impossible to measure by melting

Further, obtained sheet was cut into width of 45 mm and length of 100 mm to prepare test samples for a thermal shrinkage test.

In the obtained sample sheet for a thermal shrinkage test, one end was fixed by a clip, and it was immersed in water at temperatures shown in Table XI-1 for 30 seconds, followed by measure a longitudinal dimension of the test sample. Shrinkage ratio was calculated by the following equation.

Shrinkage ratio (%): {(L0-L)/L0} x 100

L0: longitudinal dimension (100 mm) of the test sample for a thermal shrinkage test

L: longitudinal dimension (mm) of the test sample after immersing the test sample for a thermal shrinkage test in heated water of respective temperatures for 30 seconds

[ii. Preparation of a polycaprolactone irradiated by ionizing radiation or a composition of the polycaprolactone irradiated by ionizing radiation with an aliphatic polyester]

Concerning the preparation, confer the Preparation Examples 1-4 and the Comparative Preparation Example 1 for the present invention [IX].

Concerning Table IX-2, confer the Table IX-1 in the present invention [IX].

[iii. Preparation of a polycaprolactone irradiated by ionizing radiation or a composition of the polycaprolactone irradiated by ionizing radiation with an aliphatic polyester]

Using a polycaprolactone ("Placcel H7" having a number average molecular weight of $1.28 \times 10^5$, which is a trade name manufactured by Daicel Chemical Industries, Ltd.) and Bionolle 1001 (manufactured by Showa Kobunshi, Ltd.), there was measured a relationship of an irradiation quantity with melt index, melt tension, and gel fraction through irradiation by γ-ray.

Results are shown in Table XI-3.

Table XI-3

| | PCL (H7) alone | | | Ratio of PCL (H7)/Bionolle 1001 = 30/70 by weight | | |
|---|---|---|---|---|---|---|
| | Comparative Preparation Example XI-1 | Preparation Example XI-1 | Preparation Example XI-2 | Comparative Preparation Example XI-2 | Preparation Example XI-3 | Preparation Example XI-4 |
| Irradiation quantity (kGy) | non-irradiation | 15 | 30 | non-irradiation | 15 | 30 |
| MI (g/10 minutes) | 2.5 | 0.4 | 0.1 | 2.5 | 0.5 | 0.3 |
| Melt tension (g) | 1 | 7 | 15 | 1 | 10 | 20 |
| Gel fraction (%) | 0 | 0.21 | 0.25 | - | - | - |

[iv. Preparation of a composition composed of an aliphatic polyester resin (I) and a polycaprolactone (II)]

Concerning the preparation, confer the Preparation Examples IX-1 to IX-2 in the present invention [IX].

Preparation Example XI-1 corresponds to the Preparation Example IX-1, and Preparation Example XI-2 corresponds to the Preparation Example IX-2.

[v. Preparation of a cushion sheet having discontinuous cells from a single layer film]

[Examples XI-1 to XI-4]

As a raw material for a base film, there were employed the polycaprolactone irradiated by ionizing radiation, or a composition of the polycaprolactone irradiated by ionizing radiation with the aliphatic polyester resin to prepare the base film having thickness of 100 μm by a T-die method, which are described in the Preparation Examples XI-1 to XI-4 of the above-described item iii.

Preparation of the film from melt raw resin is excellent.

This was molded into an embossed film having a great many of projections of diameter of 1 cm and height of 5 mm by vacuum molding, and a cushion sheet having discontinuous cells was obtained by thermal fusion with the above-described base film.

Adhesion of the embossed film with the base film is excellent and, in the cushion sheet having discontinuous cells obtained, biodegradability is excellent.

[vi. Preparation of a multilayer film]

As raw materials for a multilayer film, there were employed articles prepared or manufactured as described hereinabove.

Raw materials for layer (B): The composition containing a polycaprolactone irradiated by ionizing radiation obtained in the Preparation Examples XI-1 to XI-4.

Raw materials for layer (A): The biodegradable polyester resin composition composed of the aliphatic polyester resin and the polycaprolactone which were obtained in the Preparation Examples XI-1 to XI-2.

[Reference Examples XI-1 to XI-8]

Concerning these, first of all, confer the Examples IX-1 to IX-16 in the present invention [IX].

[vi. Preparation of a cushion sheet having discontinuous cells from a multilayer film]

[Examples XI-5 to XI-21]

As a base film, there were employed the multilayer films described in the Reference Examples XI-1 to XI-16 concerning the multilayer films in the above-described item v. These were molded into an embossed film having a great many of projections of diameter of 1 cm and height of 5 mm by vacuum molding, and a cushion sheet having discontinuous cells is obtained by thermal fusion with the above-described base film.

Adhesion of the embossed film with the base film is excellent and, in the cushion sheet having discontinuous cells obtained, biodegradability is excellent.

(Examples of the present invention [XII])

Also in the present invention [XII], an investigation was conducted based on findings in the above-described Reference Examples 1 to 3 of the present invention [IX].

Shrinkage ratio was measured by immersing a sample in which the sheet obtained from the polycaprolactone irradiated by 20 kGy in the Reference Example 3 cut into 10 cm-square in warm water of 70°C.

As a result, although there ended in melting the sheet obtained from the polycaprolactone nonirradiated, the sheet obtained from the polycaprolactone irradiated by 20 kGy shrunk 60% in MD direction and 30% in TD direction without melting.

(Example XII-1)

〈Preparation of a coated fertilizer〉

In an apparatus (Figure XIII-1) as an embodiment of the present invention, blowing column 1 has a column diameter of 200 mm, height of 180 mm, diameter of an opening for blowing air of 42 mm, and which has a hole 2 for throwing a fertilizer and a hole 3 for exhausting a waste gas. Air for blowing is blown from a blower 10, and it reaches the blowing column through an orifice flow meter 9 and a heat exchanger 8. Flow volume is controlled at the flow meter 9, temperature is controlled at the heat exchanger 8, and waste gas is exhausted from the hole 3 for exhausting to an outside of the column.

A particle-state article to be supplied for coating is thrown from the hole 2 for throwing a fertilizer while streaming a fixed heated air to form a blowing stream. Treatment for coating is carried out by spraying a solution in which there are dispersed 100 parts by weight of a polycaprolactone (PCL) and 100 parts by weight of talc through a nozzle 4 for a liquid against the blowing stream after adjusting temperature of particles for coating to a fixed temperature. Preparation of the solution for coating is carried out while agitating in the vicinity of a boiling point of solvent after supplying a fixed amount of a coating material and solvent into a liquid tank 11. The solution for coating is supplied into the nozzle 4 by a pump 5, and keeping warmth is sufficiently conducted in order to maintain a temperature in a system. After supplying the fixed solution for coating, the pump 5 is stopped, and then the blower 10 is stopped. Fertilizer coated is taken out of a hole 7 for taking out. 6 is a valve. $T_1$, $T_2$, and $T_3$ are a thermometer, and SL is steam.

Nozzle for a liquid: opening of 0.8 mm, a Fullcon type
Amount of heated air: 4 $m^3$/min
Temperature of heated air; 100°C
Kind of fertilizer: Potassium-ammonium phosphate-nitrate having 5-7 meshes
Thrown amount of fertilizer: 5 kg
Concentration of a coating solution: Solid content of 5% by weight
Feed amount of a coating solution: 0.5 kg/minute
Coating period: 10 minutes
Coating ratio (based on a fertilizer): 5.5% by weight (containing components of surfactants)
Solvent: Tetrahydrofran (THF)
Cellulose acetate having a low substitution degree; [acetylated degree of 51.0, viscosity of 98 cps in 6% acetone solution] manufactured by Daicel Chemical Industries, Ltd.
PCL: Polycaprolactone [PCL-H7] manufactured by Daicel Chemical Industries, Ltd

〈Irradiation by ionizing radiation on a coated fertilizer and biodegradability test〉

According to the above-mentioned method for the preparation, coatings containing potassium-ammonium phosphate-nitrate were prepared. After that, an electron beam was irradiated in 10, 20, 40, and 100 kGy onto coated fertilizers. Two sides were cut in relation to every particle of 50 particles of coated samples, and then those were immersed in water to remove internal fertilizing components. After drying, those were finely crushed, and degradation ratio was measured according to JIS K6950 (a biodegradability experimental method under airing by an active sludge). Active sludge employed was an active sludge sent from a municipal drainage in Himeji city.

As a result, biodegradation ratio ranged in 90-70% after 28 days. The coated fertilizers were packed in a bag, and blocking was not caused even in storing by piling in the summer season.

On the other hand, blocking was caused in nonirradiated fertilizers.

(Example XII-2)

A coated fertilizer was likewise prepared as in the Example XII-1 except that there was employed a coating liquid in which there are dispersed 100 parts by weight of a composition composed of a polycaprolactone:cellulose acetate having a low substitution degree in a weight ratio of 60:40 and 100 parts by weight of talc, and then, an ionizing radiation was irradiated in 20 kGy.

As a result, biodegradation ratio was 80% after 28 days. The coated fertilizers were packed in a bag, and blocking was not caused even in storing by piling in the summer season.

In the particle-state article of the present invention, for example, in a fertilizer, a durable period of a fertilizing effect can be controlled and, coating layer does not remain in soil owing to disintegration and degradation by microorganisms in soil after elution of fertilizing components. And, residual components disappear by disintegration and degradation of the coating layer after a time lapse of a cultivation period of farm products, resulting in that supplying of fertilizers can be readily controlled, and blocking is not caused between particles during storage.

(Examples of the present invention [XIII])

(1) Apparatus and method for the preparation

Figure XIII-1 shows an apparatus as an embodiment which is preferred for preparing the particle-state composition for agriculture and gardening of the present invention. Concerning details, confer the Examples in the present invention [XII].

Coating treatment is conducted by spraying a coating liquid by which there is coated the particle-state composition for agriculture and gardening of the present invention for the direction of a jet stream through the liquid nozzle 4.

In the coating treatment, operations which are different from the Examples in the present invention [XII] are described below.

　　　Thickness of the coating layer: 3 $\mu$m in all cases
　　　solvent: Tetrahydrofran (abbreviated as THF in Table), trichloroethylene (abbreviated as Trichlene in Table)

As raw materials for the particle-state composition for agriculture and gardening, the following substances were employed.

　　　Polycaprolactone: PCL-H7 (a number average molecular weight of 70,000 manufactured by Daicel Chemical Industries, Ltd.
　　　Petroleum resin 1: Escoletz 5320HC (a cyclopentadiene-based one manufactured by Ericksen Chemicals, Ltd.)
　　　Rosin 1: KE100 (a rosin ester manufactured by Arakawa Chemicals, Ltd.)
　　　EVA: [Ultracene (an ethylene-vinyl acetate having vinyl acetate content of 32)] manufactured by Toso, Ltd.

(2) Composition of the coating layer and biodegradability test

According to the above-described method, there were prepared fertilizers containing potassium-ammonium phosphate-nitrate coated by a variety of compositions shown in Table XIII-1. After that, two sides were cut in relation to every particle of 50 particles of coated samples, and then those were immersed in water to remove internal fertilizing components. After drying, those were finely crushed, and decomposition ratio was measured according to JIS K6950 (a biodegradability test method under airing by an active sludge). Active sludge employed was a sludge sent back from a municipal drainage in Himeji city.

Also, separately, particle fertilizers which are coated by a coating layer were scattered in a paddy field, and residual conditions of the coating layer was visually observed.

(3) Moisture permeability in the coating layer

Measurement of moisture permeability was conducted in the layer thickness of 3 $\mu$m, 40°C, and relative humidity (RH) of 90% by a Morcon method.

Table XIII-1 shows results in the Examples XIII-1 to XIII-4 and the Comparative Examples XIII-1 to XIII-3.

Table XIII-1

| | Composition of coating material (% by weight) | | | Specific gravity | Coating layer after 28 days | Moisture permeability $(g/m^2 \cdot day \cdot 1\ atm)$ |
|---|---|---|---|---|---|---|
| | Composition (A) (wt%) | Compostion (B) (wt%) | Composition (C) (wt%) | | | |
| Example XIII-1 | PCL-H7 (50) | Petroleum resin 1 (50) | --- | | not remained | 40 |
| Example XIII-2 | PCL-H7 (50) | Rosin 1 (50) | --- | | not remained | 430 |
| Example XIII-3 | PCL-H7 (40) | Petroleum resin 1 (45) | talc (10) | | not remained | 70 |
| Comparative Example XIII-1 | PCL-H7 (100) | Petroleum resin 1 (-) | --- | | not remained | 1,880 |
| Comparative Example XIII-2 | PCL-H7 (80) | Petroleum resin 1 (20) | --- | | not remained | 1,300 |
| Comparative Example XIII-3 | EVA (100) | --- | --- | | not remained | 300 |

(Examples of the present invention [XIV])

(Preparation Example XIV-1)

There were employed 0.8 mol of dimethyl succinate, 1.03 mol of 1,4-butanediol, and 0.05 mol of tetraisopropyl titanate as a catalyst, followed by allowing to react at 160°C in ordinary pressures at an initial period, and distilling out methanol from a system. At a period when methanol becomes not distilled out, reaction temperature is elevated to 180°C to further distill out methanol. At a period when methanol becomes not distilled out, reaction temperature is elevated to 200°C to further distill out methanol. At a period when methanol becomes not distilled out, 0.2 mol of dimethylcarbonate is added to distill out methanol. At a period when methanol becomes not distilled out, reaction temperature is elevated to 215°C, and reaction pressure is changed to 0.5 torr to further remove distillates to an outside of the reaction system. At the period after 6 hour from initiation of reducing pressure, a polyester carbonate resin (I) (an aliphatic polyester resin) is obtained.

(Example XIV-1)

Into 100 parts by weight of a composition composed of 70 parts by weight of the polyester carbonate resin (I) and 30 parts by weight of the polycaprolactone (II) (PH7 having a number average molecular weight of 7,000, manufactured by Daicel Chemical Industries, Ltd.), 0.6 part by weight of stearic acid amide, and 30 parts by weight of talc were added, and kneaded and extruded by a twin screw kneading extruder to obtain pellets of a biodegradable polyester resin composition (C).
Further, 10 parts by weight of a rubber-modified polystyrene-based graft resin (D) (manufactured by Daicel Chemical Industries, Ltd.) was kneaded and extruded with 90 parts by weight of the biodegradable polyester resin composition (C) by a twin screw kneading extruder to obtain pellets of a biodisintegrable resin composition (E) having impact resistance.

(Physical properties of molded articles)

The biodegradable polyester resin composition (C) obtained above and the biodisintegrable resin composition (E) having impact resistance were molded into a sheet having width of 640 mm and thickness of 0.35 mm by a T-die extrusion molding, and tensile strength and Dupon't impact strength were measured. Results thereof are shown in Table XIV-1.

(Biodegradability test)

In the biodegradable polyester resin composition (C) and the biodisintegrable resin composition (E), biodegradability test was conducted. As a test method, an accelerating test was conducted using an active sludge according to JIS K6950. Results thereof are shown in Figure XIV-1.
As shown in graph, even though the rubber-modified polystyrene-based resin is blended, in spite of the presence of somewhat residual substances, degradability of biodegradable resin components is not obstructed, and it shows an excellent biodegradability.

(Comparative Example XIV-1)

Using the biodegradable polyester resin composition (C) alone, a sheet (width of 640 mm and thickness of 0.35 mm) having a same shape was molded by the same molding method as in the Example XIV-1. And, physical properties and biodegradability of the sheet were likewise measured as in the Example XIV-1. Results are shown in Table XIV-1 and Figure XIV-1.

(Comparative Example XIV-2)

Using the rubber-modified polystyrene-based graft resin (D) alone, a sheet (width of 640 mm and thickness of 0.35 mm) having a same shape was molded by the same molding method as in the Example XIV-1. And, physical properties and biodegradability of the sheet were likewise measured as in the Example XIV-1. Results are shown in Table XIV-1 and Figure XIV-1.

Table XIV-1

| | Comparative Example XIV-1 | Example XIV-1 | Example XIV-2 | Comparative Example XIV-2 |
|---|---|---|---|---|
| | (C) 100 | (C)/(D) 90/10 | (C)/(D) 70/30 | (D) 100 |
| Dupon't impact strength (kgf-cm/cm$^2$) | 30.3 | 43.4 | 44.8 | 12.0 |
| Yield strength | | | | |
| MD (kgf/cm$^2$) | 250 | 230 | 250 | 300 |
| TD (kgf/cm$^2$) | 270 | 250 | 260 | 290 |
| Extension at break | | | | |
| MD (%) | 31 | 3.5 | 4.5 | 16 |
| TD (%) | 215 | 130 | 80 | 25 |
| Tensile elasticity | | | | |
| MD (kgf/cm$^2$) | 17400 | 17300 | 20200 | 27500 |
| TD (kgf/cm$^2$) | 19500 | 18100 | 19600 | 26100 |

**Claims**

1.  A biodegradable polyester resin composition comprising 100 parts by weight of an aliphatic polyester resin, 1-200 parts by weight of a polycaprolactone, and optionally, inorganic additives, wherein the ratio of total amount of the aliphatic polyester resin and the polycaprolactone with respect to the inorganic additives is 95-50% by weight/5-50% by weight in the case of containing inorganic additives.

2.  A biodegradable polyester resin composition as claimed in claim 1, wherein a dicarboxylic acid component includes succinic acid and/or adipic acid, and a diol component includes ethyleneglycol and/or 1,4-butanediol in said aliphatic polyester resin.

3.  A biodegradable polyester resin composition as claimed in claim 2, wherein said aliphatic polyester resin is a resin in which an aliphatic polyester resin is highly-polymerized by a diisocyanate compound.

4.  A biodegradable polyester resin composition as claimed in claim 1, wherein said inorganic additives are talc.

5.  A biodegradable film which comprises molding a polyester resin composition as claimed in any one of claims 1-4.

6.  A biodegradable throw-away glove which comprises a biodegradable film as claimed in claim 5.

7.  A biodegradable throw-away glove as claimed in claim 6, wherein said biodegradable film is doubled up, said doubled up biodegradable film is formed into a glove-shape by adhesion, and unnecessary portions are cut off.

8.  A biodegradable throw-away glove as claimed in claim 7, wherein said adhesion is conducted by heat-sealing.

9.  A biodegradable throw-away glove as claimed in claim 6, wherein said glove is employed for gardening, for food processing-handling, for handling medical devices, for working in a clean room.

10. A biodegradable stake which comprises molding a polyester resin composition as claimed in any one of claims 1-4.

11. A biodegradable stake as claimed in claim 10, wherein said stake contains fertilizers and/or chemicals therein.

12. A biodegradable stake as claimed in any one of claims 10-11, wherein said stake is employed for agriculture, and civil engineering or construction.

**13.** A protecting material for plants which comprises molding a polyester resin composition as claimed in any one of claims 1-4.

**14.** A protecting material for plants as claimed in claim 13, wherein said material is molded into a net or a sheet.

**15.** A biodegradable tape which comprises molding a polyester resin composition as claimed in any one of claims 1-4.

**16.** A biodegradable tape as claimed in claim 15, wherein unevens are formed on one surface or both surfaces of said tape, and said tape is employed for wrapping or packing.

**17.** A biodegradable tape as claimed in claim 15, wherein at least one of a pressure sensitive adhesive layer, a releasing agent layer, or a heat sealing layer is formed on one surface or both surfaces of said tape.

**18.** A biodegradable card characterized by employing as a base material a biodegradable resin composition layer comprising 85-5% by weight of a polylactic acid-based resin (A), 5-50% by weight of an aliphatic polyester resin (B), and 10-45% by weight of a polycaprolactone-based resin (C) (total of the (A)+(B)+(C) is 100% by weight) and, further 5-300 parts by weight of fillers (D) based on 100 parts by weight of the total of the (A)+(B)+(C) .

**19.** A biodegradable card as claimed in claim 18, wherein a molecular weight is 30,000-200,000 in said polylactic acid-based resin (A).

**20.** A biodegradable card as claimed in claim 18, wherein a molecular weight is 40,000-200,000 in said aliphatic polyester resin (B).

**21.** A biodegradable card as claimed in claim 18, wherein a molecular weight is 40,000-200,000 in said polycaprolactone-based resin (C).

**22.** A biodegradable card as claimed in claim 18 or 19, wherein said polylactic acid-based resin (A) is a polylactic acid homopolymer.

**23.** A biodegradable card as claimed in claim 18, wherein said fillers (D) are titanium oxide, calcium carbonate, mica, calcium silicate, a white carbon, asbestos, china clay (calcined), glass fibers, or a mixture thereof.

**24.** A biodegradable card as claimed in any one of claims 18-23, wherein a magnetic recording layer and/or a thermally-sensitive recording layer are formed on said biodegradable resin composition layer which is a base material.

**25.** A biodegradable laminate comprising a biodegradable resin layer (1) composed of an aliphatic polyester resin alone or a lactone resin and the aliphatic polyester resin and at least one of a sheet-like material (2) selected from the group consisting of paper, a pulp sheet, and a cellulose-based film.

**26.** A biodegradable laminate as claimed in claim 25, wherein a dicarboxylic acid component in said aliphatic polyester resin is composed of succinic acid and/or adipic acid, and a diol component is composed of ethyleneglycol and/or 1,4-butanediol.

**27.** A biodegradable laminate as claimed in claim 26, wherein said aliphatic polyester resin is a resin in which an aliphatic polyester resin is highly-polymerized by an aliphatic diisocyanate compound.

**28.** A biodegradable laminate as claimed in claim 25, which comprises 100-20% by weight of said aliphatic polyester resin and 0-80% by weight of a polycaprolactone (total of the aliphatic polyester resin and the polycaprolactone is 100% by weight).

**29.** A biodegradable laminate as claimed in claim 25, wherein said biodegradable resin further contains additives for resins.

**30.** A biodegradable laminated film comprising laminating a biodegradable resin layer (1) with a biodegradable resin layer (2) which is different from the biodegradable resin layer (1), in which total of the layers is composed of at least two layers.

31. A biodegradable laminated film as claimed in claim 30, wherein said biodegradable resin layer (1) or said biodegradable resin layer (2) is composed of at least one resin selected from the group consisting of an aliphatic polyester resin, a polycaprolactone, a cellulose ester, a polypeptide, a polyvinylalcohol, a polyamide, and a polyamide ester.

32. A biodegradable laminated film as claimed in any one of claims 30-31, wherein said biodegradable resin layer (1) is composed of a polycaprolactone, and said biodegradable resin layer (2) is composed of at least one resin selected from the group consisting of a polylactic acid-based polyester, a polyglycol acid-based polyester, a succinic acid-1,4-butanediol polyester, a succinic acid-ethyleneglycol polyester, a succinic acid/adipic acid-1,4-butanediol copolyester, and an isocyanate-modified polyester thereof.

33. A biodegradable laminated film as claimed in any one of claims 30-32, wherein said biodegradable resin layer (1) and said biodegradable resin layer (2) comprise coextrusion.

34. A biodegradable laminated film as claimed in any one of claims 30-33, wherein tear strength in said biodegradable laminated film is higher than that in a single layer film composed of said biodegradable resin layer (1), said biodegradable resin layer (2), and biodegradable resin layer (3) based on same thickness, respectively.

35. A biodegradable film for agriculture which comprises a biodegradable laminated film as claimed in any one of claims 30-34.

36. A biodegradable multilayer film or sheet comprising a layer (A) composed of a biodegradable aliphatic polyester resin composition in which 1-200 parts by weight of a polycaprolactone is formulated with 100 parts by weight of the aliphatic polyester resin, and a layer (B) composed of a composition of a polycaprolactone alone or a composition of the polycaprolactone with a biodegradable resin other than the polycaprolactone, said polycaprolactone in the layer (B) is characterized by irradiating solely or together with at least one of other constructing components by ionizing radiation.

37. A biodegradable multilayer film or sheet as claimed in claim 36, wherein said layer (B) is sandwiched between two layers of said layer (A).

38. A biodegradable multilayer film or sheet as claimed in claim 36, wherein a branched structure is introduced into said polycaprolactone irradiated by ionizing radiation, or gel fraction is 0.01-90% therein.

39. A biodegradable multilayer film or sheet as claimed in claim 36, wherein a dicarboxylic acid component includes succinic acid and/or adipic acid, and a diol component includes ethyleneglycol and/or 1,4-butanediol in said aliphatic polyester resin.

40. A biodegradable multilayer film or sheet as claimed in claim 36, wherein said aliphatic polyester resin is a resin in which a polyester resin is highly-polymerized by an aliphatic diisocyanate compound.

41. A biodegradable multilayer film or sheet as claimed in claim 36, wherein said biodegradable resin other than the polycaprolactone is an aliphatic polyester, a biodegradable cellulose ester, a polypeptide, a polyvinyl alcohol, starch, cellulose, carrageenan, chitin-chitosan components, or a mixture thereof, etc.

42. A biodegradable multilayer film or sheet as claimed in claim 36, wherein said polycaprolactone alone or a composition of the polycaprolactone with said biodegradable resin other than the polycaprolactone further includes a fatty acid amide and/or a finely-powdered silica.

43. A biodegradable film which is composed of a composition of an aliphatic polyester resin with a polycaprolactone, in which the thickness of the film is 5-25 μm, and which is composed of any one of the compositions (1)-(3) described below,

(1) the aliphatic polyester resin has a melt tension of not less than 2 g and a melt flow rate of 1-9 g/10 minutes, and the polycaprolactone is a linear chain type polycaprolactone,
(2) the polycaprolactone has a melt tension of not less than 2 g and a melt flow rate of 1-9 g/10 minutes, and the aliphatic polyester resin is a linear chain type aliphatic polyester resin, or
(3) the composition has a melt tension of not less than 2 g and a melt flow rate of 1-9 g/10 minutes.

**44.** A biodegradable film as claimed in claim 43, wherein said aliphatic polyester resin (1) is a polyester resin containing a structural unit composed of an aliphatic dicarboxylic acid, an aliphatic diol, 3 or more functional aliphatic polycarboxylic acid and/or an aliphatic polyol or a polyester resin composed of an aliphatic dicarboxylic acid and an aliphatic diol, and which is modified by a diisocyanate and/or a 3 or more functional polyisocyanate, said polycaprolactone (2) is a crosslinked polycaprolactone or a product obtained by a polymerization using 3 or more functional polyol as an initiator, or said composition (3) is a mixture of the (1) with (2).

**45.** A biodegradable film as claimed in any one of claims 43-44, wherein said aliphatic polyester resin is a polyester resin containing a structural unit composed of succinic acid and/or adipic acid as a dicarboxylic acid component and ethylene glycol and/or 1,4-butanediol as a diol component.

**46.** A biodegradable film as claimed in any one of claims 43-45, wherein ratio of said polycaprolactone with respect to said aliphatic polyester resin is 70/30-5/95% by weight (total of both is 100% by weight).

**47.** A biodegradable film as claimed in any one of claims 43-46, wherein said film is monoaxially or biaxially stretched.

**48.** A cushion sheet having discontinuous cells in which an embossed film (2) having a large number of projections (3) over all surface of the film is laminated with a plain base film (1) and/or the embossed film (2), characterized in that the embossed film (2) and the plain base film (1) are formed by a polycaprolactone alone or a composition of the aliphatic polyester resin with the polycaprolactone, and said polycaprolactone is irradiated solely or together with at least one of other constructing components by an ionizing radiation.

**49.** A cushion sheet having discontinuous cells in which an embossed film (2) having a large number of projections (3) over all surface of the film is laminated with a plain base film (1) and/or the embossed film (2), characterized in that the embossed film (2) and/or the plain base film (1) is composed of a layer (A) which is composed of a biodegradable polyester resin composition in which 1-200 parts by weight of a polycaprolactone is formulated with 100 parts by weight of an aliphatic polyester resin and a layer (B) composed of a polycaprolactone alone or a composition of the aliphatic polyester resin with the polycaprolactone, and said polycaprolactone is irradiated solely or together with at least one of other constructing components by an ionizing radiation.

**50.** A cushion sheet having discontinuous cells as claimed in any one of claims 48-49, wherein said polycaprolactone/said aliphatic polyester resin is (70-5)% by weight/(30-95)% by weight (total of both is 100% by weight) in said composition of the aliphatic polyester resin with said polycaprolactone irradiated by an ionizing radiation.

**51.** A cushion sheet having discontinuous cells as claimed in any one of claims 48-49, wherein said aliphatic polyester resin contains succinic acid and 1,4-butanediol.

**52.** A cushion sheet having discontinuous cells as claimed in any one of claims 48-49, wherein a gel fraction is 0.01-10% in said polycaprolactone irradiated by an ionizing radiation.

**53.** A particle-state article having a degradable thin layer characterized in that the surface of the particle-state article is coated by a polycaprolactone alone or a mixture of the polycaprolactone with at least one kind selected from the group consisting of a natural resin, a cellulose acetate resin, a biodegradable cellulose ester, a biodegradable aliphatic polyester, an olefin polymer, a copolymer containing an olefin, a polyvinylidene chloride polymer, a copolymer containing vinylidene chloride, a diene-based polymer, waxes, a petroleum resin, oils & fats and a modified product therefrom with other coating agents, and said polycaprolactone is irradiated solely or together with at least one of other constructing components by an ionizing radiation.

**54.** A particle-state article having a degradable thin layer as claimed in claim 53, wherein said particle-state article having a degradable thin layer is a coating fertilizer, coating agricultural chemicals, or microcapsule for carbonless copy paper.

**55.** A particle-state article having a degradable thin layer as claimed in claim 53, wherein a branched structure is introduced into said polycaprolactone irradiated by an ionizing radiation, or gel fraction is 0.01-90% therein.

**56.** A particle-state article having a degradable thin layer as claimed in claim 53, wherein said biodegradable cellulose ester is a biodegradable cellulose ester containing a cellulose acetate having an average substituted group of 1.0-2.15, an average polymerization degree of 50-250, an equivalent ratio of an alkali metal or alkali earth metal with respect to amount of sulfuric acid remained of 0.1-1.1.

57. A particle-state article having a degradable thin layer as claimed in claim 53, wherein said aliphatic polyester is a polyester from a linear chain or branched chain aliphatic diol having a carbon number of 1-10 and a branched chain aliphatic dicarboxylic acid having a carbon number of 1-10, or a polyester from a branched chain aliphatic hydroxylcarboxylic acid having a carbon number of 1-10.

58. A particle-state article having a degradable thin layer as claimed in claim 53, wherein weight ratio of said polycaprolactone with respect to said other coating agents is (50-100)% by weight/(50-0)% by weight (total of both is 100% by weight).

59. A particle-state composition for agriculture and gardening in which a mixture of a polycaprolactone with petroleum resins and/or rosins is coated on the surface of a particle-state fertilizer.

60. A particle-state composition for agriculture and gardening as claimed in claim 59, wherein said polycaprolactone is mixed in weight ratio of 20-70%.

61. A particle-state composition for agriculture and gardening as claimed in any one of claims 59-60, wherein a number average molecular weight is 500-200,000 in said polycaprolactone.

62. A particle-state composition for agriculture and gardening as claimed in any one of claims 59-61, wherein moisture permeability is not more than 1,000 g/m$^2$-day-1 atm in said coating layer after coating.

63. A biodisintegrable resin composition having comprising 100 parts by weight of a biodegradable resin composition and 5-20 parts by weight of a thermoplastic resin, said biodegradable resin composition is composed of 5-70 parts by weight of a polycaprolactone and 95-30 parts by weight of an aliphatic polyester resin.

64. A biodisintegrable resin composition as claimed in claim 63, wherein said thermoplastic resin is a rubber-modified styrene-based resin.

65. A biodisintegrable resin composition as claimed in claim 64, wherein said rubber-modified styrene-based resin is a rubber-modified styrene-based graft copolymer having rubber content of 1-20% by weight.

66. A biodisintegrable resin composition as claimed in claim 63, wherein said biodegradable resin composition further contains at least any one of 0-2-5 parts by weight of a fatty acid amide, 0.1-3 parts by weight of a liquid lubricant, 0.1-3 parts by weight of a finely-powdered silica, and 10-40 parts by weight of talc based on 100 parts by weight of total of said polycaprolactone and said aliphatic polyester resin.

67. A biodisintegrable resin composition as claimed in claim 64, wherein said thermoplastic resin has a Dupon't impact strength of not less than 10 kgf-cm/cm$^2$ (sheet thickness of 0.35mm).

Figure I-1

Time lapse (day)

Evaluation of biodegradability by active sludge

Figure VI-1

Figure VI-2

Figure VI-3

Figure XI-1

Figure XI-2

Figure XI-3

Figure XIII-1

Figure I-1

Degradation
ratio (%)

Time lapse (day)

Biodegradability of samples by active sludge

EP 1 008 629 A1

## INTERNATIONAL SEARCH REPORT

| | International application No. |
|---|---|
| | PCT/JP99/02847 |

**A. CLASSIFICATION OF SUBJECT MATTER**
Int.Cl⁶  C08L67/00, C08K3/34, C08J5/18, A41D19/00, C05G3/00, A01G13/00,
         G11B5/80, B32B27/36, B32B3/12

According to International Patent Classification (IPC) or to both national classification and IPC

**B. FIELDS SEARCHED**

Minimum documentation searched (classification system followed by classification symbols)
Int.Cl⁶  C08L67/00, C08K3/34, C08J5/18, A41D19/00, C05G3/00, A01G13/00,
         G11B5/80, B32B27/36, B32B3/12

Documentation searched other than minimum documentation to the extent that such documents are included in the fields searched
Jitsuyo Shinan Koho        1926-1996    Toroku Jitsuyo Shinan Koho    1994-1999
Kokai Jitsuyo Shinan Koho  1971-1999    Jitsuyo Shinan Keisai Koho    1996-1999

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP, 9-31228, A  (Tokuyama Corp.),<br>4 February, 1997 (04. 02. 97),<br>Claims ; page 2, Par. Nos. [0008] to [0011] ;<br>page 4, Par. No. [0030]  (Family: none) | 1, 2, 4-9<br>3 |
| X<br>Y | JP, 6-86442, U  (Koizumi Seima K.K.),<br>20 December, 1994 (20. 12. 94),<br>Claims  (Family: none) | 1, 2, 10, 12<br>3, 4, 11, 13,<br>14 |
| X<br>Y | JP, 8-242716, A  (Suzuki Motor Corp.),<br>24 September, 1996 (24. 09. 96),<br>Claims ; page 2, Par. No. [0010] ; page 4,<br>Par. No. [0029]  (Family: none) | 1, 2, 10-14<br>3, 4 |
| Y | JP, 5-279445, A  (Showa Highpolymer Co., Ltd.),<br>26 October, 1993 (26. 10. 93),<br>Claims  (Family: none) | 3, 27, 40, 44 |
| Y | JP, 9-278577, A  (Shinichi Kinugawa),<br>28 October, 1997 (28. 10. 97),<br>Claims  (Family: none) | 11 |

[X] Further documents are listed in the continuation of Box C.    [ ] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| 8 July, 1999 (08. 07. 99) | 21 July, 1999 (21. 07. 99) |

| Name and mailing address of the ISA/<br>Japanese Patent Office | Authorized officer |
|---|---|
| Facsimile No. | Telephone No. |

Form PCT/ISA/210 (second sheet) (July 1992)

91

## INTERNATIONAL SEARCH REPORT

International application No.

PCT/JP99/02847

C (Continuation). DOCUMENTS CONSIDERED TO BE RELEVANT

| Category* | Citation of document, with indication, where appropriate, of the relevant passages | Relevant to claim No. |
|---|---|---|
| X | JP, 9-266729, A (Tsutsunaka Plastic Industry Co., Ltd.), 14 October, 1997 (14. 10. 97), Claims ; page 2, Par. No. [0010] ; page 5, Par. No. [0046] (Family: none) | 1-5, 13-17 |
| X | JP, 9-267585, A (Gunze Ltd.), 14 October, 1997 (14. 10. 97), Claims ; page 4, Par. Nos. [0015], [0016] ; page 5, Par. No. [0027] & WO, 97/35922, A1 & EP, 890614, A1 | 18-24 |
| X | JP, 7-123876, A (Daicel Chemical Industries,Ltd.), 16 May, 1995 (16. 05. 95), | 25, 26, 28-30, 34 |
| Y | Claims ; page 2, Par. No. [0010] (Family: none) | 27 |
| X | JP, 10-100353, A (Mitsubishi Plastics Industries Ltd.), 21 April, 1998 (21. 04. 98), Claims ; page 2, Par. Nos. [0012], [0014] ; page 3, Par. Nos. [0019] to [0022], [0025] (Family: none) | 25, 27-31, 34 |
| Y | | 3, 27, 40, 44 |
| X | JP, 9-98671, A (Dainippon Printing Co., Ltd.), 15 April, 1997 (15. 04. 97), | 25, 26, 28-30, 34 |
| Y | Claims ; page 3, Par. Nos. [0015], [0016] (Family: none) | 27 |
| Y | JP, 9-297910, A (Daicel Chemical Industries,Ltd.), 18 November, 1997 (18. 11. 97), Claims ; page 4, Par. Nos. [0015], [0016] ; page 5, Par. Nos. [0020], [0021], [0029] & EP, 750015, A2 & US, 5786408, A | 3, 27, 40, 44 |
| X | JP, 9-194702, A (Daicel Chemical Industries,Ltd.), 29 July, 1997 (29. 07. 97), | 30, 31, 34-47 |
| Y | Claims ; pages 2, 3, Par. Nos. [0010] to [0014], [0018] & EP, 750015, A2 & US, 5786408, A | 32, 33, 35-42, 44 |
| X | JP, 9-267585, A (Gunze Ltd.), 14 October, 1997 (14. 10. 97), | 30, 31, 33, 34 |
| Y | Claims ; pages 4, 5, Par. No. [0022] ; page 5, Par. No. [0027] & WO, 97/35922, A1 & EP, 890614, A1 | 32, 33, 35-42 |
| Y | JP, 59-108059, A (Daicel Chemical Industries,Ltd.), 22 June, 1984 (22. 06. 84), Claims ; page 2, lower right column, line 15 to page 3, upper left column, line 15 (Family: none) | 36-42, 44, 48-58 |
| Y | JP, 7-137219, A (Kawakami Sangyo K.K.), 30 May, 1995 (30. 05. 95), Claims ; page 3, Par. No. [0011] (Family: none) | 48-52 |
| Y | JP, 6-49235, A (Showa Highpolymer Co., Ltd.), 22 February, 1994 (22. 02. 94), Claims ; page 3, Par. Nos. [0018], [0019] ; page 4, Par. No. [0028] (Family: none) | 51 |

Form PCT/ISA/210 (continuation of second sheet) (July 1992)

## INTERNATIONAL SEARCH REPORT

| International application No. |
|---|
| PCT/JP99/02847 |

C (Continuation).   DOCUMENTS CONSIDERED TO BE RELEVANT

| Category* | Citation of document, with indication, where appropriate, of the relevant passages | Relevant to claim No. |
|---|---|---|
| PX | JP, 11-28776, A (Shin-Etsu Polymer Co., Ltd.), 2 February, 1999 (02. 02. 99), | 25, 26, 28-31, 34 |
| PY | Claims ; page 3, Par. Nos. [0009] to [0011] (Family: none) | 27, 33, 48-52 |
| X | JP, 7-206565, A (Chisso Corp.), | 59-67 |
| Y | 8 August, 1995 (08. 08. 95), Claims ; page 4, Par. Nos. [0011] to [0013] (Family: none) | 53-58 |
| Y | JP, 7-33576, A (Asahi Chemical Industry Co., Ltd.), 3 February, 1995 (03. 02. 95), Claims & WO, 95/03260, A1 & CA, 2135788, A & AU, 9471954, A & EP, 661250, A1 & NZ, 268670, A & US, 5645624, A | 53-59 |
| X | JP, 3-146492, A (Asahi Chemical Industry Co., Ltd.), | 59-67 |
| Y | 21 June, 1991 (21. 06. 91), Claims ; page 2, lower left column, line 4 to page 2, lower right column, line 9 (Family: none) | 53-58 |
| Y | JP, 49-56713, A (Kouyou Kagaku K.K.), 1 June, 1974 (01. 06. 74), Claims ; page 2, upper right column, lines 3 to 10 (Family: none) | 54 |
| X | JP, 8-259788, A (Chuo Kagaku Co., Ltd.), | 63-67 |
| Y | 8 October, 1996 (08. 10. 96), Claims ; page 3, Par. Nos. [0013], [0014] ; page 4, Par. Nos. [0018], [0022] to [0027] (Family: none) | 3, 27, 40, 44 |

Form PCT/ISA/210 (continuation of second sheet) (July 1992)